# EUROPEAN PATENT APPLICATION

(11) **EP 4 661 111 A1**
(43) Date of publication of application: **10.12.2025**
(21) Application number: 23931273.9
(22) Date of filing: 04.04.2023
(51) Int. Cl.: H01M 4/58, H01M 4/36

(54) **POSITIVE ELECTRODE ACTIVE MATERIAL AND PREPARATION METHOD THEREFOR AND BATTERY COMPRISING SAME, AND ELECTRICAL DEVICE**

(71) Applicant: Contemporary Amperex Technology Co., Limited, Ningde, Fujian 352100 (CN)
(72) Inventor: YUAN, Tianci, Ningde, Fujian 352100 (CN); CHEN, Shangdong, Ningde, Fujian 352100 (CN); ZHANG, Xinxin, Ningde, Fujian 352100 (CN); JIANG, Yao, Ningde, Fujian 352100 (CN); OUYANG, Chuying, Ningde, Fujian 352100 (CN); YANG, Jiao, Ningde, Fujian 352100 (CN); WU, Lingjing, Ningde, Fujian 352100 (CN); KANG, Weibin, Ningde, Fujian 352100 (CN)
(74) Representative: Ziebig Hengelhaupt Intellectual Property Attorneys Patentanwaltskanzlei PartGmbB
(86) International application number: PCT/CN2023/086195
(87) International publication number: WO 2024/207200

(57) **Abstract**

The present application provides a positive electrode active material and a preparation method therefor and a battery comprising same, and an electrical device. The positive electrode active material comprises a core and a first area formed on at least part of the surface of the core; the first area comprises a V element, and the mass concentration of the V element in the first area is denoted as W₁; the core comprises a V element, and the mass concentration of the V element in the core is denoted as W₂, then W₁>W₂.

## Description

### TECHNICAL FIELD

The present application relates to a positive electrode active material and a preparation method therefor and a battery including same, and an electric device.

### BACKGROUND

In recent years, batteries have been widely used in energy storage power systems such as hydropower, thermal power, wind power, and solar power stations, as well as in various fields such as electric tools, electric bicycles, electric motorcycles, electric vehicles, military equipment, and aerospace. With the application and promotion of batteries, their reliability has received more and more attention. Manganese-based positive electrode active materials represented by lithium manganese phosphate have become one of the positive electrode active materials of the greatest concern at present due to their advantages such as high capacity, good reliability, and a rich source of raw materials. However, metal ions, particularly manganese ions, in the manganese-based positive electrode active materials are easily dissolved, leading to rapid capacity fading. The above statements are only used to provide background information related to the present application and do not necessarily constitute the prior art.

### SUMMARY

The present application provides a positive electrode active material and a preparation method therefor and a battery including same, and an electric device, which can improve the cycle performance and storage performance of batteries.

A first aspect of the present application provides a positive electrode active material, where the positive electrode active material includes a core and a first region formed on at least a part of the surface of the core. The first region includes element V, and the mass concentration of the element V in the first region is denoted as W₁; the core includes the element V, and the mass concentration of the element V in the core is denoted as W₂; W₁ > W₂.

The element V in the core can reduce the lattice change rate of the positive electrode active material, improve the structural stability of the positive electrode active material, and improve the ionic conductivity of the positive electrode active material. When the core includes the element V, the element V can reduce the bond length variation of the Me-O bond (Me represents a metal element, such as a transition metal element, and particularly, Me may be Mn) during charging and discharging to some extent. Thus, the performance of the positive electrode active material can be improved.

The first region includes element V. For example, the first region may include element V-containing material (such as elementary substance, an oxide, or a mixture thereof). In this case, the element V in the first region not only can reduce the dissolution of metal ions (particularly manganese ions), but also can reduce the oxidative decomposition of the electrolytic solution on the surface of the positive electrode active material. Thus, the cycle performance and storage performance of the positive electrode active material can be improved.

The mass concentration W₁ of the element V in the first region is greater than the mass concentration W₂ of the element V in the core, so that the dissolution of metal ions (particularly manganese ions) can be better reduced, the oxidative decomposition of the electrolytic solution on the surface of the positive electrode active material can be reduced, and the impact on the capacity of the positive electrode active material can be reduced. Thus, the cycle performance and storage performance of the positive electrode active material can be improved.

In any embodiment, W₁/W₂ is 2-2000, and optionally 12-833. As such, the dissolution of metal ions (particularly manganese ions) can be better reduced, the oxidative decomposition of the electrolytic solution on the surface of the positive electrode active material can be reduced, and the impact on the capacity of the positive electrode active material can also be reduced. Thus, the cycle performance and storage performance of the positive electrode active material can be improved.

In any embodiment, W₁ is 0.3 wt% to 100 wt%, and optionally 2.6 wt% to 83.3 wt%. As such, the dissolution of metal ions (particularly manganese ions) can be better reduced, and the oxidative decomposition of the electrolytic solution on the surface of the positive electrode active material can be reduced. Thus, the cycle performance and storage performance of the positive electrode active material can be improved.

In any embodiment, W₂ is 0.01 wt% to 1 wt%, and optionally 0.10 wt% to 0.41 wt%. As such, the lattice change rate of the positive electrode active material can be better reduced, the structural stability of the positive electrode active material can be improved, and the ionic conductivity of the positive electrode active material can also be further improved.

In any embodiment, the element V in the first region is present in at least one form selected from:
(1) a V elementary substance;
(2) an oxide of the element V, optionally including one or more selected from VO, V₂O₃, VO₂, and V₂O₅;
(3) a compound containing the element V and element Li, optionally including one or more selected from LiVO₃ and LiVO₂;
(4) a compound containing the element V and element X, optionally including one or more selected from VOPO₄ and VOSO₄, X including one selected from S, P, and Si;
(5) a compound containing the element V, element Li, and element X, optionally including one or more selected from Li₃V₂(PO₄)₃, LiVOPO₄, and Li₂VOSiO₄, X including one selected from S, P, and Si.

In any embodiment, the positive electrode active material has a composition represented by formula 1:

A_{y}(X_{1-z1}C_{z1}O_{4-z2}D_{z2})ₘYₙ, formula 1,

where
A includes the element V and one or more elements selected from Group IA, Group IIA, Group IIIA, Group IVA, Group VA, Group IIB, Group IVB, Group VB, Group VIB, Group VIIB, and Group VIII,
X includes one selected from S, P, and Si,
C includes one or more elements selected from Group IIIA, Group IVA, Group VA, and Group VIA,
D includes one or more elements selected from Group VIA and Group VIIA,
Y includes one or more elements selected from Group VIIA,
y is selected from a range of 1.5-3,
z1 is selected from a range of 0-0.5,
z2 is selected from a range of 0-0.5,
m is selected from a range of 1-1.5, and
n is selected from a range of 0-1.

In any embodiment, C includes one or more elements selected from B, S, N, P, and Si; and/or
D includes one or more elements selected from S, F, Cl, and Br, optionally includes any one element selected from S, F, Cl, and Br, and more optionally includes F; and/or
Y includes one or more elements selected from S, F, Cl, and Br; optionally, Y includes any one element selected from S, F, Cl, and Br; more optionally, Y is F; and/or
z1 is selected from a range of 0-0.1, optionally from a range of 0.001-0.1, and more optionally from a range of 0.001-0.005; and/or
z2 is selected from a range of 0-0.1, optionally from a range of 0.001-0.1, and more optionally from a range of 0.001-0.005.

In any embodiment, A includes a first element M, a second element Li, optionally a first doping element M', and optionally a second doping element M", where
the first element M includes one or more elements selected from Fe, Mn, and Co,
the first doping element M' includes one or more metal elements selected from Group IA, Group IIA, Group IIIA, Group IVA, Group VA, Group IIB, Group IVB, Group VB, Group VIB, and Group VIII,
the second doping element M" includes one or more metal elements selected from Group IA, Group IIA, Group IIIA, Group IIB, Group VB, and Group VIB,
the first doping element M' and/or the second doping element M" include V, and optionally, the first doping element M' includes V.

By introducing the element V at the lithium site and/or the transition metal site, the lattice change rate of the positive electrode active material can be reduced. By introducing the element V at the transition metal site, the surface activity of the positive electrode active material can also be effectively reduced, so that the dissolution of metal ions, particularly manganese ions, can be reduced, and the interface side reactions between the positive electrode active material and the electrolytic solution can also be reduced. Thus, the cycle performance and storage performance of the battery can be improved.

In any embodiment, the positive electrode active material has a composition represented by formula 1-1:

LiₓM"_{y-x-1}M₁₋ₐM'ₐ(X_{1-z1}C_{z1}O_{4-z2}D_{z2})ₘYₙ, formula 1-1,

where
x is selected from a range of 0.5-2.1,
y-x-1 is selected from a range of 0-0.1,
a is selected from a range of 0-0.999, and
y-x-1 + a is greater than 0.

In any embodiment, M includes and is selected from Fe and/or Mn; and/or
M' includes V and one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, Zr, Ni, Co, Ga, Sn, Sb, Nb, and Ge, optionally includes V and one or more elements selected from Zn, Al, Na, K, Mg, W, Ti, Zr, Ni, Ga, Sn, Sb, Nb, Cr, Co, and Ge, and more optionally includes V and one or more elements selected from Ti, Ni, Co, and Mg; and/or
M" includes one or more elements selected from Rb, Cs, Be, Ca, Sr, Ba, Ga, In, Cd, V, Ta, Cr, Zn, Al, Na, K, Mg, Nb, Mo, and W, and optionally includes one or more elements selected from Zn, Al, Na, K, Mg, Nb, Mo, and W.

In any embodiment, M" includes any one element selected from Zn, Al, Na, K, Mg, Nb, Mo, and W, and optionally includes any one element selected from Mg and Nb; and/or
M includes and is selected from Fe and Mn; and/or
M' includes V and at least two elements selected from Zn, Al, Na, K, Mg, W, Ti, Zr, Ni, Ga, Sn, Sb, Nb, Cr, Co, and Ge, and optionally includes V and at least two elements selected from Ti, Ni, Co, and Mg; and/or
x is selected from a range of 0.85-2.1, and optionally from a range of 0.97-2.01; and/or
y-x-1 is selected from a range of 0.001-0.1, and optionally from a range of 0.001-0.005; and/or
a is selected from a range of 0.001-0.35, and optionally from a range of 0.01-0.15.

In any embodiment, a is selected from a range of 0.001-0.35, y-x-1 is 0, z1 is 0, and z2 is 0; or
a is selected from a range of 0.001-0.35, y-x-1 is 0, z1 is selected from a range of 0.001-0.1, and z2 is 0; or
a is selected from a range of 0.001-0.35, y-x-1 is 0, z1 is 0, and z2 is selected from a range of 0.001-0.1; or
a is selected from a range of 0.001-0.35, y-x-1 is 0, z1 is selected from a range of 0.001-0.1, and z2 is selected from a range of 0.001-0.1; or
a is selected from a range of 0.001-0.35, y-x-1 is selected from a range of 0.001-0.1, z1 is 0, and z2 is 0; or
a is selected from a range of 0.001-0.35, y-x-1 is selected from a range of 0.001-0.1, z1 is selected from a range of 0.001-0.1, and z2 is 0; or
a is selected from a range of 0.001-0.35, y-x-1 is selected from a range of 0.001-0.1, z1 is 0, and z2 is selected from a range of 0.001-0.1; or
a is selected from a range of 0.001-0.35, y-x-1 is selected from a range of 0.001-0.1, z1 is selected from a range of 0.001-0.1, and z2 is selected from a range of 0.001-0.1.

In any embodiment, X is P, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, S, N, and Si; D includes one or more elements selected from S, F, Cl, and Br; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 0; optionally, y-x-1 is selected from a range of 0.001-0.1, z1 is selected from a range of 0.001-0.1, and z2 is selected from a range of 0.001-0.1; or
X is Si, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, S, N, and P; D includes one or more elements selected from S, F, Cl, and Br; x is selected from a range of 1.85-2.1, y-x-1 is selected from a range of 0-0.1, a is selected from a range of 0.001-0.15, z1 is selected from a range of 0-0.1, z2 is selected from a range of 0-0.1, m is 1, and n is 0; optionally, y-x-1 is selected from a range of 0.001-0.1, z1 is selected from a range of 0.001-0.1, and z2 is selected from a range of 0.001-0.1; or
X is S, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, N, P, and Si; D includes one or more elements selected from S, F, Cl, and Br; Y includes F; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 1; optionally, y-x-1 is selected from a range of 0.001-0.1, z1 is selected from a range of 0.001-0.1, and z2 is selected from a range of 0.001-0.1.

As such, the dissolution of metal ions, particularly manganese ions, can be reduced, the specific capacity and compaction density of the positive electrode active material can be increased, and the cycle performance, storage performance, and rate capability of the battery can also be improved.

In any embodiment, the first region is formed on an entire surface of the core; or
the first region is present in the form of dots or islands on at least a part of the surface of the core;
optionally, the first region is located on 10%-100% of the surface of the core.

In any embodiment, the positive electrode active material includes an inner core and a shell coating the inner core, where the inner core includes a core and a first region formed on at least a part of the surface of the core; the shell includes one or more coating layers; each coating layer has ionic conductivity and/or electronic conductivity.

By providing the coating layer with ionic conductivity and/or electronic conductivity on the surface of the inner core, the rate capability, high-temperature cycle performance, cycling stability, and high-temperature storage performance of the battery can be improved.

In any embodiment, the one or more coating layers each independently include one or more selected from a pyrophosphate, a phosphate, carbon, doped carbon, an oxide, a boride, and a polymer.

In any embodiment, the shell includes one coating layer; optionally, the coating layer includes one or more selected from a pyrophosphate, a phosphate, carbon, doped carbon, an oxide, a boride, and a polymer.

By using the above materials, a coating layer having ionic conductivity and/or electronic conductivity can be obtained, such that the high-temperature cycle performance, cycling stability, and high-temperature storage performance of the battery are improved.

In any embodiment, the shell includes a first coating layer coating the inner core and a second coating layer coating the first coating layer; optionally, the first coating layer and the second coating layer each independently include one or more selected from a pyrophosphate, a phosphate, carbon, doped carbon, an oxide, a boride, and a polymer.

In any embodiment, the first coating layer includes one or more selected from a pyrophosphate, a phosphate, an oxide, and a boride, and the second coating layer includes one or more selected from carbon and doped carbon.

By using the first coating layer of a specific material and the second coating layer of a specific material, the rate capability can be further improved, the dissolution of metal ions, particularly manganese ions, can be further reduced, and the cycle performance and/or high-temperature stability of the battery can also be improved.

In any embodiment, the shell includes a first coating layer coating the inner core, a second coating layer coating the first coating layer, and a third coating layer coating the second coating layer;
optionally, the first coating layer, the second coating layer, and the third coating layer each independently include one or more selected from a pyrophosphate, a phosphate, carbon, doped carbon, an oxide, a boride, and a polymer.

In any embodiment, the first coating layer includes a pyrophosphate, the second coating layer includes one or more selected from a phosphate, an oxide, and a boride, and the third coating layer includes one or more selected from carbon and doped carbon.

By using the first coating layer of a specific material, the second coating layer of a specific material, and the third coating layer of a specific material, the rate capability is further improved, and the dissolution of metal ions, particularly manganese ions, is further reduced. Thus, the cycle performance and/or high-temperature stability of the battery is improved, and the specific capacity and compaction density of the materials are further improved.

In any embodiment, the pyrophosphate is M¹_{b}(P₂O₇)_{c}; and/or
the phosphate is M²ₚ(PO₄)_{q}; and/or
a doping element in the doped carbon includes one or more selected from Group IIIA, Group VA, Group VIA, and Group VIIA; and/or
the oxide is M³_{d}Oₑ; and/or
the boride is ZᵥBₜ; and/or
the polymer includes one or more selected from a polysaccharide and a derivative thereof, and a polysiloxane;
M¹, M², and Z each independently include one or more elements selected from Group IA, Group IIA, Group IIIA, Group IB, Group IIB, Group IVB, Group VB, Group VIIB, and Group VIII; b is selected from a range of 1-4; c is selected from a range of 1-6; p is selected from a range of 1-2; q is selected from a range of 1-4; M³ includes one or more elements selected from an alkali metal, an alkaline earth metal, a transition metal, a Group IIIA element, a Group IVA element, a lanthanide element, and Sb; d is greater than 0 and less than or equal to 2; e is greater than 0 and less than or equal to 5; v is selected from a range of 1-7; t is selected from a range of 1-2.

By using the above materials as the coating layers, the dissolution of metal ions, particularly manganese ions, can be further reduced, the specific capacity and compaction density of the material are further improved, and the rate capability, high-temperature cycle performance, and high-temperature storage performance of the battery are further improved.

In any embodiment, M¹, M², and Z each independently include one or more elements selected from Li, Fe, Ni, Mg, Co, Cu, Zn, Ti, Ag, Zr, Nb, Mn, and Al; and/or
the doping element in the doped carbon includes one or more selected from nitrogen, phosphorus, sulfur, boron, and fluorine; and/or
M³ includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and optionally includes one or more elements selected from Mg, Al, Si, Zn, Zr, and Sn; and/or
the polysiloxane includes one or more selected from a polysiloxane of a linear structure and a polysiloxane of a cyclic structure; and/or
the polysaccharide includes one or more selected from a plant polysaccharide and a marine polysaccharide.

By using the above specific materials as the coating layers, the dissolution of metal ions, particularly manganese ions, can be further reduced, and the high-temperature cycle performance and high-temperature storage performance of the battery can be further improved.

In any embodiment, the shell includes a first coating layer coating the inner core and a second coating layer coating the first coating layer; the first coating layer includes pyrophosphate M⁴P₂O₇ and phosphate M⁵PO₄, and M⁴ and M⁵ each independently include one or more elements selected from Li, Fe, Ni, Mg, Co, Cu, Zn, Ti, Ag, Zr, Nb, and Al; the second coating layer includes carbon.

By using the above specific materials as the coating layers, the dissolution of metal ions, particularly manganese ions, during lithium deintercalation can be effectively reduced, and the migration of lithium ions is promoted, thereby improving the rate capability of the battery and the cycle performance and high-temperature performance of the battery.

In any embodiment, the shell includes a first coating layer coating the inner core, a second coating layer coating the first coating layer, and a third coating layer coating the second coating layer; the first coating layer includes pyrophosphate Li_{f}QP₂O₇ and/or Q_{g}(P₂O₇)ₕ, where 0 ≤ f ≤ 2, 1 ≤ g ≤ 4, 1 ≤ h ≤ 6, and Q in the pyrophosphate Li_{f}QP₂O₇ and/or Q_{g}(P₂O₇)ₕ each independently includes one or more elements selected from Fe, Ni, Mg, Co, Cu, Zn, Ti, Ag, Zr, Nb, and Al; the second coating layer includes a crystalline phosphate M⁵PO₄, where M⁵ includes one or more elements selected from Li, Fe, Ni, Mg, Co, Cu, Zn, Ti, Ag, Zr, Nb, and Al; the third coating layer includes carbon.

By coating the inner core with the first coating layer including a pyrophosphate, the migration resistance of metal ions, particularly manganese ions, can be further increased, the dissolution of the metal ions is reduced, the content of lithium impurities on the surface is reduced, and the contact between the inner core and the electrolytic solution is reduced, thereby reducing the interface side reactions, reducing the gas production, and improving the high-temperature storage performance, cycle performance, and reliability of the battery. By further coating with a phosphate coating layer having an excellent lithium-ion conduction capability, the interface side reactions on the surface of the positive electrode active material can be effectively reduced, thereby improving the high-temperature cycle and storage performance of the battery. By further coating with a carbon layer as the third coating layer, the reliability and dynamics performance of the battery can be further improved.

In any embodiment, one or more coating layers in the shell that are most distal to the inner core each independently include one or more selected from the polysiloxane, the polysaccharide, and the polysaccharide derivative.

As such, the coating uniformity can be enhanced, and the interface side reactions caused by high voltage can be effectively blocked, thereby improving the high-temperature cycle performance and high-temperature storage performance of the material. Moreover, the coating layers have good electronic conductivity and ionic conductivity, which is conducive to increasing the specific capacity of the material and reducing the heat generation of the battery.

In any embodiment, the polysiloxane includes a structural unit represented by formula (i) below: 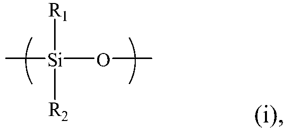 where
R₁ and R₂ are independently selected from H, -COOH, -OH, -SH, -CN, -SCN, amino, a phosphate group, a carboxylate group, acylamino, an aldehyde group, sulfonyl, a polyether chain segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group, and a C2-C20 halogenated heteroaromatic hydrocarbon group;
optionally, R₁ and R₂ are independently selected from H, amino, a phosphate group, a polyether chain segment, C1-C8 alkyl, C1-C8 halogenated alkyl, C1-C8 heteroalkyl, C1-C8 halogenated heteroalkyl, C2-C8 alkenyl, and C2-C8 halogenated alkenyl.

In any embodiment, the polysiloxane further includes a capping group, and the capping group includes at least one of the group consisting of the following functional groups: polyether, C1-C8 alkyl, C1-C8 halogenated alkyl, C1-C8 heteroalkyl, C1-C8 halogenated heteroalkyl, C2-C8 alkenyl, C2-C8 halogenated alkenyl, a C6-C20 aromatic hydrocarbon group, C1-C8 alkoxy, a C2-C8 epoxy group, hydroxy, C1-C8 hydroxyalkyl, amino, C1-C8 aminoalkyl, carboxy, and C1-C8 carboxyalkyl.

In any embodiment, the polysiloxane includes one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

In any embodiment, the number-average molecular weights of the polysiloxane, the polysaccharide, and the polysaccharide derivative are each independently 300,000 or less, optionally 10,000-200,000, more optionally 20,000-120,000, and further optionally 400-80,000.

In any embodiment, the mass percentage of a polar functional group in the polysiloxane is α, where 0 ≤ α < 50%, and optionally 5% ≤ α ≤ 30%.

In any embodiment, substituents attached to saccharide units in the polysaccharide and the polysaccharide derivative each independently include at least one of the group consisting of the following functional groups: -OH, -COOH and a salt thereof, -R-OH, -SO₃H and a salt thereof, -R-OH, -R-SO₃H and a salt thereof, a sulfate group, and alkoxy, where R represents alkylene, and optionally C1-C5 alkylene;
optionally, substituents attached to saccharide units in the polysaccharide and the polysaccharide derivative each independently include at least one of the group consisting of the following functional groups: -OH, -COOH, -COOLi, -COONa, -COOK, -SO₃H, -SO₃Li, - SO₃Na, -SO₃K, -CH₂-SO₃H, -CH₂-SO₃Li, -CH₂-SO₃Na, -CH₂-SO₃K, methoxy, and ethoxy.

In any embodiment, the polysaccharide includes one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

In any embodiment, the mass percentages of the substituents attached to the saccharide units in the polysaccharide and the polysaccharide derivative are each independently 20%-85%, and optionally 30%-78%.

In any embodiment, the surface of the positive electrode active material is coated with one or more of carbon and doped carbon; optionally, the surface of the positive electrode active material is coated with carbon. As such, the conductivity of the positive electrode active material can be improved.

In any embodiment, the doping element in the doped carbon includes one or more selected from nitrogen, phosphorus, sulfur, boron, and fluorine.

In any embodiment, the coating amount of the shell is 0.1 wt% to 6 wt%, based on the weight of the inner core.

In any embodiment, the coating amount of the first coating layer is greater than 0 and less than or equal to 7 wt%, optionally greater than 0 and less than or equal to 6 wt%, more optionally greater than 0 and less than or equal to 5.5 wt%, and further optionally greater than 0 and less than or equal to 2 wt%, based on the weight of the inner core; and/or
the coating amount of the second coating layer is greater than 0 and less than or equal to 6 wt%, optionally greater than 0 and less than or equal to 5.5 wt%, and more optionally 2 wt% to 4 wt%, based on the weight of the inner core; and/or
the coating amount of the third coating layer is greater than 0 and less than or equal to 6 wt%, optionally greater than 0 and less than or equal to 5.5 wt%, and more optionally greater than 0 and less than or equal to 2 wt%, based on the weight of the inner core.

In any embodiment, the shell further includes a fourth coating layer coating the third coating layer and a fifth coating layer coating the fourth coating layer;
the coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the inner core.

The coating amounts of the coating layers are preferably within the above range, which enables sufficient coating of the inner core and, at the same time, further improves the dynamics performance and reliability of the battery without compromising the specific capacity of the positive electrode active material.

In any embodiment, the shell is located on 40%-90%, and optionally 60%-80%, of the surface of the inner core. This enables sufficient coating of the inner core and thereby improves the dynamics performance and reliability of the battery.

In any embodiment, the thickness of the shell is 1-15 nm.

In any embodiment, the thickness of the first coating layer is 1-10 nm, and optionally 2-10 nm; and/or
the thickness of the second coating layer is 2-25 nm, optionally 2-15 nm, and more optionally 3-15 nm; and/or
the thickness of the third coating layer is 2-25 nm, and optionally 5-25 nm.

In any embodiment, the one or more coating layers each independently include one or more selected from a pyrophosphate, a phosphate, and an oxide, and the one or more selected from the pyrophosphate, the phosphate, and the oxide are in a crystalline state;
optionally, the crystallinities of the pyrophosphate, the phosphate, and the oxide are each independently 10%-100%, and more optionally 50%-100%.

The pyrophosphate and the phosphate with certain crystallinity are not only conducive to fully exerting the capabilities of the pyrophosphate coating layer in reducing dissolution of metal ions, particularly manganese ions, the excellent lithium-ion conductivity of the phosphate coating layer, and the function of reducing interface side reactions, but also can enable the pyrophosphate coating layer and the phosphate coating layer to achieve better lattice matching, such that a tight combination between the coating layers can be achieved.

In any embodiment, the weight ratio of the pyrophosphate to the phosphate and the weight ratio of the pyrophosphate to the oxide in the shell are each independently 1:3 to 3:1, and optionally 1:3 to 1:1. As such, by setting the pyrophosphate and the phosphate in a proper weight ratio range or the pyrophosphate and the oxide in a proper weight ratio range, the dissolution of metal ions, particularly manganese ions, can be effectively reduced, and the content of surface lithium impurities can be effectively reduced, such that interface side reactions are reduced, thereby improving the high-temperature storage performance, reliability, and cycle performance of the battery.

In any embodiment, the one or more coating layers each independently include carbon, and the carbon is a mixture of SP2-type carbon and SP3-type carbon; optionally, the molar ratio of the SP2-type carbon to the SP3-type carbon in the carbon is any value within a range of 0.07-13, more optionally any value within a range of 0.1-10, and further optionally any value within a range of 2.0-3.0.

By selecting the type of the carbon in the coating layer, the comprehensive electric performance of the battery can be improved. By limiting the molar ratio of the SP2-type carbon to the SP3-type carbon to the above range, not only can good conductivity be achieved, but also the path of lithium ions is ensured, which is conducive to the realization of battery functions and the improvement of cycle performance.

In any embodiment, the one or more coating layers each independently include doped carbon, and the mass content of the doping element in the doped carbon is 30% or less; optionally, the mass content of the doping element in the doped carbon is 20% or less. The doping element within the above content range can not only fully improve the conductivity, but also effectively avoid the excessively high surface activity caused by excessive incorporation of the doping element, thereby effectively controlling the interface side reactions caused by excessive doping in the coating layers.

In any embodiment, the one or more coating layers each independently include doped carbon, where in the doped carbon,
the doping element includes element nitrogen and/or element sulfur, and the mass content of the doping element in the doped carbon is 1%-15%; or
the doping element includes element phosphorus, element boron, and/or element fluorine, and the mass content of the doping element in the doped carbon is 0.5%-5%;
optionally, the doping element includes element nitrogen, element phosphorus, element sulfur, element boron, or element fluorine.

When the doping amounts of the nitrogen atom and sulfur atom are within the relatively broad range above, the conductivity of the doped carbon can be fully exerted, and the lithium ion transport and lithium ion desolvation capability can also be promoted.

When the doping amounts of the phosphorus atom, the boron atom, and/or the fluorine atom are within the relatively small range above, the conductivity of the doped carbon can be fully exerted, and the lithium ion transport and lithium ion desolvation capability can also be promoted.

In any embodiment, the one or more coating layers each independently include a pyrophosphate, the interplanar spacing of the pyrophosphate is within a range of 0.293-0.470 nm, optionally 0.297-0.462 nm or 0.293-0.326 nm, and more optionally 0.300-0.310 nm, and the included angle in the crystal orientation (111) is within a range of 18.00° to 32.57°, optionally 18.00° to 32.00° or 26.41° to 32.57°, more optionally 19.211° to 30.846°, and further optionally 29.00° to 30.00°; and/or
the one or more coating layers each independently include a phosphate, the interplanar spacing of the phosphate is within a range of 0.244-0.425 nm, and optionally 0.345-0.358 nm, and the included angle in the crystal orientation (111) is within a range of 20.00° to 37.00°, and optionally 24.25° to 26.45°;
optionally, the first coating layer or the second coating layer includes the phosphate.

As such, the impurity phase in the coating layer can be effectively reduced, thereby improving the specific capacity, cycle performance, and rate capability of the material.

In any embodiment, the lattice mismatch degree between the material of the inner core and the material of the shell is less than 10%. As such, good contact between the inner core and the shell (or coating layer) can be achieved to prevent the shell (or coating layer) from peeling off.

In any embodiment, the positive electrode active material includes element manganese and element phosphorus, and based on the weight of the positive electrode active material,
the content of the element manganese is within a range of 10 wt% to 35 wt%, optionally within a range of 13.3 wt% to 33.2 wt%, more optionally within a range of 15 wt% to 30 wt%, and further optionally within a range of 17 wt% to 20 wt%; and/or
the content of the element phosphorus is within a range of 12 wt% to 25 wt%, optionally within a range of 15 wt% to 20 wt%, and more optionally within a range of 16.8 wt% to 19.5 wt%; and/or
the weight ratio of the element manganese to the element phosphorus is within a range of 0.71-1.85, optionally 0.90-1.25, and more optionally 0.95-1.20.

In any embodiment, X is P, and the lattice change rate of the positive electrode active material before and after complete lithium deintercalation is 50% or less, optionally 9.8% or less, more optionally 8.1% or less, further optionally 7.5% or less, further more optionally 6% or less, still further more optionally 4% or less, and yet still further more optionally 3.8% or less. By reducing the lattice change rate, the transport of lithium ions can be made easier, that is, the lithium ions have stronger migration capability in the material, which is conducive to improving the rate capability of the battery.

In any embodiment, X is P, and the Li/Mn anti-site defect concentration in the positive electrode active material is 5.3% or less, optionally 5.1% or less, more optionally 4% or less, further optionally 2.2% or less, and further more optionally 2% or less.

The Mn²⁺ at the anti-site defect can hinder the transport of Li⁺. By reducing the Li/Mn anti-site defect concentration, the improvement of the specific capacity and rate capability of the positive electrode active material is facilitated.

In any embodiment, X is P, and the surface oxygen valence state of the positive electrode active material is -1.55 or less, optionally -1.82 or less, more optionally -1.88 or less, and further optionally -1.90 or less.

By reducing the surface oxygen valence state, the interface side reactions between the positive electrode active material and the electrolytic solution can be reduced, thereby improving the cycle performance and high-temperature stability of the battery.

In any embodiment, the compaction density of the positive electrode active material at 3 T is 1.89 g/cm³ or more, optionally 1.95 g/cm³ or more, more optionally 1.98 g/cm³ or more, further optionally 2.0 g/cm³ or more, further more optionally 2.2 g/cm³ or more, and still further more optionally 2.2 g/cm³ or more and 2.8 g/cm³ or less.

The higher the compaction density is, the larger the weight of the active material per unit volume. Therefore, improving the compaction density is conducive to improving the volumetric energy density of the battery.

A second aspect of the present application provides a preparation method for a positive electrode active material. The preparation method includes the following steps: grinding and mixing a source of element A, a source of element X, optionally a source of element C, optionally a source of element D, and optionally a source of element Y to obtain a precursor, where the element A includes element V; and sintering the precursor to obtain an inner core, where the inner core includes a core and a first region formed on at least a part of the surface of the core, the first region includes the element V and the mass concentration of the element V in the first region is denoted as W₁, the core includes the element V and the mass concentration of the element V in the core is denoted as w₂, and W₁ > W₂.

In any embodiment, the inner core includes a substance represented by formula 1:

A_{y}(X_{1-z1}C_{z1}O_{4-z2}D_{z2})ₘYₙ, formula 1,

where
A, X, C, D, Y, y, z1, z2, m, and n are as defined in the first aspect;
the element V in the first region is present in at least one form selected from:
   (1) a V elementary substance;
   (2) an oxide of the element V, optionally including one or more selected from VO, V₂O₃, VO₂, and V₂O₅;
   (3) a compound containing the element V and element Li, optionally including one or more selected from LiVO₃ and LiVO₂;
   (4) a compound containing the element V and element X, optionally including one or more selected from VOPO₄ and VOSO₄, X including one selected from S, P, and Si;
   (5) a compound containing the element V, element Li, and element X, optionally including one or more selected from Li₃V₂(PO₄)₃, LiVOPO₄, and Li₂VOSiO₄, X including one selected from S, P, and Si.

In any embodiment, the grinding in the step of obtaining the precursor is performed at 10-800 r/min for 0.5-15 h, optionally 2-14 h; and/or
sintering the precursor is performed at 300-900 °C for 4-15 h in an inert gas atmosphere or a mixed atmosphere of an inert gas and hydrogen.

In any embodiment, the method further includes the following step:
coating the surface of the inner core with a mixture of one or more selected from a pyrophosphate, a phosphate, carbon, doped carbon, an oxide, a boride, and a polymer by a dry coating method or a wet coating method to obtain a positive electrode active material, where the positive electrode active material includes the inner core and a shell coating the inner core, the shell includes one or more coating layers, and each coating layer independently includes one or more selected from the pyrophosphate, the phosphate, the carbon, the doped carbon, the oxide, the boride, and the polymer.

In any embodiment, the method further includes the following steps:
providing a pyrophosphate M¹_{b}(P₂O₇)_{c} powder and a suspension containing phosphate M²ₚ(PO₄)_{q} and/or oxide M³_{d}Oₑ, where the suspension further includes a source of carbon and/or a source of doped carbon; and
adding the inner core and the pyrophosphate M¹_{b}(P₂O₇)_{c} powder to the suspension, mixing, and sintering to obtain a positive electrode active material, where
the positive electrode active material includes the inner core and a shell coating the inner core, the shell includes a first coating layer coating the inner core and a second coating layer coating the first coating layer, the first coating layer includes the pyrophosphate M¹_{b}(P₂O₇)_{c} and one or more selected from the phosphate M²ₚ(PO₄)_{q} and the oxide M³_{d}Oₑ, and the second coating layer includes one or more selected from the carbon and the doped carbon; optionally, a doping element in the doped carbon includes one or more selected from nitrogen, phosphorus, sulfur, boron, and fluorine, and M¹, M², M³, b, c, d, e, p, and q are as defined in the first aspect.

In any embodiment, the method further includes the following steps:
providing a pyrophosphate M⁴P₂O₇powder and a phosphate M⁵PO₄ suspension containing a source of carbon; and
adding the inner core and the pyrophosphate M⁴P₂O₇ powder to the M⁵PO₄ suspension containing the source of carbon, mixing, and sintering to obtain a positive electrode active material, where
the positive electrode active material includes the inner core and a shell coating the inner core, the shell includes a first coating layer coating the inner core and a second coating layer coating the first coating layer, the first coating layer includes the pyrophosphate M⁴P₂O₇ and the phosphate M⁵PO₄, the second coating layer includes the carbon, and M⁴ and M⁵ are as defined in the first aspect.

In any embodiment, the method further includes the following steps:
separately providing a pyrophosphate M¹_{b}(P₂O₇)_{c} suspension, a suspension containing one or more selected from phosphate M²ₚ(PO₄)_{q}, oxide M³_{d}Oₑ, and boride ZᵥBₜ, and a suspension containing a source of carbon and/or a source of doped carbon; and
mixing the inner core with all the suspensions described above, and sintering to obtain a positive electrode active material, where
the positive electrode active material includes the inner core and a shell coating the inner core, the shell includes a first coating layer coating the inner core, a second coating layer coating the first coating layer, and a third coating layer coating the second coating layer, the first coating layer includes the pyrophosphate M¹_{b}(P₂O₇)_{c}, the second coating layer includes one or more selected from the phosphate M²ₚ(PO₄)_{q}, the oxide M³_{d}Oₑ, and the boride ZᵥBₜ, the third coating layer is selected from one or more of the carbon and the doped carbon, and M¹, M², M³, Z, b, c, d, e, p, q, v, and t are as defined in the first aspect.

In any embodiment, the method further includes the following steps:
separately providing Li_{f}QP₂O₇ and/or Q_{g}(P₂O₇)ₕ and M⁵PO₄ suspensions, adding the inner core to the suspensions described above, mixing, and sintering to obtain a positive electrode active material, where
the positive electrode active material includes the inner core and a shell coating the inner core, the shell includes a first coating layer coating the inner core, a second coating layer coating the first coating layer, and a third coating layer coating the second coating layer, the first coating layer includes the pyrophosphate Li_{f}QP₂O₇ and/or Q_{g}(P₂O₇)ₕ, the second coating layer includes the phosphate M⁵PO₄, the third coating layer includes carbon, and Q, M⁵, f, g, and h are as defined in the first aspect.

In any embodiment, the method further includes the following steps:
separately providing a pyrophosphate M¹_{b}(P₂O₇)_{c} powder, one or more powders selected from phosphate M²ₚ(PO₄)_{q}, oxide M³_{d}Oₑ, and boride ZᵥBₜ, and a powder of a source of carbon and/or a powder of a source of doped carbon; and
mixing and grinding the inner core and all the powders described above, and drying to obtain a positive electrode active material, where
the positive electrode active material includes the inner core and a shell coating the inner core,
the shell includes a first coating layer coating the inner core, a second coating layer coating the first coating layer, and a third coating layer coating the second coating layer, the first coating layer includes the pyrophosphate M¹_{b}(P₂O₇)_{c}, the second coating layer includes one or more selected from the phosphate M²ₚ(PO₄)_{q}, the oxide M³_{d}Oₑ, and the boride ZᵥBₜ, the third coating layer is selected from one or more of the carbon and the doped carbon, and M¹, M², M³, Z, b, c, d, e, p, q, v, and t are as defined in the first aspect;
optionally, the drying is performed by a spray granulation dryer.

In any embodiment, the method further includes the following steps:
providing a polymer, where the polymer includes one or more selected from a polysiloxane, a polysaccharide, and a polysaccharide derivative; and
coating the positive electrode active material prepared above with the polymer by a dry coating method or a wet coating method to obtain a material including the inner core and a shell coating the inner core, where
one or more coating layers in the shell that are most distal to the inner core each independently include one or more selected from the polysiloxane, the polysaccharide, and the polysaccharide derivative.

A third aspect of the present application provides a battery. The battery includes a positive electrode plate, where the positive electrode plate includes a positive electrode current collector and a positive electrode film layer disposed on at least one surface of the positive electrode current collector; the positive electrode film layer includes a first positive electrode active material, and the first positive electrode active material includes the positive electrode active material according to the first aspect or a positive electrode active material prepared by the preparation method according to the second aspect;
optionally, the content of the first positive electrode active material in the positive electrode film layer is 10 wt% or more, and optionally 90 wt% to 99.5 wt%, based on the total weight of the positive electrode film layer.

In any embodiment, the positive electrode film layer further includes a second positive electrode active material, and the second positive electrode active material is different from the first positive electrode active material.

In any embodiment, the second positive electrode active material includes one or more selected from LiEᵣCoₛF₍₁₋ᵣ₋ₛ₎O₂, spinel-type lithium manganate, and spinel-type lithium titanate, where E includes one or more elements selected from Group VIII, F includes one or more elements selected from Group IIIA and Group VIIB, r is selected from a range of 0-0.9, and the sum of r and s is selected from a range of 0.3-1.

In any embodiment, E includes one or more elements selected from Ni, Fe, Ru, and Rh, and F includes one or more elements selected from Mn, Al, Ga, and In.

In any embodiment, the second positive electrode active material includes one or more selected from LiNiᵣCoₛMn₍₁₋ᵣ₋ₛ₎O₂, LiNiᵣCoₛAl₍₁₋ᵣ₋ₛ₎O₂, LiCoO₂, spinel-type lithium manganate, and spinel-type lithium titanate, where r is independently selected from 0.3-0.9, and optionally 0.33-0.8, and the sum of r and s is independently selected from 0.3-0.9, and optionally 0.66-0.9.

In any embodiment, the mass ratio of the first active material to the second active material is 1:7 to 7:1, and optionally 1:4 to 4:1.

In any embodiment, in the second positive electrode active material,
the ratio of r to (1-r-s) to s in the LiNiᵣCoₛMn₍₁₋ᵣ₋ₛ₎O₂ is 5:2:3, or 3:1:1, or 8:1:1; and/or
the ratio of r to s to (1-r-s) in the LiNiᵣCoₛAl₍₁₋ᵣ₋ₛ₎O₂ is 5:2:3, or 3:1:1, or 8:1:1.

In any embodiment, the sum of the mass of the first positive electrode active material and the mass of the second positive electrode active material accounts for 88%-98.7% of the mass of the positive electrode plate.

A fourth aspect of the present application provides an electric device. The electric device includes the battery according to the third aspect.

### BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.
FIG. 1 is a schematic view of one embodiment of a battery cell of the present application.
FIG. 2 is a schematic exploded view of one embodiment of a battery cell of the present application.
FIG. 3 is a schematic view of one embodiment of a battery module of the present application.
FIG. 4 is a schematic view of one embodiment of a battery pack of the present application.
FIG. 5 is a schematic exploded view of the embodiment of the battery pack shown in FIG. 4.
FIG. 6 is a schematic view of one embodiment of an electric device including the battery of the present application as a power source.

The drawings are not necessarily drawn to scale. The reference numerals are illustrated as follows: 1: battery pack; 2: upper case body; 3: lower case body; 4: battery module; 5: battery cell; 51: housing; 52: electrode assembly; 53: cover plate.

### DETAILED DESCRIPTION

Hereinafter, embodiments specifically disclosing the positive electrode active material and the preparation method therefor and the battery including same, and the electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. In addition, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. In addition, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. In addition, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Herein, the terms "plurality of" and "plurality of layers of" mean two or more and two or more layers, respectively.

Herein, "about" a certain numerical value means a range, which is a range of ± 10% of the numerical value.

Unless otherwise specified, the terms used in the present application have well-known meanings that are commonly understood by those skilled in the art. Unless otherwise specified, the values of the parameters mentioned in the present application can be measured by various measurement methods commonly used in the art (for example, they can be tested according to the methods given in the examples of the present application). Unless otherwise stated, the test temperature for each parameter mentioned in the present application is 25 °C, and the test pressure is standard atmospheric pressure.

Manganese-based positive electrode active materials represented by lithium manganese phosphate LiMnPO₄ have become one of the positive electrode active materials of the greatest concern at present due to their advantages such as high capacity, good reliability, and a rich source of raw materials. However, a critical drawback of the manganese-based positive electrode active materials is that metal ions, particularly manganese ions, are easily dissolved. After migrating to the negative electrode, the dissolved manganese ions and the like are reduced into metal manganese. The generated metal manganese is equivalent to a "catalyst" and can catalyze the decomposition of a solid electrolyte interphase (SEI) film on the surface of the negative electrode. Some generated byproducts are gas, which easily causes the expansion of the battery and affects the reliability of the battery. The other byproducts are deposited on the surface of the negative electrode, which hinders lithium ions from entering and exiting the channel of the negative electrode, resulting in an increase in the impedance of the battery and affecting the dynamics performance of the battery. In addition, to replenish the lost SEI film, the electrolytic solution and the active lithium ions inside the battery are also continuously consumed, thereby also having an irreversible effect on the capacity retention rate of the battery.

A first aspect of embodiments of the present application provides a positive electrode active material, where the positive electrode active material includes a core and a first region formed on at least a part of the surface of the core. The first region includes element V, and the mass concentration of the element V in the first region is denoted as W₁; the core includes the element V, and the mass concentration of the element V in the core is denoted as W₂; W₁ > W₂.

The mass concentration W₁ of the element V in the first region can be obtained by the following steps.

First, a plurality of (for example, 10-20) optional positive electrode active materials are cut by using a focused ion beam (FIB) to obtain corresponding positive electrode active material slices with a thickness of 20-40 nm. Then, the quantitative analysis of the elemental composition of each positive electrode active material slice is performed by using a spherical aberration-corrected scanning transmission electron microscopy-energy dispersive spectrometer (STEM-EDS). Measurement sites I centered at positions spaced 1.5 nm apart from each other from the surface of the first region toward the core are set, with a radius of 1.5 nm. A plurality of (for example, 5-10) measurement sites I are set in each positive electrode active material slice, and the mass concentration of the element V in each measurement site I (that is, the mass ratio of the element V in the measurement site I to all elements in the measurement site I) is obtained. The average value of the test results of all the measurement sites I of the positive electrode active material slices is used as the mass concentration W₁ of the element V in the first region.

The mass concentration W₂ of the element V in the core can be obtained by the following steps.

First, a plurality of (for example, 10-20) optional positive electrode active materials are cut by using a focused ion beam (FIB) to obtain corresponding positive electrode active material slices with a thickness of 20-40 nm. Then, the quantitative analysis of the elemental composition of each positive electrode active material slice is performed by using a spherical aberration-corrected scanning transmission electron microscopy-energy dispersive spectrometer (STEM-EDS). Measurement sites II centered at positions spaced 150 nm apart from each other from the surface of the first region toward the core are set, with a radius of 3 nm. A plurality of (for example, 5-10) measurement sites II are set in each positive electrode active material slice, and the mass concentration of the element V in each measurement site II (that is, the mass ratio of the element V in the measurement site II to all elements in the measurement site II) is obtained. The average value of the test results of all the measurement sites II of the positive electrode active material slices is used as the mass concentration W₂ of the element V in the core.

The positive electrode active material provided in the embodiments of the present application includes a core and a first region formed on at least a part of the surface of the core. The first region and the core each include element V, and the mass concentration of the element V in the first region is greater than the mass concentration of the element V in the core. Thus, the cycle performance and storage performance of the positive electrode active material and the battery can be improved.

The element V in the core can reduce the lattice change rate of the positive electrode active material, improve the structural stability of the positive electrode active material, and improve the ionic conductivity of the positive electrode active material. When the core includes the element V, the element V can reduce the bond length variation of the Me-O bond (Me represents a metal element, such as a transition metal element, and particularly, Me may be Mn) during charging and discharging to some extent. Thus, the performance of the positive electrode active material can be improved.

The first region includes element V. For example, the first region may include element V-containing material (such as elementary substance, an oxide, or a mixture thereof). In this case, the element V in the first region not only can reduce the dissolution of metal ions (particularly manganese ions), but also can reduce the oxidative decomposition of the electrolytic solution on the surface of the positive electrode active material. Thus, the cycle performance and storage performance of the positive electrode active material can be improved.

The mass concentration W₁ of the element V in the first region is greater than the mass concentration W₂ of the element V in the core, so that the dissolution of metal ions (particularly manganese ions) can be better reduced, the oxidative decomposition of the electrolytic solution on the surface of the positive electrode active material can be reduced, and the impact on the capacity of the positive electrode active material can be reduced. Thus, the cycle performance and storage performance of the positive electrode active material can be improved.

In some embodiments, W₁/W₂ is 2-2000. For example, it may be 2.3, 2.7, 5, 10, 12, 15, 21, 30, 40, 50, 60, 66, 71, 86, 92, 100, 116, 122, 128, 145, 175, 191, 300, 441, 600, 833, 1200, 1500, 1951, 2000, or within any range of any of the above values. Optionally, W₁/W₂ is 12-833 or 12-441. As such, the dissolution of metal ions (particularly manganese ions) can be better reduced, the oxidative decomposition of the electrolytic solution on the surface of the positive electrode active material can be reduced, and the impact on the capacity of the positive electrode active material can also be reduced. Thus, the cycle performance and storage performance of the positive electrode active material can be improved.

In some embodiments, W₁ is 0.3 wt% to 100 wt%. For example, it may be 0.32 wt%, 0.35 wt%, 1.0 wt%, 1.5 wt%, 2.0 wt%, 2.3 wt%, 2.6 wt%, 2.8 wt%, 3.5 wt%, 5.0 wt%, 6.0 wt%, 7.0 wt%, 10 wt%, 15 wt%, 20 wt%, 24 wt%, 26 wt%, 28 wt%, 30 wt%, 40 wt%, 55.5 wt%, 70.5 wt%, 80 wt%, 83.3 wt%, 100 wt%, or within any range of any of the above values. Optionally, W₁ is 2.6 wt% to 83.3 wt%. As such, the dissolution of metal ions (particularly manganese ions) can be better reduced, and the oxidative decomposition of the electrolytic solution on the surface of the positive electrode active material can be reduced. Thus, the cycle performance and storage performance of the positive electrode active material can be improved.

When W₁ is 100 wt%, it means that the first region is a V elementary substance.

In some embodiments, W₂ is 0.01 wt% to 1 wt%. For example, it may be 0.01 wt%, 0.04 wt%, 0.10 wt%, 0.12 wt%, 0.15 wt%, 0.16 wt%, 0.18 wt%, 0.2 wt%, 0.22 wt%, 0.24 wt%, 0.29 wt%, 0.31 wt%, 0.35 wt%, 0.38 wt%, 0.41 wt%, 0.6 wt%, 0.8 wt%, 1wt%, or within any range of any of the above values. Optionally, W₂ is 0.10 wt% to 0.41 wt%. As such, the lattice change rate of the positive electrode active material can be better reduced, the structural stability of the positive electrode active material can be improved, and the ionic conductivity of the positive electrode active material can also be further improved. Meanwhile, the following situation can also be avoided: When the amount of the element V in the core is too large, due to the lack of electrochemical activity of the element V, the crystalline structure of the positive electrode active material may be damaged, which may also affect the capacity performance of the positive electrode active material; when the amount of the element V in the core is too small, the regulation of the crystalline structure of the positive electrode active material is not significant.

The first region is formed on at least a part of the surface of the core. In some embodiments, the first region may be formed over the entire surface of the core, i.e., the first region is located on 100% of the surface of the core. In some embodiments, the first region may be present in the form of dots or islands on at least a part of the surface of the core.

In some embodiments, the first region is located on 10%-100% of the surface, optionally 10%-80% of the surface, and more optionally 12%-50% of the surface, of the core.

In some embodiments, the element V in the first region is present in at least one form selected from:
(1) a V elementary substance;
(2) an oxide of the element V, optionally including one or more selected from VO, V₂O₃, VO₂, and V₂O₅;
(3) a compound containing the element V and element Li, optionally including one or more selected from LiVO₃ and LiVO₂;
(4) a compound containing the element V and element X, optionally including one or more selected from VOPO₄ and VOSO₄, X including one selected from S, P, and Si;
(5) a compound containing the element V, element Li, and element X, optionally including one or more selected from Li₃V₂(PO₄)₃, LiVOPO₄, and Li₂VOSiO₄, X including one selected from S, P, and Si.

The first region and the core may be distinguished by a spherical aberration-corrected scanning transmission electron microscopy-energy dispersive spectrometer (STEM-EDS). The first region may be crystalline or amorphous or a mixture thereof, and the crystalline structure of the crystalline material in the first region is different from the crystalline structure of the material of the core. As such, the position, morphology, and the like of the first region may be determined by TEM images. Since the element V in the first region is in an enriched state, the position of the first region may also be determined by STEM-EDS images. For example, the core and the first region can be distinguished, and the first region and the "shell" hereinafter can also be distinguished.

In some embodiments, the positive electrode active material has a composition represented by formula 1:

A_{y}(X_{1-z1}C_{z1}O_{4-z2}D_{z2})ₘYₙ, formula 1,

where
A includes element V and one or more elements selected from Group IA, Group IIA, Group IIIA, Group IVA, Group VA, Group IIB, Group IVB, Group VB, Group VIB, Group VIIB, and Group VIII, X includes one selected from S, P, and Si, C includes one or more elements selected from Group IIIA, Group IVA, Group VA, and Group VIA, D includes one or more elements selected from Group VIA and Group VIIA, Y includes one or more elements selected from Group VIIA, y is selected from a range of 1.5-3, z1 is selected from a range of 0-0.5, z2 is selected from a range of 0-0.5, m is selected from a range of 1-1.5, and n is selected from a range of 0-1.

Formula 1 represents the molar ratio of elements in the positive electrode active material. Herein, the positive electrode active material includes both the core and the first region formed on at least a part of the surface of the core. For example, the element V in formula 1 includes both the element V located in the core and the element V located in the first region. The element O in formula 1 includes both the element O located in the core and the element O located in the first region.

The positive electrode active material including the core and the first region formed on at least a part of the surface of the core may be tested by inductively coupled plasma emission spectrometry (ICP). The test instrument may be a Perkin Elmer 7000DV.

The doping element C introduced at the S, P, or Si site can further improve the rate capability of the battery. In some embodiments, C includes one or more elements selected from B, S, N, P, and Si.

The introduction of the doping element D at the O site can reduce the side reactions at the interface and improve the high-temperature performance of the battery. In some embodiments, D includes one or more elements selected from S, F, Cl, and Br; optionally, D includes any one element selected from S, F, Cl, and Br; more optionally, D includes F.

In some embodiments, Y includes one or more elements selected from S, F, Cl, and Br; optionally, Y includes any one element selected from S, F, Cl, and Br; more optionally, Y is F.

In some embodiments, z1 is selected from a range of 0-0.1, optionally from a range of 0.001-0.1, and more optionally from a range of 0.001-0.005. When z1 is 0, it indicates that no doping element C is introduced at the S site, the P site, or the Si site.

In some embodiments, z2 is selected from a range of 0-0.1, optionally from a range of 0.001-0.1, and more optionally from a range of 0.001-0.005. When z2 is 0, it indicates that no doping element D is introduced at the O site.

In some embodiments, A includes a first element M, a second element Li, optionally a first doping element M', and optionally a second doping element M". The first element M includes one or more elements selected from Fe, Mn, and Co, the first doping element M' includes one or more metal elements selected from Group IA, Group IIA, Group IIIA, Group IVA, Group VA, Group IIB, Group IVB, Group VB, Group VIB, and Group VIII, the second doping element M" includes one or more metal elements selected from Group IA, Group IIA, Group IIIA, Group IIB, Group VB, and Group VIB, and the first doping element M' and/or the second doping element M" include V, and optionally, the first doping element M' includes V.

The element V in the core may be located at the lithium site (the second element) and/or the transition metal site (the first element). By introducing the element V at the lithium site and/or the transition metal site, the lattice change rate of the positive electrode active material can be reduced. By introducing the element V at the transition metal site, the surface activity of the positive electrode active material can also be effectively reduced, so that the dissolution of metal ions, particularly manganese ions, can be reduced, and the interface side reactions between the positive electrode active material and the electrolytic solution can also be reduced. Thus, the cycle performance and storage performance of the battery can be improved.

By further introducing other second doping elements M" at the lithium site, the lattice change rate can be further reduced, and the rate capability of the battery can be improved.

By further introducing other first doping elements M' at the transition metal site, the electronic conductivity can be further increased, the lattice change rate can be reduced, and the rate capability and specific capacity of the battery can be improved.

In some embodiments, the positive electrode active material further has a composition represented by formula 1-1:

LiₓM"_{y-x-1}M₁₋ₐM'ₐ(X_{1-z1}C_{z1}O_{4-z2}D_{z2})ₘYₙ, formula 1-1,

where
x is selected from a range of 0.5-2.1, y-x-1 is selected from a range of 0-0.1, a is selected from a range of 0-0.999, and y-x-1 + a is greater than 0.

When y-x-1 is 0, it indicates that no second doping element M" is introduced at the lithium site. When a is 0, it indicates that no first doping element M' is introduced at the transition metal site.

Unless otherwise stated, in the above chemical formula, when M' is two or more elements, the above limitation on the numerical range of a is not only a limitation on the stoichiometric number of each element as M', but also a limitation on the sum of the stoichiometric numbers of all elements as M'. For example, when M' is two or more elements M'1, M'2, ..., M'n, the respective stoichiometric numbers a1, a2, ..., an of M'1, M'2, ..., M'n all need to fall within the numerical range defined for a in the present application, and the sum of a1, a2, ..., an also needs to fall within the numerical range. Similarly, in the embodiments of the present application, when other elements are two or more elements, the limitation on the numerical range of the stoichiometric numbers of these elements also has the above meaning.

In some embodiments, M includes and is selected from Fe and/or Mn.

In some embodiments, M includes and is selected from Fe and Mn; optionally, the molar ratio of Fe to Mn is less than or equal to 1.

In some embodiments, M' includes V and one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, Zr, Ni, Co, Ga, Sn, Sb, Nb, and Ge, and optionally includes V and one or more elements selected from Zn, Al, Na, K, Mg, W, Ti, Zr, Ni, Ga, Sn, Sb, Nb, Cr, Co, and Ge, and more optionally includes V and one or more elements selected from Ti, Ni, Co, and Mg.

In some embodiments, M' includes V and at least two elements selected from Zn, Al, Na, K, Mg, W, Ti, Zr, Ni, Ga, Sn, Sb, Nb, Cr, Co, and Ge, and optionally includes V and at least two elements selected from Ti, Ni, Co, and Mg.

In some embodiments, M" includes one or more elements selected from Rb, Cs, Be, Ca, Sr, Ba, Ga, In, Cd, V, Ta, Cr, Zn, Al, Na, K, Mg, Nb, Mo, and W, and optionally includes one or more elements selected from Zn, Al, Na, K, Mg, Nb, Mo, and W.

In some embodiments, M" includes any one element selected from Zn, Al, Na, K, Mg, Nb, Mo, and W, and optionally includes any one element selected from Mg and Nb.

In some embodiments, x is selected from a range of 0.85-2.1, and optionally selected from a range of 0.97-2.01.

In some embodiments, X is P or S, and x is selected from a range of 0.85-1.1, and optionally selected from a range of 0.97-1.01.

In some embodiments, X is Si, and x is selected from a range of 1.85-2.1, and optionally selected from a range of 1.97-2.01.

In some embodiments, y-x-1 is selected from a range of 0.001-0.1, and optionally selected from a range of 0.001-0.005.

In some embodiments, a is selected from a range of 0.001-0.35, and optionally selected from a range of 0.01-0.15.

In some embodiments, a is selected from a range of 0.001-0.35, y-x-1 is 0, z1 is 0, and z2 is 0; or, a is selected from a range of 0.001-0.35, y-x-1 is 0, z1 is selected from a range of 0.001-0.1, and z2 is 0; or, a is selected from a range of 0.001-0.35, y-x-1 is 0, z1 is 0, and z2 is selected from a range of 0.001-0.1; or, a is selected from a range of 0.001-0.35, y-x-1 is 0, z1 is selected from a range of 0.001-0.1, and z2 is selected from a range of 0.001-0.1; or, a is selected from a range of 0.001-0.35, y-x-1 is selected from a range of 0.001-0.1, z1 is 0, and z2 is 0; or, a is selected from a range of 0.001-0.35, y-x-1 is selected from a range of 0.001-0.1, z1 is selected from a range of 0.001-0.1, and z2 is 0; or, a is selected from a range of 0.001-0.35, y-x-1 is selected from a range of 0.001-0.1, z1 is 0, and z2 is selected from a range of 0.001-0.1; or, a is selected from a range of 0.001-0.35, y-x-1 is selected from a range of 0.001-0.1, z1 is selected from a range of 0.001-0.1, and z2 is selected from a range of 0.001-0.1.

In some embodiments, X is P or Si, and n is 0.

In some embodiments, X is S, and n is 1.

In some embodiments, m is 1.

In some embodiments, X is P, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, S, N, and Si; D includes one or more elements selected from S, F, Cl, and Br; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 0. Optionally, y-x-1 is selected from a range of 0.001-0.1, z1 is selected from a range of 0.001-0.1, and z2 is selected from a range of 0.001-0.1. As such, the dissolution of metal ions, particularly manganese ions, can be reduced, the specific capacity and compaction density of the positive electrode active material can be increased, and the cycle performance, storage performance, and rate capability of the battery can also be improved.

In some embodiments, X is Si, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, S, N, and P; D includes one or more elements selected from S, F, Cl, and Br; x is selected from a range of 1.85-2.1, y-x-1 is selected from a range of 0-0.1, a is selected from a range of 0.001-0.15, z1 is selected from a range of 0-0.1, z2 is selected from a range of 0-0.1, m is 1, and n is 0. Optionally, y-x-1 is selected from a range of 0.001-0.1, z1 is selected from a range of 0.001-0.1, and z2 is selected from a range of 0.001-0.1. As such, the dissolution of metal ions, particularly manganese ions, can be reduced, the specific capacity and compaction density of the positive electrode active material can be increased, and the cycle performance, storage performance, and rate capability of the battery can also be improved.

In some embodiments, X is S, and M" includes one or more elements selected from Zn, Al, Na, K, Mg, Nb, Mo, and W; M includes and is selected from Fe and/or Mn; M' includes V and at least two elements selected from Zn, Al, Na, K, Mg, W, Ti, Zr, Ni, Ga, Sn, Sb, Nb, Cr, Co, and Ge; C includes one or more elements selected from B, N, P, and Si; D includes one or more elements selected from S, F, Cl, and Br; Y includes F; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 1. Optionally, y-x-1 is selected from a range of 0.001-0.1, z1 is selected from a range of 0.001-0.1, and z2 is selected from a range of 0.001-0.1. As such, the dissolution of metal ions, particularly manganese ions, can be reduced, the specific capacity and compaction density of the positive electrode active material can be increased, and the cycle performance, storage performance, and rate capability of the battery can also be improved.

### [Positive Electrode Active Material Having Core-Shell Structure]

Embodiments of the present application further provide a positive electrode active material having a core-shell structure. In some embodiments, the positive electrode active material includes an inner core and a shell coating the inner core. The inner core includes the positive electrode active material described above; the shell includes one or more coating layers, and each coating layer has ionic conductivity and/or electronic conductivity.

Another critical drawback of manganese-based positive electrode active materials is that they have low ionic conductivity and electronic conductivity, resulting in poor rate capability. This limits the practical application of such materials. By providing the coating layer with ionic conductivity and/or electronic conductivity on the surface of the inner core, the rate capability, high-temperature cycle performance, cycling stability, and high-temperature storage performance of the battery can be improved.

The inner core includes a core and a first region formed on at least a part of the surface of the core, and the shell coats the surface of the inner core. In some embodiments, the first region may be present in the form of dots or islands on at least a part of the surface of the core, and thus the case where the first region is located in the shell structure may occur. Since the element V in the first region is in an enriched state, the first region and the shell can be distinguished by STEM-EDS images.

In some embodiments, the one or more coating layers each independently include one or more selected from a pyrophosphate, a phosphate, carbon, doped carbon, an oxide, a boride, and a polymer. In practice, each of the coating layers may be a full coating or a partial coating.

In some embodiments, the shell includes one coating layer; optionally, the coating layer includes one or more selected from a pyrophosphate, a phosphate, carbon, doped carbon, an oxide, a boride, and a polymer.

By using the above materials, a coating layer having ionic conductivity and/or electronic conductivity can be obtained, such that the high-temperature cycle performance, cycling stability, and high-temperature storage performance of the battery are improved.

In some embodiments, the shell includes a first coating layer coating the inner core and a second coating layer coating the first coating layer; optionally, the first coating layer and the second coating layer each independently include one or more selected from a pyrophosphate, a phosphate, carbon, doped carbon, an oxide, a boride, and a polymer.

By using the above materials as the materials of the coating layers and providing two coating layers, the high-temperature cycle performance, cycling stability, and high-temperature storage performance of the battery can be further improved.

In some embodiments, the first coating layer includes one or more selected from a pyrophosphate, a phosphate, an oxide, and a boride, and the second coating layer includes one or more selected from carbon and doped carbon.

By using the first coating layer of a specific material and the second coating layer of a specific material, the rate capability can be further improved, the dissolution of metal ions, particularly manganese ions, can be further reduced, and the cycle performance and/or high-temperature stability of the battery can also be improved.

In some embodiments, the shell includes a first coating layer coating the inner core, a second coating layer coating the first coating layer, and a third coating layer coating the second coating layer; optionally, the first coating layer, second coating layer, and third coating layer each independently include one or more selected from a pyrophosphate, a phosphate, carbon, doped carbon, an oxide, a boride, and a polymer.

By using the materials described above as the materials of the coating layers and providing three coating layers, the dissolution of metal ions, particularly manganese ions, can be further reduced, and the high-temperature cycle performance, cycling stability, and high-temperature storage performance of the battery can be further improved.

In some embodiments, the first coating layer includes a pyrophosphate, the second coating layer includes one or more selected from a phosphate, an oxide, and a boride, and the third coating layer includes one or more selected from carbon and doped carbon.

By using the first coating layer of a specific material, the second coating layer of a specific material, and the third coating layer of a specific material, the rate capability is further improved, and the dissolution of metal ions, particularly manganese ions, is further reduced. Thus, the cycle performance and/or high-temperature stability of the battery is improved, and the specific capacity and compaction density of the materials are further improved.

In some embodiments, the pyrophosphate is M¹_{b}(P₂O₇)_{c}; and/or
the phosphate is M²ₚ(PO₄)_{q}; and/or
the doping element in the doped carbon includes one or more selected from Group IIIA, Group VA, Group VIA, and Group VIIA; and/or
the oxide is M³_{d}Oₑ; and/or
the boride is ZᵥBₜ; and/or
the polymer includes one or more selected from a polysaccharide and a derivative thereof, and a polysiloxane.

M¹, M², and Z each independently include one or more elements selected from Group IA, Group IIA, Group IIIA, Group IB, Group IIB, Group IVB, Group VB, Group VIIB, and Group VIII; b is selected from a range of 1-4; c is selected from a range of 1-6; p is selected from a range of 1-2; q is selected from a range of 1-4; M³ includes one or more elements selected from an alkali metal, an alkaline earth metal, a transition metal, a Group IIIA element, a Group IVA element, a lanthanide element, and Sb; d is greater than 0 and less than or equal to 2; e is greater than 0 and less than or equal to 5; v is selected from a range of 1-7; t is selected from a range of 1-2.

By using the above materials as the coating layers, the dissolution of metal ions, particularly manganese ions, can be further reduced, the specific capacity and compaction density of the material are further improved, and the rate capability, high-temperature cycle performance, and high-temperature storage performance of the battery are further improved.

In some embodiments, M¹, M², and Z each independently include one or more elements selected from Li, Fe, Ni, Mg, Co, Cu, Zn, Ti, Ag, Zr, Nb, Mn, and Al; and/or
the doping element in the doped carbon includes one or more selected from nitrogen, phosphorus, sulfur, boron, and fluorine; and/or
M³ includes one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and optionally includes one or more elements selected from Mg, Al, Si, Zn, Zr, and Sn; and/or
the polysiloxane includes one or more selected from a polysiloxane of a linear structure and a polysiloxane of a cyclic structure; and/or
the polysaccharide includes one or more selected from a plant polysaccharide and a marine polysaccharide.

By using the above specific materials as the coating layers, the dissolution of metal ions, particularly manganese ions, can be further reduced, and the high-temperature cycle performance and high-temperature storage performance of the battery can be further improved.

In some embodiments, the positive electrode active material includes an inner core and a shell coating the inner core. The shell includes a first coating layer coating the inner core and a second coating layer coating the first coating layer; the first coating layer includes pyrophosphate M⁴P₂O₇ and phosphate M⁵PO₄, and M⁴ and M⁵ each independently include one or more elements selected from Li, Fe, Ni, Mg, Co, Cu, Zn, Ti, Ag, Zr, Nb, and Al; the second coating layer includes carbon.

The first coating layer includes a pyrophosphate and a phosphate. Due to the high migration barrier of the transition metal in the pyrophosphate (> 1 eV), the dissolution of metal ions, particularly manganese ions, can be effectively reduced. Meanwhile, the phosphate exhibits excellent lithium-ion conductivity and can reduce the content of surface lithium impurities. In addition, because the second coating layer is a carbon-containing layer, the conductive performance and the desolvation capability of the positive electrode active material can be effectively improved. In addition, the "barrier" effect of the second coating layer can further reduce the migration of manganese ions into the electrolytic solution and reduce the corrosion of the active material by the electrolytic solution. Therefore, by using the above specific materials as the coating layers, the dissolution of metal ions, particularly manganese ions, during lithium deintercalation can be effectively reduced, and the migration of lithium ions is promoted, thereby improving the rate capability of the battery and the cycle performance and high-temperature performance of the battery.

In some embodiments, the positive electrode active material includes an inner core and a shell coating the inner core, and the shell includes a first coating layer coating the inner core, a second coating layer coating the first coating layer, and a third coating layer coating the second coating layer.

The first coating layer includes pyrophosphate Li_{f}QP₂O₇ and/or Q_{g}(P₂O₇)ₕ, where 0 ≤ f ≤ 2, 1 ≤ g ≤ 4, 1 ≤ h ≤ 6, and Q in the pyrophosphate Li_{f}QP₂O₇ and/or Q_{g}(P₂O₇)ₕ each independently includes one or more elements selected from Fe, Ni, Mg, Co, Cu, Zn, Ti, Ag, Zr, Nb, and Al.

The second coating layer includes crystalline phosphate M⁵PO₄, where M⁵ includes one or more elements selected from Li, Fe, Ni, Mg, Co, Cu, Zn, Ti, Ag, Zr, Nb, and Al.

The third coating layer includes carbon.

By coating the inner core with the first coating layer including a pyrophosphate, the migration resistance of metal ions, particularly manganese ions, can be further increased, the dissolution of the metal ions is reduced, the content of lithium impurities on the surface is reduced, and the contact between the inner core and the electrolytic solution is reduced, thereby reducing the interface side reactions, reducing the gas production, and improving the high-temperature storage performance, cycle performance, and reliability of the battery. By further coating with a phosphate coating layer having an excellent lithium-ion conduction capability, the interface side reactions on the surface of the positive electrode active material can be effectively reduced, thereby improving the high-temperature cycle and storage performance of the battery. By further coating with a carbon layer as the third coating layer, the reliability and dynamics performance of the battery can be further improved.

In some embodiments, one or more coating layers in the shell that are most distal to the inner core each independently include one or more selected from the polysiloxane, the polysaccharide, and the polysaccharide derivative.

As such, the coating uniformity can be enhanced, and the interface side reactions caused by high voltage can be effectively blocked, thereby improving the high-temperature cycle performance and high-temperature storage performance of the material. Moreover, the coating layers have good electronic conductivity and ionic conductivity, which is conducive to increasing the specific capacity of the material and reducing the heat generation of the battery.

In some embodiments, the polysiloxane includes a structural unit represented by formula (i) below.

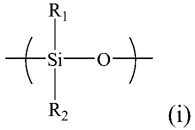

In formula (i), R₁ and R₂ are independently selected from H, -COOH, -OH, -SH, -CN, -SCN, amino, a phosphate group, a carboxylate group, acylamino, an aldehyde group, sulfonyl, a polyether chain segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group, and a C2-C20 halogenated heteroaromatic hydrocarbon group.

Optionally, R₁ and R₂ are independently selected from H, amino, a phosphate group, a polyether chain segment, C1-C8 alkyl, C1-C8 halogenated alkyl, C1-C8 heteroalkyl, C1-C8 halogenated heteroalkyl, C2-C8 alkenyl, and C2-C8 halogenated alkenyl.

In some embodiments, the polysiloxane further includes a capping group. The capping group includes at least one of the group consisting of the following functional groups: polyether, C1-C8 alkyl, C1-C8 halogenated alkyl, C1-C8 heteroalkyl, C1-C8 halogenated heteroalkyl, C2-C8 alkenyl, C2-C8 halogenated alkenyl, a C6-C20 aromatic hydrocarbon group, C1-C8 alkoxy, a C2-C8 epoxy group, hydroxy, C1-C8 hydroxyalkyl, amino, C1-C8 aminoalkyl, carboxy, and C1-C8 carboxyalkyl.

In some embodiments, the polysiloxane includes one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

In some embodiments, number-average molecular weights of the polysiloxane, the polysaccharide, and the polysaccharide derivative are each independently 300,000 or less, optionally 10,000-200,000, more optionally 20,000-120,000, and further optionally 400-80,000.

The number-average molecular weights of the polysiloxane, polysaccharide, and the polysaccharide derivative may be determined by methods known in the art, for example, using gel permeation chromatography (GPC). The test instrument may be the PL-GPC 220 high-temperature gel permeation chromatograph.

In some embodiments, the mass percentage of polar functional groups in the polysiloxane is α, where 0 ≤ α < 50%, and optionally 5% ≤ α ≤ 30%.

The "mass percentage of polar functional groups in the polysiloxane" refers to the mass proportion of polar functional groups in R₁, R₂, and the capping groups in the polysiloxane. The polar functional groups include one or more of -COOH, -OH, -SH, -CN, - SCN, amino (including -NH₂ and -NH-), a phosphate group, a carboxylate group (-COO-), acylamino (-CONH-), an aldehyde group (-CHO), sulfonyl (-S(=O)₂-), a polyether chain segment, halogen, alkoxy, and an epoxy group. When the above polar functional groups are directly bonded to the silicon atoms, α represents the mass fraction of these polar functional groups in the polysiloxane; when the above polar functional groups are not directly bonded to the silicon atoms, α represents the sum of the mass fractions of the polar functional groups and the divalent to tetravalent methyl groups (e.g., -CH₂, -CH-, -C-, or the like) directly bonded thereto in the polysiloxane, where the "divalent to tetravalent methyl groups" refer to carbon atoms directly bonded to the polar functional groups and located between the polar functional groups and the silicon atoms and other nonpolar functional groups bonded to the carbon atoms. Taking polymethyltrifluoropropylsiloxane as an example, α refers to the mass percentage of - CF₃, excluding the ethylene; taking polymethylchloropropylsiloxane as an example, α refers to the mass percentage of -CH₂Cl, excluding the ethylene; taking hydroxypropyl-terminated polydimethylsiloxane as an example, α refers to the mass percentage of -CH₂OH. The mass percentage of the polar functional groups in the polysiloxane may be determined by methods known in the art, for example, by the titration method (e.g., acid-base titration, redox titration, or precipitation titration), infrared spectroscopy, and nuclear magnetic resonance spectroscopy.

In some embodiments, substituents attached to saccharide units in the polysaccharide and the polysaccharide derivative each independently include at least one of the group consisting of the following functional groups: -OH, -COOH and a salt thereof, -R-OH, -SO₃H and a salt thereof, -R-OH, -R-SO₃H and a salt thereof, a sulfate group, and alkoxy, where R represents alkylene, and optionally represents C1-C5 alkylene.

Optionally, substituents attached to saccharide units in the polysaccharide and the polysaccharide derivative each independently include at least one of the group consisting of the following functional groups: -OH, -COOH, -COOLi, -COONa, -COOK, -SO₃H, -SO₃Li, - SO₃Na, -SO₃K, -CH₂-SO₃H, -CH₂-SO₃Li, -CH₂-SO₃Na, -CH₂-SO₃K, methoxy, and ethoxy.

The term "substituents attached to the saccharide units" includes all groups attached to the backbone of the saccharide units.

In some embodiments, the polysaccharide includes one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

In some embodiments, the mass percentages of the substituents attached to the saccharide units in the polysaccharide and the polysaccharide derivative are each independently 20%-85%, and optionally 30%-78%. The mass percentages of the substituents attached to the saccharide units in the polysaccharide and polysaccharide derivatives may be determined by methods known in the art, for example, by the titration method (e.g., acid-base titration, redox titration, or precipitation titration), infrared spectroscopy, and nuclear magnetic resonance spectroscopy.

In some embodiments, the surface of the positive electrode active material (i.e., the surface of the inner core) is coated with one or more of carbon and doped carbon. Optionally, the surface of the positive electrode active material (i.e., the surface of the inner core) is coated with carbon. As such, the conductivity of the positive electrode active material can be improved.

In some embodiments, the doping element in the doped carbon includes one or more selected from nitrogen, phosphorus, sulfur, boron, and fluorine. This facilitates control of the performance of the doped carbon.

In some embodiments, the coating amount of the shell (only one coating layer) is 0.1 wt% to 6 wt% based on the weight of the inner core. This enables sufficient coating of the inner core, and at the same time, further improves the dynamics performance and reliability of the battery without compromising the specific capacity of the positive electrode active material.

In some embodiments, the coating amount of the first coating layer is greater than 0 and less than or equal to 7 wt%, optionally greater than 0 and less than or equal to 6 wt%, more optionally greater than 0 and less than or equal to 5.5 wt%, and further optionally greater than 0 and less than or equal to 2 wt%, based on the weight of the inner core; and/or
the coating amount of the second coating layer is greater than 0 and less than or equal to 6 wt%, optionally greater than 0 and less than or equal to 5.5 wt%, and more optionally 2 wt% to 4 wt%, based on the weight of the inner core; and/or
the coating amount of the third coating layer is greater than 0 and less than or equal to 6 wt%, optionally greater than 0 and less than or equal to 5.5 wt%, and more optionally greater than 0 and less than or equal to 2 wt%, based on the weight of the inner core.

In some embodiments, the shell further includes a fourth coating layer coating the third coating layer and a fifth coating layer coating the fourth coating layer.

The coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the inner core.

In the positive electrode active material having a core-shell structure according to the present application, the coating amounts of the coating layers are preferably within the above range, which enables sufficient coating of the inner core and, at the same time, further improves the dynamics performance and reliability of the battery without compromising the specific capacity of the positive electrode active material.

In some embodiments, the shell is located at 40%-90%, optionally 60%-80%, of the surface of the inner core. This enables sufficient coating of the inner core and thereby improves the dynamics performance and reliability of the battery.

In some embodiments, the thickness of the shell (only one coating layer) is 1-15 nm.

In some embodiments, the thickness of the first coating layer is 1-10 nm, and optionally 2-10 nm; and/or
the thickness of the second coating layer is 2-25 nm, optionally 2-15 nm, and more optionally 3-15 nm; and/or
the thickness of the third coating layer is 2-25 nm, and optionally 5-25 nm.

In some embodiments, the thickness of the first coating layer may be about 2 nm, about 3 nm, about 4 nm, about 5 nm, about 6 nm, about 7 nm, about 8 nm, about 9 nm, about 10 nm, or within any range of any of the above values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above values.

In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, about 25 nm, or within any range of any of the above values.

The thicknesses of the shell and the coating layers are mainly tested by FIB, and the specific method may include the following steps: randomly selecting a single particle from positive electrode active material powders to be tested, cutting a slice with a thickness of about 100 nm from the central or the near-central region of the selected particle, then performing a TEM test on the slice, measuring the thickness of each coating layer at 3-5 positions, and taking an average value.

In some embodiments, the one or more coating layers each independently include one or more selected from a pyrophosphate, a phosphate, and an oxide, and the one or more selected from the pyrophosphate, the phosphate, and the oxide are in a crystalline state.

Optionally, the crystallinities of the pyrophosphate, phosphate, and oxide are each independently 10%-100%, and more optionally 50%-100%.

The pyrophosphate and the phosphate with certain crystallinity are not only conducive to fully exerting the capabilities of the pyrophosphate coating layer in reducing dissolution of metal ions, particularly manganese ions, the excellent lithium-ion conductivity of the phosphate coating layer, and the function of reducing interface side reactions, but also can enable the pyrophosphate coating layer and the phosphate coating layer to achieve better lattice matching, such that a tight combination between the coating layers can be achieved.

It should be noted that the crystallinity may be adjusted, for example, by adjusting, the process conditions of the sintering process, such as the sintering temperature and the sintering time. The crystallinity may be measured by methods known in the art, for example, by the X-ray diffraction method, the density method, infrared spectroscopy, differential scanning calorimetry, the nuclear magnetic resonance absorption method, and the like.

Specifically, the method for testing the crystallinity of the positive electrode active material by the X-ray diffraction method may include the following steps: taking a certain amount of the positive electrode active material powder and measuring the total scattering intensity through X-rays, where the total scattering intensity is the sum of scattering intensities of substances in the entire space and only relates to the intensity of the primary rays, the chemical structure of the positive electrode active material powder, and the total number of electrons participating in diffraction (i.e., the mass quantity), but is independent of the sample's ordered state; and separating the crystalline scattering from the amorphous scattering on the diffraction pattern, where the crystallinity is the ratio of the scattering intensity of the crystalline part to the total scattering intensity.

In some embodiments, the weight ratio of the pyrophosphate to the phosphate and the weight ratio of the pyrophosphate to the oxide in the shell are each independently 1:3 to 3:1, and optionally 1:3 to 1:1. As such, by setting the pyrophosphate and the phosphate in a proper weight ratio range or the pyrophosphate and the oxide in a proper weight ratio range, the dissolution of metal ions, particularly manganese ions, can be effectively reduced, and the content of surface lithium impurities can be effectively reduced, such that interface side reactions are reduced, thereby improving the high-temperature storage performance, reliability, and cycle performance of the battery.

In some embodiments, the one or more coating layers each independently include carbon, and the carbon is a mixture of SP2-type carbon and SP3-type carbon. Optionally, the molar ratio of the SP2-type carbon to the SP3-type carbon in the carbon is any value within a range of 0.07-13, more optionally any value within a range of 0.1-10, and further optionally any value within a range of 2.0-3.0.

In some embodiments, the molar ratio of the SP2-type carbon to the SP3-type carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, about 10, or within any range of any of the above values.

In the present application, "about" a certain numerical value means a range, which is a range of ±10% of the numerical value.

By selecting the type of the carbon in the coating layer, the comprehensive electric performance of the battery can be improved. Specifically, by using a mixture of SP2-type carbon and SP3-type carbon and limiting the ratio of the SP2-type carbon to the SP3-type carbon to a certain range, the following situations can be avoided: If the carbon in the coating layer is all amorphous SP3-type carbon, the conductivity is poor; if the carbon in the coating layer is all graphitized SP2-type carbon, although the conductivity is good, there are few lithium ion paths, which is not conducive to the lithium deintercalation. In addition, by limiting the molar ratio of the SP2-type carbon to the SP3-type carbon to the above range, not only can good conductivity be achieved, but also the path of lithium ions is ensured, which is conducive to the realization of battery functions and the improvement of cycle performance.

The mixing ratio of the SP2-type carbon to the SP3-type carbon may be controlled by sintering conditions such as sintering temperature and sintering time. The molar ratio of the SP2-type carbon to the SP3-type carbon may be determined by Raman spectroscopy. The specific test method is as follows: By peak deconvolution of the energy spectrum obtained from the Raman test, Id/Ig (where Id represents the peak intensity of the SP3-type carbon and Ig represents the peak intensity of the SP2-type carbon) is obtained, and thus the ratio between the two is confirmed.

In some embodiments, the one or more coating layers each independently include doped carbon. The mass content of the doping element in the doped carbon is 30% or less; optionally, the mass content of the doping element in the doped carbon is 20% or less. The doping element within the above content range can not only fully improve the conductivity, but also effectively avoid the excessively high surface activity caused by excessive incorporation of the doping element, thereby effectively controlling the interface side reactions caused by excessive doping in the coating layers.

In some embodiments, the one or more coating layers each independently include doped carbon. In the doped carbon:
the doping element includes element nitrogen and/or element sulfur, and the mass content of the doping element in the doped carbon is 1%-15%; or
the doping element includes element phosphorus, element boron, and/or element fluorine, and the mass content of the doping element in the doped carbon is 0.5%-5%;
optionally, the doping element includes element nitrogen, element phosphorus, element sulfur, element boron, or element fluorine.

Since the atomic radii of the nitrogen atom and sulfur atom are more similar to that of the carbon atom, the carbon skeleton is not easily damaged, and therefore, when the doping amounts of the nitrogen atom and sulfur atom are within the relatively broad range above, the conductivity of the doped carbon can be fully exerted, and the lithium ion transport and lithium ion desolvation capability can also be promoted.

Since there are differences in the atomic radii between the phosphorus atom, boron atom, and/or fluorine atom and the carbon atom, the carbon skeleton is easily damaged by excessive doping, and therefore, when the doping amounts of the phosphorus atom, boron atom, and/or fluorine atom are within the relatively small range above, the conductivity of the doped carbon can be fully exerted, and the lithium ion transport and lithium ion desolvation capability can also be promoted.

In some embodiments, the one or more coating layers each independently include a pyrophosphate, the interplanar spacing of the pyrophosphate is within a range of 0.293-0.470 nm, optionally 0.297-0.462 nm or 0.293-0.326 nm, and more optionally 0.300-0.310 nm, and the included angle in the crystal orientation (111) is within a range of 18.00° to 32.57°, optionally 18.00° to 32.00° or 26.41° to 32.57°, more optionally 19.211° to 30.846°, and further optionally 29.00° to 30.00°; and/or
the one or more coating layers each independently include a phosphate, the interplanar spacing of the phosphate is within a range of 0.244-0.425 nm, and optionally 0.345-0.358 nm, and the included angle in the crystal orientation (111) is within a range of 20.00° to 37.00°, and optionally 24.25° to 26.45°;
optionally, the first coating layer or the second coating layer includes a phosphate.

Crystalline substances are used in both the first coating layer and second coating layer in the positive electrode active material of the present application, and the interplanar spacings and included angles of the crystalline substances are within the above ranges. As such, the impurity phase in the coating layer can be effectively reduced, thereby improving the specific capacity, cycle performance, and rate capability of the positive electrode active material.

In some embodiments, the positive electrode active material includes element manganese and element phosphorus, and based on the weight of the positive electrode active material,
the content of the element manganese is within a range of 10 wt% to 35 wt%, optionally within a range of 13.3 wt% to 33.2 wt%, more optionally within a range of 15 wt% to 30 wt%, and further optionally within a range of 17 wt% to 20 wt%; and/or
the content of the element phosphorus is within a range of 12 wt% to 25 wt%, optionally within a range of 15 wt% to 20 wt%, and more optionally within a range of 16.8 wt% to 19.5 wt%; and/or
the weight ratio of the element manganese to the element phosphorus is within a range of 0.71-1.85, optionally 0.90-1.25, and more optionally 0.95-1.20.

In the case where only the inner core of the positive electrode active material contains manganese, the content of manganese may correspond to the content of the inner core.

By limiting the content of the element manganese within the above range, the stability and density of the positive electrode active material can be further improved, thereby improving the cycle performance, storage performance, compaction density, and other performances of the battery. Moreover, a relatively high discharge voltage plateau can be maintained, thereby improving the energy density of the battery.

By limiting the content of the element phosphorus within the above range, the influence of small polaron conduction on the electrical conductivity of the positive electrode active material can be effectively reduced, and the stability of the lattice structure can be further improved, thereby improving the overall stability of the positive electrode active material.

By limiting the weight ratio of the element manganese to the element phosphorus within the above range, the dissolution of metal ions, particularly manganese ions, can be further reduced, and the stability and specific capacity of the positive electrode active material can be improved, thereby improving the cycle performance and storage performance of the battery. Moreover, the impurity phases can be reduced, such that the positive electrode active material can maintain a relatively high discharge voltage plateau, providing the battery with high energy density.

The element manganese and the element phosphorus can be measured by the technical means conventional in the field. In particular, the contents of element manganese and element phosphorus are determined by the following method: dissolving a material in dilute hydrochloric acid (with a concentration of 10%-30%), testing contents of elements in the solution by using ICP, and measuring and converting the content of the element manganese to obtain the weight proportion of the element manganese.

In some embodiments, the lattice mismatch degree between the material of the inner core and the material of the shell is less than 10%. As such, good contact between the inner core and the shell (or coating layer) can be achieved to prevent the shell (or coating layer) from peeling off.

In some embodiments, X is P, and a lattice change rate of the positive electrode active material before and after complete lithium deintercalation is 50% or less, optionally 9.8% or less, more optionally 8.1% or less, further optionally 7.5% or less, further more optionally 6% or less, still further more optionally 4% or less, and yet still further more optionally 3.8% or less.

By reducing the lattice change rate, the transport of lithium ions can be made easier, that is, the lithium ions have stronger migration capability in the material, which is conducive to improving the rate capability of the battery. The lattice change rate can be determined by methods known in the art, such as X-ray diffraction (XRD) patterns.

In some embodiments, X is P, and the Li/Mn anti-site defect concentration in the positive electrode active material is 5.3% or less, optionally 5.1% or less, more optionally 4% or less, further optionally 2.2% or less, and further more optionally 2% or less.

The Li/Mn anti-site defect refers to the position exchange between Li⁺ and Mn²⁺ in the LiMnPO₄ lattice. The Li/Mn anti-site defect concentration refers to the percentage of Li⁺ exchanged with Mn²⁺ in the positive electrode active material with respect to the total amount of Li⁺. The Mn²⁺ at the anti-site defect can hinder the transport of Li⁺. By reducing the Li/Mn anti-site defect concentration, the improvement of the specific capacity and rate capability of the positive electrode active material is facilitated. The Li/Mn anti-site defect concentration may be determined by methods known in the art, such as XRD.

In some embodiments, X is P, and the surface oxygen valence state of the positive electrode active material is -1.55 or less, optionally -1.82 or less, more optionally -1.88 or less, and further optionally -1.90 or less.

By reducing the surface oxygen valence state, the interface side reactions between the positive electrode active material and the electrolytic solution can be reduced, thereby improving the cycle performance and high-temperature stability of the battery. The surface oxygen valence state may be determined by methods known in the art, such as electron energy loss spectroscopy (EELS).

In some embodiments, the compaction density of the positive electrode active material at 3 T is 1.89 g/cm³ or more, optionally 1.95 g/cm³ or more, more optionally 1.98 g/cm³ or more, further optionally 2.0 g/cm³ or more, further more optionally 2.2 g/cm³ or more, and still further more optionally 2.2 g/cm³ or more and 2.8 g/cm³ or less.

The higher the compaction density is, the larger the weight of the active material per unit volume. Therefore, improving the compaction density is conducive to improving the volumetric energy density of the battery. The compaction density may be measured according to GB/T 24533-2009.

### Preparation Method

A second aspect of embodiments of the present application relates to a method for preparing the positive electrode active material according to the first aspect of embodiments of the present application. The method includes the following steps: grinding and mixing a source of element A, a source of element X, optionally a source of element C, optionally a source of element D, and optionally a source of element Y to obtain a precursor, where the element A includes element V; and sintering the precursor to obtain an inner core, where the inner core includes a core and a first region formed on at least a part of the surface of the core, the first region includes the element V and the mass concentration of the element V in the first region is denoted as W₁, the core includes the element V, and the mass concentration of the element V in the core is denoted as W₂, and W₁ > W₂.

In some embodiments, the inner core includes a substance represented by formula 1:

A_{y}(X_{1-z1}C_{z1}O_{4-z2}D_{z2})ₘYₙ, formula 1,

where
A, X, C, D, Y, y, z1, z2, m, and n are as defined in the first aspect, and details are not described herein again.

In some embodiments, the element V in the first region is present in at least one form selected from:
(1) a V elementary substance;
(2) an oxide of the element V, optionally including one or more selected from VO, V₂O₃, VO₂, and V₂O₃;
(3) a compound containing the element V and element Li, optionally including one or more selected from LiVO₃ and LiVO₂;
(4) a compound containing the element V and element X, optionally including one or more selected from VOPO₄ and VOSO₄, X including one selected from S, P, and Si;
(5) a compound containing the element V, element Li, and element X, optionally including one or more selected from Li₃V₂(PO₄)₃, LiVOPO₄, and Li₂VOSiO₄, X including one selected from S, P, and Si.

A includes a first element M, a second element Li, optionally a first doping element M' and optionally a second doping element M".

In some embodiments, in the step of obtaining the precursor, the source of the first element M, the source of the second element Li, optionally the source of the first doping element M', optionally the source of the second doping element M", the source of the element X, optionally the source of the element C, optionally the source of the element D, and optionally the source of the element Y may be ground and mixed to obtain the precursor, where the first doping element M' and/or the second doping element M" include V, and optionally, the first doping element M' includes V.

In some embodiments, the source of the first element M may include one selected from an elementary substance, an oxide, an inorganic acid salt (e.g., phosphate, oxalate, carbonate, and sulfate), and an organic acid salt of the element M, or a combination thereof.

In some embodiments, the source of the second element Li may be a lithium-containing substance known in the art for preparing a positive electrode active material. For example, the lithium-containing substance may be one selected from lithium carbonate, lithium hydroxide, lithium phosphate, and lithium dihydrogen phosphate, or a combination thereof.

In some embodiments, the source of the first doping element M' may include one selected from an elementary substance, an oxide, an inorganic acid salt (e.g., a phosphate, an oxalate, a carbonate, and a sulfate), and an organic acid salt of the element M', or a combination thereof.

In some embodiments, the source of the second doping element M" may include one selected from an elementary substance, an oxide, an inorganic acid salt (e.g., a phosphate, an oxalate, a carbonate, and a sulfate), and an organic acid salt of the element M", or a combination thereof.

In some embodiments, the source of the element X may include one selected from diammonium hydrogen phosphate, ammonium dihydrogen phosphate, ammonium phosphate, phosphoric acid, silicic acid, and sulfuric acid, or a combination thereof.

In some embodiments, the source of the element C may include one selected from an elementary substance, a halide, an organic acid salt, an oxide, a hydroxide, an inorganic acid, an organic acid, a sulfate, a borate, a nitrate, and a silicate of the element C, or a combination thereof.

In some embodiments, the source of the element D may include one selected from an elementary substance and an ammonium salt of the element D, or a combination thereof.

In some embodiments, the source of the element Y may include one selected from an elementary substance and an ammonium salt of the element Y, or a combination thereof.

The addition amount of the source of each element may conform to the stoichiometric ratio.

In some embodiments, the grinding in the step of obtaining the precursor is performed at 10-800 r/min for 0.5-15 h, optionally 2-14 h.

In some embodiments, sintering the precursor is performed at 300-900 °C for 4-15 h in an inert gas atmosphere or a mixed atmosphere of an inert gas and hydrogen. The inert gas may include one of nitrogen, argon, and helium, or a combination thereof.

The mass concentration W₁ of the element V in the first region and the mass concentration W₂ of the element V in the core may be adjusted by adjusting one or more of the grinding rotation speed, the grinding time, the sintering temperature, the sintering time, and the like.

The total molar weight of the element V in the inner core may be adjusted by adjusting the mass of the added source of V.

When the amount of the source of V is the same, the grinding rotation speed increases, the mass concentration W₂ of the element V in the core increases, and the mass concentration W₁ of the element V in the first region decreases; with the increase of the grinding time, the mass concentration W₂ of the element V in the core increases, and the mass concentration W₁ of the element V in the first region decreases; with the increase of the sintering temperature, the mass concentration W₂ of the element V in the core increases, and the mass concentration W₁ of the element V in the first region decreases; with the increase of the sintering time, the mass concentration W₂ of the element V in the core increases, and the mass concentration W₁ of the element V in the first region decreases.

In some embodiments, the preparation method further includes the following step: coating the surface of the inner core with a mixture of one or more selected from a pyrophosphate, a phosphate, carbon, doped carbon, an oxide, a boride, and a polymer by a dry coating method or a wet coating method to obtain a positive electrode active material. The positive electrode active material includes the inner core and a shell coating the inner core, the shell includes one or more coating layers, and each coating layer independently includes one or more selected from the pyrophosphate, the phosphate, the carbon, the doped carbon, the oxide, the boride, and the polymer.

In some embodiments, the preparation method further includes the following step: coating the surface of a material of an inner core with a source of carbon and/or doped carbon by a dry method or a wet method to obtain a positive electrode active material. The positive electrode active material includes the inner core and a shell coating the inner core, and the shell includes the carbon or the doped carbon.

In some embodiments, the preparation method further includes the following steps: providing a pyrophosphate M¹_{b}(P₂O₇)_{c} powder and a suspension containing phosphate M²ₚ(PO₄)_{q} and/or oxide M³_{d}Oₑ, where the suspension further includes a source of carbon and/or a source of doped carbon; and adding the inner core and the pyrophosphate M¹_{b}(P₂O₇)_{c} powder to the suspension, mixing, and sintering to obtain a positive electrode active material. The positive electrode active material includes the inner core and a shell coating the inner core. The shell includes a first coating layer coating the inner core and a second coating layer coating the first coating layer. The first coating layer includes the pyrophosphate M¹_{b}(P₂O₇)_{c} and one or more selected from the phosphate M²ₚ(PO₄)_{q} and the oxide M³_{d}Oₑ, and the second coating layer includes one or more selected from the carbon and the doped carbon. Optionally, the doping element in the doped carbon includes one or more selected from nitrogen, phosphorus, sulfur, boron, and fluorine. M¹, M², M³, b, c, d, e, p, and q are as defined in the first aspect. Optionally, the sintering temperature is 500-800 °C, and/or the sintering time is 4-10 h.

In some embodiments, the preparation method further includes the following steps: providing a pyrophosphate M⁴P₂O₇powder and a phosphate M⁵PO₄ suspension containing a source of carbon; and adding the inner core and the pyrophosphate M⁴P₂O₇ powder to the M⁵PO₄ suspension containing the source of carbon, mixing, and sintering to obtain a positive electrode active material. The positive electrode active material includes the inner core and a shell coating the inner core. The shell includes a first coating layer coating the inner core and a second coating layer coating the first coating layer. The first coating layer includes the pyrophosphate M⁴P₂O₇ and the phosphate M⁵PO₄, and the second coating layer includes the carbon. M⁴ and M⁵ are as defined in the first aspect. Optionally, the sintering temperature is 500-800 °C, and/or the sintering time is 4-10 h.

In some embodiments, the preparation method further includes the following steps: separately providing a pyrophosphate M¹_{b}(P₂O₇)_{c} suspension, a suspension containing one or more selected from phosphate M²ₚ(PO₄)_{q}, oxide M³_{d}Oₑ, and boride ZᵥBₜ, and a suspension containing a source of carbon and/or a source of doped carbon; and mixing the inner core with all the suspensions described above, and sintering to obtain a positive electrode active material. The positive electrode active material includes the inner core and a shell coating the inner core. The shell includes a first coating layer coating the inner core, a second coating layer coating the first coating layer, and a third coating layer coating the second coating layer. The first coating layer includes the pyrophosphate M¹_{b}(P₂O₇)_{c}, the second coating layer includes one or more selected from the phosphate M²ₚ(PO₄)_{q}, the oxide M³_{d}Oₑ, and the boride ZᵥBₜ, and the third coating layer is selected from one or more of the carbon and the doped carbon. M¹, M², M³, Z, b, c, d, e, p, q, v, and t are as defined in the first aspect. Optionally, the sintering temperature is 500-800 °C, and/or the sintering time is 4-10 h.

In some embodiments, the preparation method further includes the following steps: separately providing Li_{f}QP₂O₇ and/or Q_{g}(P₂O₇)ₕ and M⁵PO₄ suspensions, adding the inner core to the suspensions described above, mixing, and sintering to obtain a positive electrode active material. The positive electrode active material includes the inner core and a shell coating the inner core. The shell includes a first coating layer coating the inner core, a second coating layer coating the first coating layer, and a third coating layer coating the second coating layer. The first coating layer includes the pyrophosphate Li_{f}QP₂O₇ and/or Q_{g}(P₂O₇)ₕ, the second coating layer includes the phosphate M⁵PO₄, and the third coating layer includes carbon. Q, M⁵, f, g, and h are as defined in the first aspect. Optionally, the sintering temperature is 500-800 °C, and/or the sintering time is 4-10 h.

In some embodiments, the preparation method further includes the following steps: a first coating step: dissolving a source of element Q, a source of phosphorus, an acid, and optionally a source of element Li in a solvent to obtain a first coating layer suspension containing Li_{f}QP₂O₇ and/or Q_{g}(P₂O₇)ₕ, fully mixing the inner core with the first coating layer suspension, drying, and sintering to obtain a material coated with the first coating layer; a second coating step: dissolving a source of element M⁵, a source of phosphorus, and an acid in a solvent to obtain a second coating layer suspension containing M⁵PO₄, fully mixing the material coated with the first coating layer obtained in the first coating step and the second coating layer suspension, drying, and sintering to obtain a material coated with two coating layers; and a third coating step: dissolving a source of carbon in a solvent and fully dissolving to obtain a third coating layer solution, then adding the material coated with the two coating layers obtained in the second coating step into the third coating layer solution, uniformly mixing, drying, and sintering to obtain a material coated with three coating layers, i.e., a positive electrode active material.

Optionally, in the first coating step, the pH of the solution in which the source of the element Q, the source of phosphorus, the acid, and optionally the source of the element Li are dissolved is controlled to be 3.5-6.5, then the solution is stirred and reacted for 1-5 h, and then the solution is heated to 50-120 °C and maintained at this temperature for 2-10 h, and/or sintering is performed at 650-800 °C for 2-6 h.

Optionally, in the second coating step, after the source of the element M⁵, the source of phosphorus, and the acid are dissolved in the solvent, the solution is stirred and reacted for 1-10 h; then the solution is heated to 60-150 °C and maintained at this temperature for 2-10 h, and/or sintering is performed at 500-700 °C for 6-10 h.

Optionally, the sintering in the third coating step is performed at 700-800 °C for 6-10 h.

In some embodiments, the preparation method further includes the following steps: separately providing a pyrophosphate M¹_{b}(P₂O₇)_{c} powder, one or more powders selected from phosphate M²ₚ(PO₄)_{q}, oxide M³_{d}Oₑ, and boride ZᵥBₜ, and a powder of a source of carbon and/or a powder of a source of doped carbon; and mixing and grinding the inner core and all the powders described above, and drying to obtain a positive electrode active material. The positive electrode active material includes the inner core and a shell coating the inner core. The shell includes a first coating layer coating the inner core, a second coating layer coating the first coating layer, and a third coating layer coating the second coating layer. The first coating layer includes the pyrophosphate M¹_{b}(P₂O₇)_{c}, the second coating layer includes one or more selected from the phosphate M²ₚ(PO₄)_{q}, the oxide M³_{d}Oₑ, and the boride ZᵥBₜ, and the third coating layer is selected from one or more of the carbon and the doped carbon. M¹, M², M³, Z, b, c, d, e, p, q, v, and t are as defined in the first aspect. optionally, the drying is performed by a spray granulation dryer. Optionally, the sintering temperature is 500-800 °C, and/or the sintering time is 4-10 h.

In some embodiments, the preparation method further includes the following steps: providing a polymer, where the polymer includes one or more selected from a polysiloxane, a polysaccharide, and a polysaccharide derivative; and coating the positive electrode active material prepared above (including the positive electrode active material with or without a coating layer) with the polymer by a dry method or a wet method to obtain a material including an inner core and a shell coating the inner core, where one or more coating layers in the shell that are most distal to the inner core each independently include one or more selected from the polysiloxane, the polysaccharide, and the polysaccharide derivative. Optionally, the sintering temperature is 500-800 °C, and/or the sintering time is 4-10 h.

In some embodiments, the M⁴P₂O₇ powder is a commercially available product, or the M⁴P₂O₇ powder is prepared by the following method: adding a source of the element M⁴ and a source of phosphorus to a solvent to obtain a mixture, adjusting the pH of the mixture to 4-6, stirring the mixture, allowing the mixture to react sufficiently, and drying and sintering to obtain the powder. Optionally, the drying step is drying at 100-300 °C, optionally 150-200 °C, for 4-8 h. Optionally, the sintering is performed at 500-800 °C, optionally 650-800 °C, for 4-10 h in an inert gas atmosphere.

In some embodiments, the M⁵PO₄ suspension containing the source of carbon is commercially available, or alternatively, may be prepared by the following method: uniformly mixing a source of element M⁵, a source of phosphorus, and a source of carbon in a solvent, and then heating the reaction mixture to 60-120 °C and maintaining for 2-8 h to obtain the M⁵PO ₄ suspension containing the source of carbon. Optionally, during the preparation of the M⁵PO₄ suspension containing the source of carbon, the pH of the mixture is adjusted to 4-6.

### Battery

A third aspect of embodiments of the present application provides a battery.

The battery mentioned in embodiments of the present application refers to a single physical module including one or more battery cells to provide higher voltage and capacity. For example, the battery mentioned in the present application may include a battery cell, a battery module, a battery pack, or the like.

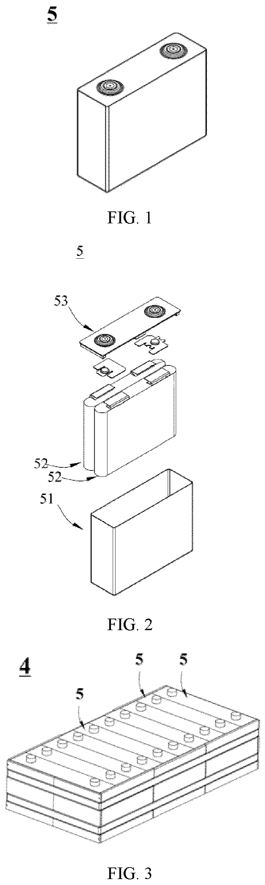

A battery cell is the smallest unit forming a battery and can independently realize the functions of charging and discharging. The present application does not particularly limit the shape of the battery cell, and it may have a cylindrical shape, a prismatic shape, or any other shape. For example, FIG. 1 shows a battery cell 5 having a prismatic structure as one example.

When there are a plurality of battery cells, the plurality of battery cells are connected in series, in parallel, or in series-parallel by a busbar component. In some embodiments, the battery may be a battery module, and when there are a plurality of battery cells, the plurality of battery cells are arranged and fixed to form one battery module. In some embodiments, the battery may be a battery pack. The battery pack includes a case and a battery cell, and the battery cell or the battery module is accommodated in the case. In some embodiments, the case may be a part of the chassis structure of the vehicle. For example, a part of the case may become at least a part of the bottom plate of the vehicle, or a part of the case may become at least a part of a crossmember and a longitudinal member of the vehicle.

In some embodiments, the battery may be an energy storage device. The energy storage device includes an energy storage container, an energy storage electric cabinet, and the like.

The battery cell mentioned in the embodiments of the present application includes a lithium-ion primary battery cell, a lithium-ion secondary battery cell, a lithium metal battery cell, an anode-free lithium metal battery cell, and the like. This is not limited in the embodiments of the present application.

The battery cell generally includes an electrode assembly. The electrode assembly generally includes a positive electrode plate, a negative electrode plate, and a separator located between the positive electrode plate and the negative electrode plate. The electrode assembly may be of a winding structure or a stacked structure. This is not limited in the embodiment of the present application.

The battery cell may further include an outer packaging. The outer packaging may be used for packaging the electrode assembly described above. The outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening communicating with the accommodating cavity, and the cover plate 53 is configured for lidding the opening to close the accommodating cavity. The electrode assembly 52 is packaged in the accommodating cavity. The number of electrode assemblies 52 included in the battery cell 5 may be one or more and may be adjusted as needed.

In some embodiments, the battery cells may be assembled into a battery module. The number of battery cells included in the battery module may be more than one, and the specific number may be adjusted based on the application and capacity of the battery module. FIG. 3 is a schematic view of a battery module 4 as one example. As shown in FIG. 3, in the battery module 4, a plurality of battery cells 5 may be sequentially arranged in a length direction of the battery module 4. Certainly, the arrangement may also be in any other manner. Further, the plurality of battery cells 5 may be fixed by a fastener.

Optionally, the battery module 4 may further include an outer shell having an accommodating space in which the plurality of battery cells 5 are accommodated.

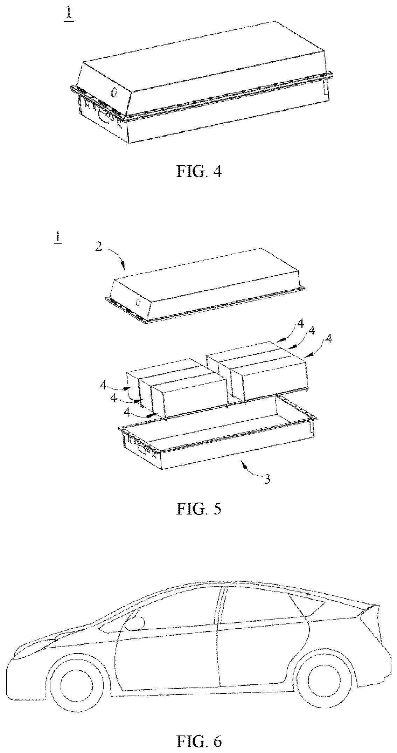

In some embodiments, the above battery module may further be assembled into a battery pack; the number of the battery modules included in the battery pack may be adjusted based on the application and capacity of the battery pack. FIGs. 4 and 5 are schematic views of a battery pack 1 as one example. As shown in FIGs. 4 and 5, the battery pack 1 may include a battery case and a plurality of battery modules 4 disposed in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

### [Positive Electrode Plate]

In some embodiments, the positive electrode plate includes a positive electrode current collector and a positive electrode film layer disposed on at least one surface of the positive electrode current collector. The positive electrode film layer includes a first positive electrode active material, which includes the positive electrode active material according to the first aspect of the embodiments of the present application or a positive electrode active material prepared by the method according to the second aspect of the embodiments of the present application.

The positive electrode current collector is provided with two surfaces opposite to each other in its own thickness direction, and the positive electrode film layer is disposed on any one or both of the two opposite surfaces of the positive electrode current collector.

In some embodiments, the content of the first positive electrode active material in the positive electrode film layer is 10 wt% or more, and optionally 90 wt% to 99.5 wt%, based on the total weight of the positive electrode film layer.

In some embodiments, the positive electrode plate further includes a second positive electrode active material, and the second positive electrode active material is different from the first positive electrode active material.

In some embodiments, the second positive electrode active material includes one or more of LiEᵣCoₛF₍ₗ₋ᵣ₋ₛ₎O₂, spinel-type lithium manganate, and spinel-type lithium titanate, where E includes one or more elements selected from Group VIII, F includes one or more elements selected from Group IIIA and Group VIIB, r is selected from a range of 0-0.9, and the sum of r and s is selected from a range of 0.3-1.

In some embodiments, E includes one or more elements selected from Ni, Fe, Ru, and Rh.

In some embodiments, F includes one or more elements selected from Mn, Al, Ga, and In.

In some embodiments, the second positive electrode active material includes one or more selected from LiNiᵣCoₛMn₍ₗ₋ᵣ₋ₛ₎O₂, LiNiᵣCoₛAl₍ₗ₋ᵣ₋ₛ)O₂, LiCoO₂, spinel-type lithium manganate, and spinel-type lithium titanate, where r is independently selected from 0.3-0.9, and optionally 0.33-0.8, and the sum of r and s is independently selected from 0.3-0.9, and optionally 0.66-0.9.

In some embodiments, the mass ratio of the first active material to the second active material is 1:7 to 7:1, and optionally 1:4 to 4:1.

In some embodiments, in the second positive electrode active material, the ratio of r to (1-r-s) to s in LiNiᵣCoₛMn₍ₗ₋ᵣ₋ₛ₎O₂ is 5:2:3, or 3:1:1, or 8:1:1; and/or the ratio of r to s to (1-r-s) in LiNiᵣCoₛAl₍ₗ₋ᵣ₋ₛ₎O₂ is 5:2:3, or 3:1:1, or 8:1:1.

In some embodiments, the sum of the mass of the first positive electrode active material and the mass of the second positive electrode active material accounts for 88%-98.7% of the mass of the positive electrode plate.

In some embodiments, the positive electrode film layer further optionally includes a positive electrode conductive agent. The present application does not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. The present application does not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate-based resin.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may be selected from at least one of aluminum, an aluminum alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

### [Negative Electrode Plate]

In some embodiments, the negative electrode plate includes a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

The negative electrode active material may be any negative electrode active material known in the art for use in batteries. As an example, the negative electrode active material includes, but is not limited to, at least one of natural graphite, artificial graphite, soft carbon, hard carbon, a silicon-based material, a tin-based material, and lithium titanate. The silicon-based material may include at least one of elemental silicon, an oxide of silicon, a silicon-carbon composite, a silicon-nitrogen composite, and a silicon alloy material. The tin-based material may include at least one of elemental tin, an oxide of tin, and a tin alloy material. However, the present application is not limited to these materials, and other conventional well-known materials that can be used as negative electrode active materials of batteries may also be used. These negative electrode active materials may be used alone or in combination of two or more.

In some embodiments, the negative electrode film layer further optionally includes a negative electrode conductive agent. The present application does not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. The present application does not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include thickeners, such as sodium carboxymethylcellulose (CMC) and PTC thermistor materials.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may be selected from at least one of copper, a copper alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE), and the like.

The negative electrode film layer is generally formed by coating a negative electrode current collector with a negative electrode slurry, drying, and cold pressing. The negative electrode slurry is generally formed by dispersing a negative electrode active material, an optional conductive agent, an optional binder, and other optional auxiliary agents in a solvent and uniformly stirring. The solvent may be N-methylpyrrolidone (NMP) or deionized water, but is not limited thereto.

The negative electrode plate does not exclude additional functional layers other than the negative electrode film layer. For example, in certain embodiments, the negative electrode plate of the present application further includes a conductive bottom coating layer (e.g., composed of a conductive agent and a binder) interposed between the negative electrode current collector and the negative electrode film layer and disposed on the surface of the negative electrode current collector. In some embodiments, the negative electrode plate of the present application further includes a protective layer covering the surface of the negative electrode film layer.

### [Electrolyte]

The present application does not particularly limit the type of the electrolyte, and a choice can be made as needed. For example, the electrolyte may be selected from at least one of a solid-state electrolyte and a liquid-state electrolyte (i.e., an electrolytic solution).

In some embodiments, the electrolyte is an electrolytic solution including an electrolyte salt and a solvent.

The types of the electrolyte salt are not particularly limited, and a choice can be made as needed in practice. In some embodiments, as an example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The types of the solvent are not particularly limited, and a choice can be made as needed in practice. In some embodiments, as an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

### [Separator]

Batteries employing an electrolytic solution, and some batteries employing a solid-state electrolyte, also include a separator. The separator is disposed between the positive electrode plate and the negative electrode plate to primarily prevent the positive and negative electrodes from short-circuiting, while allowing the passage of active ions. The present application does not particularly limit the type of the separator, and any porous-structure separator known to have good chemical stability and mechanical stability may be selected and used.

In some embodiments, the separator may be made of a material including at least one of glass fiber, non-woven fabric, polyethylene, polypropylene, and polyvinylidene difluoride. The separator may be a single-layer film or a multi-layer composite film. When the separator is a multi-layer composite film, the materials of the layers are the same or different.

The method for preparing the battery of the present application is well known. In some embodiments, the positive electrode plate, the separator, the negative electrode plate, and the electrolytic solution may be assembled to form a battery. As an example, the positive electrode plate, the separator, and the negative electrode plate may form an electrode assembly through a winding process and/or a stacking process. The electrode assembly is placed in an outer packaging, dried, and then injected with an electrolytic solution. After undergoing processes such as packaging in vacuum, standing, formation, and shaping, a battery cell is obtained. A plurality of battery cells may be further connected in series or in parallel or in series-parallel to form a battery module. A plurality of battery modules may be further connected in series or in parallel or in series-parallel to form a battery pack. In some embodiments, a plurality of battery cells may also directly constitute a battery pack.

### Electric Device

A fourth aspect of embodiments of the present application provides an electric device. The electric device includes the battery of the present application. The battery may be used as a power source for the electric device, or as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

For an electric device, the specific type of battery may be selected according to its use requirements, such as a battery cell, a battery module, or a battery pack.

FIG. 6 is a schematic view of an electric device as one example. The electric device is a pure electric vehicle, a hybrid electric vehicle, a plug-in hybrid electric vehicle, or the like. To meet the requirements of the electric device for high power and high energy density, a battery pack or a battery module may be used as the power source.

As another example, the electric device may be a mobile phone, a tablet computer, a laptop computer, or the like. The electric device is generally required to be light and thin, and a battery cell may thus be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on weight, and all reagents used in the examples are commercially available or synthesized according to conventional methods and can be used directly without further treatment, and the instruments used in the examples are all commercially available.

### Methods for Testing Performance of Positive Electrode Active Material, Positive Electrode Plate, and Battery

### 1. Method for Measuring Lattice Change Rate

In a constant-temperature environment at 25 °C, a positive electrode active material sample was placed in an X-ray diffractometer (model: Bruker D8 Discover) and tested at 1°/min, and the test data were organized and analyzed; with reference to the standard PDF card, lattice constants a0, b0, c0, and v0 at this moment were calculated (a0, b0, and c0 represent the lengths of a unit cell in all directions, and v0 represents the volume of the unit cell, which can be obtained directly from XRD refinement results).

The positive electrode active material sample was prepared into a coin cell by the method for preparing a coin cell in the examples below, and the coin cell was charged at a low rate of 0.05C until the current decreased to 0.01C. The positive electrode plate in the coin cell was then taken out and soaked in DMC for 8 h. Then, the positive electrode plate was dried and subjected to powder scraping, and particles with a particle size of less than 500 nm were selected. Sampling was performed, and the lattice constant v1 of the sample was calculated in the same way as that for testing a fresh sample as described above. The lattice change rate before and after complete lithium deintercalation, expressed as (v0 - v1)/v0 × 100%, is shown in the Table.

### 2. Method for Measuring Li/Mn Anti-site Defect Concentration

The XRD results obtained from the test in the "Method for Measuring Lattice Change Rate" were compared with the standard crystal's PDF (Powder Diffraction File) card to determine the Li/Mn anti-site defect concentration. Specifically, the XRD results from the test in the "Method for Measuring Lattice Change Rate" were imported into the general structure analysis system (GSAS) software to automatically obtain refinement results, which included the occupancy of different atomic sites. The Li/Mn anti-site defect concentration was then obtained by reading the refinement results.

### 3. Method for Measuring Surface Oxygen Valence State

5 g of a positive electrode active material sample was prepared into a coin cell according to the method for preparing a coin cell in the examples below. The coin cell was charged at a low rate of 0.05C until the current decreased to 0.01C. The positive electrode plate in the coin cell was then taken out and soaked in DMC for 8 h. Then, the positive electrode plate was dried and subjected to powder scraping, and particles with a particle size of less than 500 nm were selected. The obtained particles were measured by electron energy loss spectroscopy (EELS, instrument model: Talos F200S) to obtain an energy loss near-edge structure (ELNES), which reflects the density of states and the energy level distribution of elements. According to the density of states and the energy level distribution, the number of occupied electrons was calculated by integrating the data of the valence band density of states, thereby deriving the surface oxygen valence state after charging.

### 4. Method for Measuring Compaction Density

5 g of a positive electrode active material sample powder was put into a dedicated compaction mold (U.S. CARVER mold, model: 13 mm), and then the mold was placed on a compaction density instrument. A pressure of 3 T (30,000 N) was applied, and the thickness of the powder under the pressure (the thickness after pressure release) was read from the instrument. The area of the test container was 1,540.25 mm², and the compaction density was calculated through ρ = m/v.

### 5. Measurement of Interplanar Spacing and Included Angle:

1 g of positive electrode active material powder was placed in a 50 mL test tube, followed by the addition of 10 mL of ethanol with a mass fraction of 75%. The mixture was thoroughly stirred and dispersed for 30 min. An appropriate amount of the resulting solution was then added dropwise to a 300-mesh copper grid using a clean disposable plastic pipette. In this case, part of the powder would remain on the copper grid. The copper grid with the sample was then transferred to the TEM (Talos F200s G2) sample chamber for testing, yielding original images of the TEM test.

The original images obtained from the above TEM test were opened in Digital Micrograph software, and Fourier transform was performed (automatically completed by the software upon clicking the operation command) to acquire the diffraction pattern. By measuring the distance from the diffraction spots to the central position in the diffraction pattern, the interplanar spacing was determined. The included angle was calculated based on Bragg's equation.

Different substances of the coating layer could be identified by comparing the obtained interplanar spacings and corresponding included angles with their standard values.

### 6. Measurement of Coating Layer Thickness:

The thickness of the coating layer was mainly measured as follows: a thin slice with a thickness of about 100 nm was cut from the middle of a single particle of the positive electrode active material by FIB and then subjected to a TEM test to obtain original images of the TEM test, which was saved in an original image format.

The original image obtained from the above TEM test was opened in Digital Micrograph software, and the carbon coating layer was identified through the lattice spacing and included angle information. The thickness of the carbon coating layer was measured.

The thickness of the selected particle at three locations was measured, and the average value was taken.

### 7. Determination of Molar Ratio of SP2-Type Carbon to SP3-Type Carbon in Coating Layer

The test was performed by Raman spectroscopy. The energy spectrum of the Raman test was subjected to peak deconvolution to obtain Id/Ig, where Id was the peak intensity of SP3-type carbon and Ig was the peak intensity of SP2-type carbon, thereby confirming the molar ratio of the two.

### 8. Crystallinity Measurement of Pyrophosphate and Phosphate

5 g of the positive electrode active material powder was taken and determined for the total scattering intensity through X-rays, where the total scattering intensity is the sum of scattering intensities of substances in the entire space and only relates to the intensity of the primary rays, the chemical structure, and the total number of electrons participating in diffraction (i.e., the mass quantity), but is independent of the sample's ordered state; the crystalline scattering was then separated from the amorphous scattering on the diffraction pattern, where the crystallinity is the ratio of the scattering intensity of the crystalline part to the total scattering intensity.

### 9. Method for Measuring Initial Specific Capacity of Button Battery

At a constant-temperature environment of 25 °C, the button battery was charged to 4.3 V at 0.1C, and then charged at a constant voltage of 4.3 V until the current was less than or equal to 0.05 mA. The button battery was then left to stand for 5 min and discharged to 2.0 V at 0.1C, and the discharge capacity at this point was the initial specific capacity and recorded as D0.

### 10. Testing of Average Discharge Voltage of Coin Cell

At a constant-temperature environment of 25 °C, the button battery was left to stand for 5 min and discharged to 2.5 V at 0.1C. The coin cell was then left to stand for 5 min, charged to 4.3 V at 0.1C, charged at a constant voltage of 4.3 V until the current was less than or equal to 0.05 mA, and then left to stand for 5 min. The coin cell was then discharged to 2.5 V at 0.1C, and the discharge capacity at this point was the initial specific capacity and denoted as D0. The discharge energy was the initial energy and was denoted as E0, and the average discharge voltage V of the coin cell was E0/D0.

### 11. Method for Measuring 3C Charge Constant Current Ratio

At a constant-temperature environment of 25 °C, a fresh full cell was left to stand for 5 min and discharged to 2.5 V at 1/3C. The battery was left to stand for 5 min, charged to 4.3 V at 1/3C, and then charged at a constant voltage of 4.3 V until the current was less than or equal to 0.05 mA. The battery was left to stand for 5 min, and the charge capacity at this point was recorded as C0. The battery was discharged to 2.5 V at 1/3C and left to stand for 5 min, and then charged to 4.3 V at 3C and left to stand for 5 min. The charge capacity at this point was recorded as C1. The 3C charge constant current ratio was C1/CO × 100%.

The higher the 3C charge constant current ratio is, the better the rate capability of the battery is.

### 12. Testing of Cycle Performance of Full Cell at 45 °C

At a constant-temperature environment of 45 °C, a full cell was charged to 4.3 V at 1C and then charged at a constant voltage of 4.3 V until the current was less than or equal to 0.05 mA. The battery was left to stand for 5 min and then discharged to 2.5 V at 1C. The discharge capacity at this point was recorded as E0. The aforementioned charge-discharge cycle was repeated until the discharge capacity dropped to 80% of E0. The number of cycles the battery had undergone at this point was recorded.

### 13. Method for Measuring Dissolution Amount of Mn (as well as Fe Doped at Mn Site) After Cycling

The full cell after cycling at 45 °C until the capacity was reduced to 80% was discharged at a rate of 0.1C to a cut-off voltage of 2.0 V. Then, the battery was disassembled, and the negative electrode plate was taken out. 30 discs with a unit area (1540.25 mm²) were randomly taken from the negative electrode plate, and the inductively coupled plasma optical emission spectrometry (ICP) was tested with Agilent ICP-OES730. Based on the ICP results, the amounts of Fe (if the Mn site of the positive electrode active material was doped with Fe) and Mn were calculated, thereby calculating the dissolution amount of Mn (and Fe doped at Mn site) after cycling. The test standard was in accordance with EPA-6010D-2014.

### 14. Expansion Test of Full Cell at 60 °C

At 60 °C, a full cell with 100% state of charge (SOC) was stored. Before, after, and during the storage, the open-circuit voltage (OCV) and AC internal impedance (IMP) of the battery were measured for monitoring the SOC, and the volume of the battery was measured. After every 48 h of storage, the full cell was taken out and left to stand for 1 h, then the open-circuit voltage (OCV) and the internal impedance (IMP) were measured, and the volume of the full cell was measured by using the water displacement method after the full cell was cooled to room temperature. The water displacement method involved the following: The gravity F₁ of the battery was first measured separately using a balance with automatic unit conversion of displayed reading on the balance, the battery was then completely placed in deionized water (with a density known to be 1 g/cm³), the gravity F₂ of the battery at this point was measured, the buoyancy force F_{buoyancy} applied on the battery was F₁ - F₂, and the volume of the battery was calculated as V = (F₁ - F₂)/(ρ × g) according to the Archimedes' principle F_{buoyancy}= ρ × g × V_{displacement}.

After 30 days of storage, the volume of the battery was measured, and the percentage increase in the volume of the battery after the storage relative to the volume of the battery before the storage was calculated.

### Example I-1-1

### (1) Preparation of positive electrode active material

### S1: Preparation of inner core

0.65 mol of MnSO₄· H₂O, 0.295 mol of FeSO₄· H₂O, 0.005 mol of CoSO₄, 0.05 mol of VCl₂, 0.492 mol of lithium carbonate, 0.005 mol of MgSO₄, an 85% phosphoric acid aqueous solution containing 0.999 mol of phosphoric acid, 0.001 mol of H₂SO₄, and 0.0025 mol of NH₄HF₂ were ground in a ball mill for 6 h at a rotation speed of 400 r/min, and the obtained material was dried at 120 °C. Then, the powder described above was sintered at 700 °C for 10 h in a nitrogen (90% by volume) + hydrogen (10% by volume) protective atmosphere to obtain an inner core.

The inner core included a core and a first region formed on at least a part of the surface of the core. The first region was discontinuous (e.g., in the form of dots or islands) and included an oxide of V (mainly including V₂O₅), and can be measured by neutron diffraction, a spherical aberration-corrected scanning transmission electron microscope, and electron energy loss spectroscopy. The mass concentration W₁ of the element V in the first region and the mass concentration W₂ of the element V in the core can be measured according to the method described above. The test instrument may be a Thermo Fisher Scientific double spherical aberration-corrected transmission electron microscope Spectra 300.

The composition of the inner core was Li_{0.984}Mg_{0.005}Mn_{0.65}Fe_{0.295}V_{0.05}Co_{0.005}P_{0.999}S_{0.001}O_{3.995}F_{0.005}, which can be measured by inductively coupled plasma optical emission spectrometry (ICP). The test instrument may be a Perkin Elmer 7000DV.

### S2: Preparation of a coating layer

Sucrose was dissolved in deionized water. The mixture was then stirred for thorough dissolution to obtain a sucrose aqueous solution. The material of the inner core was added to the sucrose solution, and the mixture was stirred and mixed for 6 h. After being mixed well, the mixture was dried in an oven at 150 °C for 6 h and then sintered at 700 °C for 10 h to obtain a positive electrode active material, which included an inner core and a shell coating the inner core. The coating amount of the shell material can be adjusted by adjusting the amount of sucrose used.

### (2) Preparation of button battery

The positive electrode active material described above, polyvinylidene difluoride (PVDF), and acetylene black were added to N-methylpyrrolidone (NMP) in a weight ratio of 90:5:5, and the mixture was stirred in a drying room to form a slurry. An aluminum foil was coated with the slurry described above, followed by drying and cold pressing to prepare a positive electrode plate. The coating amount was 0.2 g/cm², and the compaction density was 2.0 g/cm³.

A lithium foil was used as the negative electrode, and a solution of 1 mol/L LiPF₆ in ethylene carbonate (EC), diethyl carbonate (DEC), and dimethyl carbonate (DMC), which were in a volume ratio of 1:1:1, was used as the electrolytic solution. The negative electrode and the electrolytic solution were assembled with the positive electrode plate prepared above to form a button battery (hereinafter referred to as "coin cell") in a glove box for coin cell assembly.

### (3) Preparation of full cell

The positive electrode active material described above, the conductive agent acetylene black, and the binder polyvinylidene difluoride (PVDF) were well mixed at a weight ratio of 92:2.5:5.5 in an N-methylpyrrolidone solvent system, and an aluminum foil was then coated with the mixture, followed by drying and cold pressing to obtain a positive electrode plate. The coating amount was 0.4 g/cm², and the compaction density was 2.4 g/cm³.

The negative electrode active material artificial graphite, the hard carbon, the conductive agent acetylene black, the binder styrene-butadiene rubber (SBR), and the thickener sodium carboxymethylcellulose (CMC) were well mixed at a weight ratio of 90:5:2:2:1 in deionized water, and a copper foil was then coated with the mixture, followed by drying and cold pressing to obtain a negative electrode plate. The coating amount was 0.2 g/cm², and the compaction density was 1.7 g/cm³.

A thin polyethylene (PE) porous polymer film was used as the separator, and the positive electrode plate, the separator, and the negative electrode plate were stacked in sequence, with the separator positioned between the positive and negative electrodes for isolation. The stack was then wound to obtain an electrode assembly. The electrode assembly was placed in an outer packaging, and the electrolytic solution same as that used in the preparation of the coin cell described above was injected and packaged to obtain a full cell (hereinafter referred to as "complete cell").

### Examples I-1-2 to I-1-10

The preparation methods for the coin cell and the complete cell were similar to those in Example 1-1-1, except that the process parameters for preparing the inner core of the positive electrode active material were changed. See Table 1 for details.

**Table 1**

| No. | Elemental composition of inner core | Grinding rotation speed | Grinding time | Sintering temperature | Sintering time | First region | Mass concentration W₂ of V in the core | Mass concentration W₁ of V in the first region | W₁/W₂ |
|---|---|---|---|---|---|---|---|---|---|
| Example I-1-1 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 700°C | 10h | V oxide | 0.31% | 26.51% | 86 |
| Example I-1-2 | Li_{0.984}Mg_{0.005}Mn_{0.65}Fe_{0.295}V_{0.05}Co_{0.005}P_{0.999}S_{0.001}O_{3.995}F_{0.005} | 400r/min | 2h | 700°C | 10h | V oxide | 0.22% | 28.22% | 128 |
| Example I-1-3 | Li_{0.984}Mg_{0.005}Mn_{0.65}Fe_{0.295}V_{0.05}Co_{0.005}P_{0.999}S_{0.001}O_{3.995}F_{0.005} | 400r/min | 10h | 700°C | 10h | V oxide | 0.38% | 25.18% | 66 |
| Example I-1-4 | Li_{0.984}Mg_{0.005}Mn_{0.65}Fe_{0.295}V_{0.05}Co_{0.005}P_{0.999}S_{0.001}O_{3.995}F_{0.005} | 400r/min | 14h | 700°C | 10h | V oxide | 0.41% | 24.61% | 60 |
| Example I-1-5 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 600°C | 10h | V oxide | 0.23% | 28.03% | 122 |
| Example I-1-6 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 650°C | 10h | V oxide | 0.24% | 27.84% | 116 |
| Example I-1-7 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 750°C | 10h | V oxide | 0.36% | 25.56% | 71 |
| Example I-1-8 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 800°C | 10h | V oxide | 0.38% | 25.18% | 66 |
| Example I-1-9 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 700°C | 6h | V oxide | 0.24% | 27.84% | 116 |
| Example I-1-10 | Li_{0.984}Mg_{0.005}Mn_{0.65}Fe_{0.295}V_{0.05}Co_{0.005}P_{0.999}S_{0.001}O_{3.995}F_{0.005} | 400r/min | 6h | 700°C | 15h | V oxide | 0.36% | 25.56% | 71 |

**Table 2**

| No. | Lattice change rate (%) | Li/Mn anti-site defect concentration (%) | Surface oxygen valence state | Compaction density (g/cm³) | 0.1C coin cell capacity (mAh/g) | 3C charge constant current ratio (%) | Volume expansion rate after 30 days of storage at 60 °C (%) | Cycle number at 80% capacity retention rate under 45 °C | Dissolution amount of Mn&Fe after cycling (ppm) |
|---|---|---|---|---|---|---|---|---|---|
| Example I-1-1 | 2.32 | 0.54 | -1.96 | 2.37 | 153.8 | 88.4 | 6.7 | 1064 | 101 |
| Example I-1-2 | 2.54 | 0.61 | -1.97 | 2.37 | 151.2 | 86.6 | 6.8 | 1112 | 89 |
| Example I-1-3 | 2.68 | 0.46 | -1.95 | 2.38 | 150.8 | 84.3 | 6.7 | 1102 | 121 |
| Example I-1-4 | 2.79 | 0.54 | -1.95 | 2.38 | 146.5 | 78.5 | 6.5 | 1045 | 95 |
| Example I-1-5 | 2.11 | 0.61 | -1.95 | 2.38 | 151.1 | 86.5 | 6.2 | 1068 | 96 |
| Example I-1-6 | 2.57 | 0.57 | -1.96 | 2.37 | 152.3 | 87.0 | 5.9 | 1064 | 115 |
| Example I-1-7 | 2.64 | 0.43 | -1.94 | 2.38 | 152.5 | 86.4 | 7.1 | 989 | 145 |
| Example I-1-8 | 2.68 | 0.39 | -1.96 | 2.38 | 153.5 | 88.2 | 6.8 | 1121 | 79 |
| Example I-1-9 | 2.57 | 0.68 | -1.96 | 2.37 | 147.8 | 80.8 | 6.9 | 1084 | 101 |
| Example I-1-10 | 2.61 | 0.43 | -1.96 | 2.38 | 152.2 | 87.2 | 7.2 | 1085 | 105 |

It can be seen from Table 1 and Table 2 that when the mass contents of all the elements V in the inner core are the same, the mass concentration W₁ of the element V in the first region and the mass concentration W₂ of the element V in the core can be adjusted to be within an appropriate range by adjusting one or more of the grinding rotation speed, the grinding time, the sintering temperature, the sintering time, and the like. As the grinding rotation speed increases, the mass concentration W₂ of the element V in the core increases, and the mass concentration W₁ of the element V in the first region decreases. As the grinding time increases, the mass concentration W₂ of the element V in the core increases, and the mass concentration W₁ of the element V in the first region decreases. As the sintering temperature increases, the mass concentration W₂ of the element V in the core increases, and the mass concentration W₁ of the element V in the first region decreases. As the sintering time increases, the mass concentration W₂ of the element V in the core increases, and the mass concentration W₁ of the element V in the first region decreases.

### Examples I-2-1 to I-2-33

The preparation methods for the coin cell and the complete cell were similar to those in Example 1-1-1, except that the process for preparing the inner core of the positive electrode active material was changed. For example, at least one of the type and/or concentration of the starting material, the grinding parameter, the sintering parameter, and the like was changed. Those skilled in the art can make appropriate adjustments within the ranges given above on the basis of Example I-1-1. See Table 3 for details of the composition of the inner core of the positive electrode active material.

### Comparative Example I-1

The preparation methods for the coin cell and the complete cell were similar to those in Example I-1-1, except that the process for preparing the positive electrode active material was changed.

Preparation of manganese oxalate: 1 mol of MnSO₄· H ₂ O was added into a reaction kettle, and 10 L of deionized water and 1 mol of oxalic acid dihydrate (calculated based on oxalic acid) were added. The reaction kettle was heated to 80 °C, and the mixture was stirred at a rotation speed of 600 rpm for 6 h until the reaction was terminated (no bubble was generated) to obtain a manganese oxalate suspension. The suspension was then filtered, and the filter cake was dried at 120 °C and then ground to obtain manganese oxalate particles with a median particle size Dv₅₀ of about 50-200 nm.

Preparation of lithium manganese phosphate: 1 mol of the manganese oxalate particles described above, 0.5 mol of lithium carbonate, 85% phosphoric acid aqueous solution containing 1 mol of phosphoric acid, and 0.005 mol of sucrose were added to 20 L of deionized water. The mixture was transferred to a sand mill and thoroughly ground and stirred for 10 h to obtain a slurry. The slurry was transferred to a spray dryer for spray drying and granulation. The drying temperature was set at 250 °C, and the drying was performed for 4 h to obtain particles. The powder described above was sintered at 700 °C for 10 h in a nitrogen (90% by volume) + hydrogen (10% by volume) protective atmosphere to obtain carbon-coated LiMnPO₄.

### Comparative Example I-2

Except that 1 mol of MnSO₄·H₂O in Comparative Example **I-1** was replaced with 0.85 mol of MnSO₄· H₂O and 0.15 mol of FeSO₄· H₂O, and the materials were thoroughly mixed for 6 h in a mixer and then added into the reaction kettle, the rest was the same as that of Comparative Example I-1. The composition of the inner core was LiMn_{0.85}Fe_{0.15}PO₄, and the coating layer included carbon.

### Comparative Example I-3

Except that 1 mol of MnSO₄·H₂O in Comparative Example **I-1** was replaced with 0.70 mol of MnSO₄· H₂O, 0.295 mol of FeSO₄· H₂O, and 0.005 mol of VCl₂, and the materials were thoroughly mixed for 6 h in a mixer and then added into the reaction kettle, the rest was the same as that of Comparative Example I-1. The composition of the inner core was LiMn_{0.70}Fe_{0.295}V_{0.005}PO₄, and the coating layer included carbon.

**Table 3**

| No. | Elemental composition of inner core | First region | Mass concentration W₂ of V in the core | Mass concentration W₁ of V in the first region | W₁/W₂ |
|---|---|---|---|---|---|
| Example I-2-1 | Li_{0.993}Nb_{0.001}Mn_{0.65}Fe_{0.345}V_{0.005}P_{0.999}S_{0.001}O_{3.999}F_{0.001} | V oxide | 0.15% | 0.35% | 2.3 |
| Example I-2-2 | Li_{0.993}Nb_{0.001}Mn_{0.65}Fe_{0.34}V_{0.005}M_{0.005}P_{0.999}S_{0.001}O_{3.999}F_{0.001} | V oxide | 0.15% | 0.35% | 2.3 |
| Example I-2-3 | Li_{0.993}Nb_{0.001}Mn_{0.65}Fe_{0.34}V_{0.005}Co_{0.005}P_{0.999}S_{0.001}O_{3.999}F_{0.001} | V oxide | 0.15% | 0.35% | 2.3 |
| Example I-2-4 | Li_{0.993}Nb_{0.001}Mn_{0.65}Fe_{0.34}V_{0.005}Ni_{0.005}P_{0.999}S_{0.001}O_{3.999}F_{0.001} | V oxide | 0.15% | 0.35% | 2.3 |
| Example I-2-5 | Li_{0.995}Nb_{0.001}Mn_{0.65}Fe_{0.34}V_{0.005}Mg_{0.005}P_{0.999}Si_{0.001}O_{3.999}Br_{0.001} | V oxide | 0.15% | 0.35% | 2.3 |
| Example I-2-6 | Li_{0.998}Mg_{0.001}Mn_{0.65}Fe_{0.345}V_{0.005}P_{0.999}Si_{0.001}O_{3.999}Br_{0.001} | V oxide | 0.15% | 0.35% | 2.3 |
| Example I-2-7 | Li_{0.997}Mg_{0.001}Mn_{0.68}Fe_{0.3}V_{0.02}P_{0.999}N_{0.001}O_{3.999}F_{0.001} | V oxide | 0.32% | 6.59% | 20.6 |
| Example I-2-8 | Li_{0.997}Mg_{0.001}Mn_{0.58}Fe_{0.4}V_{0.02}P_{0.999}N_{0.001}O_{3.999}F_{0.001} | V oxide | 0.31% | 6.79% | 21.9 |
| Example I-2-9 | Li_{0.997}Mg_{0.001}Mn_{0.65}Fe_{0.3}V_{0.05}P_{0.999}N_{0.001}O_{3.999}F_{0.001} | V oxide | 0.30% | 26.75% | 89.2 |
| Example I-2-10 | Li_{0.988}Mg_{0.005}Mn_{0.6}Fe_{0.35}V_{0.05}P_{0.999}S_{0.001}O_{3.999}F_{0.001} | V oxide | 0.31% | 26.56% | 85.7 |
| Example I-2-11 | Li_{0.984}Mg_{0.005}Mn_{0.6}Fe_{0.35}V_{0.05}P_{0.995}S_{0.005}O_{3.999}F_{0.001} | V oxide | 0.31% | 26.23% | 84.6 |
| Example I-2-12 | Li_{0.984}Mg_{0.005}Mn_{0.6}Fe_{0.35}V_{0.05}P_{0.999}S_{0.001}O_{3.995}F_{0.005} | V oxide | 0.31% | 26.59% | 85.8 |
| Example I-2-13 | Li_{0.984}Mg_{0.005}Mn_{0.65}Fe_{0.25}V_{0.05}Co_{0.05}P_{0.999}S_{0.001}O_{3.995}F_{0.005} | V oxide | 0.31% | 25.82% | 83.3 |
| Example I-2-14 | Li_{0.984}Mg_{0.005}Mn_{0.75}Fe_{0.05}V_{0.05}Co_{0.15}P_{0.999}S_{0.001}O_{3.995}F_{0.005} | V oxide | 0.30% | 27.65% | 92.2 |
| Example I-2-15 | Li_{0.984}Mg_{0.005}Mn_{0.65}Fe_{0.25}V_{0.05}Ni_{0.05}P_{0.999}S_{0.001}O_{3.995}F_{0.005} | V oxide | 0.31% | 26.50% | 85.5 |
| Example I-2-16 | Li_{0.984}Mg_{0.005}Mn_{0.75}Fe_{0.10}V_{0.05}Ni_{0.10}P_{0.999}S_{0.001}O_{3.995}F_{0.005} | V oxide | 0.31% | 25.88% | 83.5 |
| Example I-2-17 | Li_{0.984}Mg_{0.005}Mn_{0.7}Fe_{0.15}V_{0.05}Co_{0.10}P_{0.999}S_{0.001}O_{3.995}F_{0.005} | V oxide | 0.32% | 26.37% | 82.4 |
| Example I-2-18 | Li_{0.984}Mg_{0.005}Mn_{0.6}Fe_{0.25}V_{0.05}Co_{0.10}P_{0.999}S_{0.001}O_{3.995}F_{0.005} | V oxide | 0.31% | 26.58% | 85.7 |
| Example I-2-19 | Li_{0.984}Mg_{0.005}Mn_{0.5}Fe_{0.35}V_{0.05}Co_{0.10}P_{0.999}S_{0.001}O_{3.995}F_{0.005} | V oxide | 0.31% | 26.48% | 85.4 |
| Example I-2-20 | Li_{1.01}Mg_{0.005}Mn_{0.7}Fe_{0.15}V_{0.05}Co_{0.10}P_{0.9}Si_{0.1}O_{3.92}F_{0.08} | V oxide | 0.31% | 25.95% | 83.7 |
| Example I-2-21 | Li_{0.97}Mg_{0.005}Mn_{0.7}Fe_{0.15}V_{0.05}Co_{0.10}P_{0.92}Si_{0.08}O_{3.9}F_{0.1} | V oxide | 0.31% | 26.56% | 85.7 |
| Example I-2-22 | Li_{0.9}Mg_{0.05}Mn_{0.6}Fe_{0.395}V_{0.005}P_{0.9}Si_{0.1}O_{3.9}F_{0.1} | V oxide | 0.15% | 0.35% | 2.3 |
| Example I-2-23 | Li_{1.1}Mg_{0.001}Mn_{0.6}Fe_{0.395}V_{0.005}P_{0.9}Si_{0.1}O_{3.998}F_{0.002} | V oxide | 0.15% | 0.35% | 2.3 |
| Example I-2-24 | Li_{0.9}Mg_{0.1}Mn_{0.6}Fe_{0.395}V_{0.005}P_{0.95}Si_{0.05}O_{3.95}F_{0.05} | V oxide | 0.15% | 0.35% | 2.3 |
| Example I-2-25 | Li_{0.85}Mg_{0.075}Mn_{0.60}Fe_{0.393}V_{0.004}Co_{0.003}P_{0.999}S_{0.001}O₄ | V oxide | 0.12% | 0.32% | 2.7 |
| Example I-2-26 | Li_{1.15}Mn_{0.60}Fe_{0.393}V_{0.004}Co_{0.003}P_{0.999}S_{0.001}O₄ | V oxide | 0.12% | 0.32% | 2.7 |
| Example I-2-27 | Li_{0.997}Mg_{0.001}Mn_{0.68}Fe_{0.3}V_{0.02}PO_{3.999}F_{0.001} | V oxide | 0.31% | 7.19% | 23.2 |
| Example I-2-28 | Li_{0.997}Mg_{0.001}Mn_{0.68}Fe_{0.3}V_{0.02}P_{0.999}N_{0.001}O₄ | V oxide | 0.30% | 7.28% | 24.3 |
| Example I-2-29 | Li_{0.998}Mn_{0.68}Fe_{0.3}V_{0.02}PO_{3.999}F_{0.001} | V oxide | 0.32% | 6.92% | 21.6 |
| Example I-2-30 | Li_{0.998}Mn_{0.64}Fe_{0.3}V_{0.06}PO_{3.999}F_{0.001} | V oxide | 0.29% | 55.5% | 191 |
| Example I-2-31 | Li_{0.998}Mn_{0.63}Fe_{0.3}V_{0.07}PO_{3.999}F_{0.001} | V oxide | 0.16% | 70.5% | 441 |
| Example I-2-32 | Li_{0.998}Mn_{0.62}Fe_{0.3}V_{0.08}PO_{3.999}F_{0.001} | V oxide | 0.10% | 83.3% | 833 |
| Example I-2-33 | Li_{0.998}Mn_{0.60}Fe_{0.3}V_{0.10}PO_{3.999}F_{0.001} | V oxide | 0.041% | 80.0% | 1951 |

**Table 4**

| No. | Lattice change rate (%) | Li/Mn anti-site defect concentration (%) | Surface oxygen valence state | Compaction density (g/cm³) | 0.1C coin cell capacity (mAh/g) | 3C charge constant current ratio (%) | Volume expansion rate after 30 days of storage at 60 °C (%) | Cycle number at 80% capacity retention rate under 45 °C | Dissolution amount of Mn&Fe after cycling (ppm) |
|---|---|---|---|---|---|---|---|---|---|
| Comparative Example I-1 | 11.40 | 5.2 | -1.55 | 1.7 | 125.6 | 50.1 | 48.6 | 121 | 2060 |
| Comparative Example I-2 | 10.60 | 4.3 | -1.51 | 1.87 | 126.4 | 50.4 | 37.3 | 129 | 1510 |
| Comparative Example I-3 | 4.30 | 2.8 | -1.82 | 1.69 | 151.2 | 56.3 | 8.4 | 551 | 1096 |
| Example I-2-1 | 5.45 | 0.67 | -1.97 | 2.41 | 153.0 | 84.4 | 7.6 | 786 | 97 |
| Example I-2-2 | 2.42 | 0.70 | -1.95 | 2.46 | 156.9 | 92.3 | 6.3 | 760 | 85 |
| Example I-2-3 | 2.33 | 0.56 | -1.95 | 2.47 | 157.8 | 94.2 | 6.3 | 872 | 83 |
| Example I-2-4 | 3.51 | 0.51 | -1.97 | 2.51 | 156.7 | 93.2 | 6.2 | 741 | 76 |
| Example I-2-5 | 4.08 | 0.62 | -1.98 | 2.46 | 155.0 | 91.1 | 6.5 | 652 | 97 |
| Example I-2-6 | 3.62 | 0.67 | -1.96 | 2.45 | 155.1 | 92.0 | 6.4 | 602 | 106 |
| Example I-2-7 | 7.46 | 0.52 | -1.96 | 2.44 | 152.3 | 96.0 | 6.7 | 967 | 88 |
| Example I-2-8 | 7.55 | 0.43 | -1.97 | 2.47 | 156.1 | 85.2 | 7.7 | 970 | 80 |
| Example I-2-9 | 7.73 | 0.56 | -1.95 | 2.47 | 154.5 | 85.1 | 6.7 | 1088 | 84 |
| Example I-2-10 | 6.36 | 0.52 | -1.97 | 2.48 | 155.6 | 82.1 | 7.3 | 954 | 83 |
| Example I-2-11 | 5.45 | 0.70 | -1.95 | 2.45 | 155.5 | 87.5 | 8.2 | 944 | 84 |
| Example I-2-12 | 4.22 | 0.61 | -1.97 | 2.42 | 155.6 | 91.7 | 7.4 | 935 | 85 |
| Example I-2-13 | 2.45 | 0.41 | -1.96 | 2.46 | 156.4 | 93.2 | 6.4 | 1075 | 81 |
| Example I-2-14 | 2.58 | 0.42 | -1.95 | 2.45 | 154.1 | 93.0 | 7.2 | 991 | 82 |
| Example I-2-15 | 3.22 | 0.56 | -1.93 | 2.45 | 155.1 | 91.0 | 6.3 | 1006 | 79 |
| Example I-2-16 | 3.14 | 0.52 | -1.95 | 2.46 | 156.6 | 91.1 | 6.2 | 980 | 73 |
| Example I-2-17 | 2.77 | 0.58 | -1.96 | 2.44 | 151.2 | 84.3 | 5.8 | 879 | 64 |
| Example I-2-18 | 2.51 | 0.48 | -1.98 | 2.44 | 151.4 | 90.1 | 5.6 | 994 | 62 |
| Example I-2-19 | 2.20 | 0.42 | -1.97 | 2.46 | 152.4 | 92.1 | 5.2 | 1005 | 55 |
| Example I-2-20 | 3.38 | 0.57 | -1.95 | 2.27 | 147.1 | 92.2 | 9.3 | 996 | 43 |
| Example I-2-21 | 2.64 | 0.51 | -1.97 | 2.29 | 145.5 | 91.5 | 10.1 | 957 | 40 |
| Example I-2-22 | 5.09 | 2.22 | -1.84 | 2.25 | 152.3 | 66.7 | 7.6 | 577 | 88 |
| Example I-2-23 | 4.86 | 2.03 | -1.83 | 2.24 | 156.6 | 67.2 | 8.0 | 567 | 105 |
| Example I-2-24 | 4.78 | 2.41 | -1.82 | 2.21 | 152.6 | 65.8 | 7.4 | 572 | 92 |
| Example I-2-25 | 3.53 | 0.83 | -1.96 | 2.42 | 149.4 | 64.2 | 4.4 | 776 | 77 |
| Example I-2-26 | 2.78 | 1.22 | -1.98 | 2.40 | 156.3 | 74.5 | 5.3 | 864 | 75 |
| Example I-2-27 | 2.45 | 2.12 | -1.97 | 2.42 | 155.3 | 88.9 | 6.1 | 940 | 74 |
| Example I-2-28 | 2.34 | 1.78 | -1.96 | 2.44 | 156.4 | 92.3 | 5.4 | 882 | 71 |
| Example I-2-29 | 2.56 | 1.71 | -1.96 | 2.43 | 157.1 | 96.8 | 6.5 | 1116 | 78 |
| Example I-2-30 | 2.46 | 1.71 | -1.96 | 2.43 | 155.1 | 94.7 | 5.9 | 1115 | 68 |
| Example I-2-31 | 2.52 | 1.69 | -1.96 | 2.42 | 152.8 | 95.4 | 6.1 | 1201 | 57 |
| Example I-2-32 | 2.52 | 1.68 | -1.96 | 2.44 | 153.1 | 94.3 | 6.7 | 1116 | 39 |
| Example I-2-33 | 5.74 | 2.72 | -1.98 | 2.43 | 135.1 | 86.8 | 6.3 | 697 | 228 |

As can be seen from Table 3 and Table 4, by allowing both the core and the first region of the inner core of the positive electrode active material to include the element V and allowing the mass concentration W₁ of the element V in the first region to be greater than the mass concentration W₂ of the element V in the core, the dissolution of metal ions (particularly manganese ions) can be better reduced, the oxidative decomposition of the electrolytic solution on the surface of the positive electrode active material can be reduced, and the impact on the capacity of the positive electrode active material can also be reduced. Thus, the cycle performance and storage performance of the battery can be improved.

In Comparative Example I-3, the positive electrode active material was prepared by using a liquid phase method, so that the element V was uniformly doped in the lattice of lithium manganese iron phosphate.

As can be seen from Table 3 and Table 4, the positive electrode active materials with different elementary compositions and different content of elements have different battery performance improvement effects.

As can be seen from Tables 3 and 4, by adjusting the ratio W₁/W₂ of the mass concentration W₁ of the element V in the first region to the mass concentration W₂ of the element V in the core to be within an appropriate range, the overall performance of the battery can be further improved.

### Example 11-1-1

The preparation methods for the coin cell and the complete cell were similar to those in Example I-1-1, except that the process for preparing the positive electrode active material was changed.

### (1) Preparation of positive electrode active material

### S1: Preparation of inner core

0.60 mol of MnSO₄· H₂O, 0.387 mol of FeSO₄· H₂O, 0.003 mol of CoSO₄, 0.01 mol of VCl₂, 0.4995 mol of lithium carbonate, an 85% phosphoric acid aqueous solution containing 0.999 mol of phosphoric acid, and 0.001 mol of H₂SO₄ were ground in a ball mill for 6 h at a rotation speed of 400 r/min, and the obtained material was dried at 120 °C. Then, the powder described above was sintered at 700 °C for 10 h in a nitrogen (90% by volume) + hydrogen (10% by volume) protective atmosphere to obtain an inner core.

The inner core included a core and a first region formed on at least a part of the surface of the core. The first region was discontinuous (e.g., in the form of dots or islands) and included an oxide of V (mainly including V₂O₅).

The composition of the inner core was Li_{0.999}Mn_{0.60}Fe_{0.387}V_{0.01}Co_{0.003}P_{0.999}S_{0.001}O₄.

### S2: Preparation of a coating layer

Preparation of lithium iron pyrophosphate powder: 4.77 g of lithium carbonate, 7.47 g of ferrous carbonate, 14.84 g of ammonium dihydrogen phosphate, and 1.3 g of oxalic acid dihydrate were dissolved in 50 mL of deionized water. The pH of the mixture was 5, and the mixture was stirred for 2 h to react thoroughly. The solution obtained after the reaction was then heated to 80 °C and maintained at this temperature for 4 h to obtain a suspension containing Li₂FeP₂O₇. The suspension was filtered, washed with deionized water, and dried at 120 °C for 4 h to obtain a powder. The powder was sintered at 650 °C for 8 h in a nitrogen atmosphere, naturally cooled to room temperature, and then ground to obtain a Li₂FeP₂O₇ powder.

Preparation of lithium iron phosphate suspension: 11.1 g of lithium carbonate, 34.8 g of ferrous carbonate, 34.5 g of ammonium dihydrogen phosphate, 1.3 g of oxalic acid dihydrate, and 74.6 g of sucrose (calculated based on C₁₂H₂₂O₁₁, the same applies hereinafter) were dissolved in 150 mL of deionized water to obtain a mixture, and the mixture was stirred for 6 h to react thoroughly. The solution obtained after the reaction was then heated to 120 °C and maintained at this temperature for 6 h to obtain a suspension containing LiFePO₄.

The inner core described above and a proper amount of lithium iron pyrophosphate (Li₂FeP₂O₇) powder were added to a proper amount of lithium iron phosphate (LiFePO₄) suspension. The mixture was stirred and mixed well, and dried in a vacuum oven at 150 °C for 6 h. The resulting product was then dispersed by sand-milling. After dispersion, the resulting product was sintered at 700 °C for 6 h in a nitrogen atmosphere to obtain the target product, i.e., the double-layer coated lithium manganese phosphate positive electrode active material. The coating amounts of the first coating layer and the second coating layer are shown in Table 5, both based on the weight of the inner core.

### Example II-1-2

The conditions were the same as those in Example II-1-1, except that the sintering temperature was 550 °C and the sintering time was 1 h in the powder sintering step during the preparation of lithium iron pyrophosphate (Li₂FeP₂O₇) to control the crystallinity of Li₂FeP₂O₇ to be 30%, and the sintering temperature was 650 °C and the sintering time was 2 h in the coating and sintering step during the preparation of lithium iron phosphate (LiFePO₄) to control the crystallinity of LiFePO₄ to be 30%.

### Example II-1-3

The conditions were the same as those in Example II-1-1, except that the sintering temperature was 550 °C and the sintering time was 2 h in the powder sintering step during the preparation of lithium iron pyrophosphate (Li₂FeP₂O₇) to control the crystallinity of Li₂FeP₂O₇ to be 50%, and the sintering temperature was 650 °C and the sintering time was 3 h in the coating and sintering step during the preparation of lithium iron phosphate (LiFePO₄) to control the crystallinity of LiFePO₄ to be 50%.

### Example II-1-4

The conditions were the same as those in Example II-1-1, except that the sintering temperature was 600 °C and the sintering time was 3 h in the powder sintering step during the preparation of lithium iron pyrophosphate (Li₂FeP₂O₇) to control the crystallinity of Li₂FeP₂O₇ to be 70%, and the sintering temperature was 650 °C and the sintering time was 4 h in the coating and sintering step during the preparation of lithium iron phosphate (LiFePO₄) to control the crystallinity of LiFePO₄ to be 70%.

### Example II-2-1:

The conditions were the same as those in Example II-1-1, except that the preparation process of the coating layer was different.

Preparation of lithium iron pyrophosphate powder: 4.77 g of lithium carbonate, 7.47 g of ferrous carbonate, 14.84 g of ammonium dihydrogen phosphate, and 1.3 g of oxalic acid dihydrate were dissolved in 50 mL of deionized water. The pH of the mixture was 5, and the mixture was stirred for 2 h to react thoroughly. The solution obtained after the reaction was then heated to 80 °C and maintained at this temperature for 4 h to obtain a suspension containing Li₂FeP₂O₇. The suspension was filtered, washed with deionized water, and dried at 120 °C for 4 h to obtain a powder. The powder was sintered at 650 °C for 8 h in a nitrogen atmosphere, naturally cooled to room temperature, and then ground to obtain a Li₂FeP₂O₇ powder.

Preparation of a suspension containing aluminum oxide and sucrose: 47.1 g of nano-Al₂O₃ (with a particle size of about 20 nm) and 74.6 g of sucrose (calculated based on C₁₂H₂₂O₁₁; the same applies hereinafter) were dissolved in 1500 mL of deionized water, and the mixture was thoroughly mixed by stirring for 6 h. The resulting solution was then heated to 120 °C and maintained at this temperature for 6 h to obtain a suspension containing aluminum oxide and sucrose.

The inner core described above and a proper amount of lithium iron pyrophosphate (Li₂FeP₂O₇) powder were added to the suspension containing aluminum oxide and sucrose described above. The mixture was stirred and mixed well, and dried in a vacuum oven at 150 °C for 6 h. The resulting product was then dispersed by sand-milling. After dispersion, the resulting product was sintered at 700 °C for 6 h in a nitrogen atmosphere to obtain the target product, i.e., the double-layer coated lithium manganese phosphate positive electrode active material. The coating amounts of the first coating layer and the second coating layer are shown in Table 7, both based on the weight of the inner core.

**Table 5**

| No. | Elemental composition of inner core | First region | Mass concentration W₂ of V in the core | Mass concentration W₁ of V in the first region | W₁/W₂ | First coating layer | Second coating layer | Crystallinity of pyrophosphate and phosphate |
|---|---|---|---|---|---|---|---|---|
| Example II-1-1 | Li_{0.999}Mn_{0.60}Fe_{0.38 7}V_{0.01}Co_{0.003}P_{0.999} S_{0.001}O₄ | V oxide | 0.195% | 2.80% | 14.4 | 1% Li₂FeP₂ O₇/3% LiFePO₄ | 2% carbon | 100% |
| Example II-1-2 | Li_{0.999}Mn_{0.60}Fe_{0.38 7}V_{0.01}Co_{0.003}P_{0.999} S_{0.001}O₄ | V oxide | 0.198% | 2.68% | 13.5 | 1% Li₂FeP₂ O₇/3% LiFePO₄ | 2% carbon | 30% |
| Example II-1-3 | Li_{0.999}Mn_{0.60}Fe_{0.38 7}V_{0.01}Co_{0.003}P_{0.999} S_{0.001}O₄ | V oxide | 0.204% | 2.61% | 12.8 | 1% Li₂FeP₂ O₇/3% LiFePO₄ | 2% carbon | 50% |
| Example II-1-4 | Li_{0.999}Mn_{0.60}Fe_{0.38 7}V_{0.01}Co_{0.003}P_{0.999} S_{0.001}O₄ | V oxide | 0.196% | 2.78% | 14.3 | 1% Li₂FeP₂ O₇/3% LiFePO₄ | 2% carbon | 70% |

**Table 6**

| No. | Lattice change rate (%) | Li/Mn anti-site defect concentration (%) | Surface oxygen valence state | 0.1C coin cell capacity (mAh/g) | Average discharge voltage of coin cell (V) | Volume expansion rate after 30 days of storage at 60 °C (%) | Cycle number at 80% capacity retention rate under 45 °C | Dissolution amount of Mn&Fe after cycling (ppm) |
|---|---|---|---|---|---|---|---|---|
| Example II-1-1 | 2.42 | 0.42 | -1.97 | 155.5 | 3.78 | 2.0 | 1286 | 8 |
| Example II-1-2 | 6.32 | 1.89 | -1.89 | 144.2 | 3.72 | 5.5 | 689 | 140 |
| Example II-1-3 | 4.67 | 1.21 | -1.90 | 147.5 | 3.73 | 4.7 | 856 | 91 |
| Example II-1-4 | 3.51 | 0.84 | -1.92 | 150.1 | 3.74 | 3.9 | 989 | 26 |

As can be seen from Table 5 and Table 6, as the crystallinity of the pyrophosphate and phosphate in the first coating layer gradually increases, the lattice change rate, Li/Mn anti-site defect concentration, and dissolution amount of Fe and Mn of the positive electrode active material gradually decrease, and the capacity of coin cell of the battery gradually increases, and the storage performance and cycle performance are also gradually improved.

**Table 7**

| No. | First coating layer | Second coating layer | 0.1C coin cell specific capacity (mAh/g) | Average discharge voltage of coin cell (V) | Volume expansion rate after 30 days of storage at 60 °C (%) | Cycle number at 80% capacity retention rate under 45 °C | Dissolution amount of Mn&Fe after cycling (ppm) |
|---|---|---|---|---|---|---|---|
| Example II-2-1 | 1% Li₂FeP₂O₇ /3% Al₂O₃ | 2% carbon | 154.8 | 3.76 | 1.6 | 1236 | 6 |

It can be learned from Table 6 and Table 7 that different compositions of the first coating layer have different battery performance improvement effects.

### Example 111-1-1:

The preparation methods for the coin cell and the complete cell were similar to those in Example I-1-1, except that the process for preparing the positive electrode active material was changed.

### (1) Preparation of positive electrode active material

### S1: Preparation of inner core

0.60 mol of MnSO₄· H₂O, 0.387 mol of FeSO₄· H₂O, 0.003 mol of CoSO₄, 0.01 mol of VCl₂, 0.4985 mol of lithium carbonate, an 85% phosphoric acid aqueous solution containing 0.997 mol of phosphoric acid, and 0.003 mol of H₂SO₄ were ground in a ball mill for 6 h at a rotation speed of 400 r/min, and the obtained material was dried at 120 °C. Then, the powder described above was sintered at 700 °C for 10 h in a nitrogen (90% by volume) + hydrogen (10% by volume) protective atmosphere to obtain an inner core.

The inner core included a core and a first region formed on at least a part of the surface of the core. The first region was discontinuous (e.g., in the form of dots or islands) and included an oxide of V (mainly including V₂O₅).

The composition of the inner core was Li_{0.997}Mn_{0.60}Fe_{0.387}V_{0.01}Co_{0.003}P_{0.997}S_{0.003}O₄.

### S2: Preparation of a coating layer

Preparation of Li₂FeP₂O₇ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water. The pH was controlled to 5, and the mixture was stirred and reacted at room temperature for 2 h to obtain a solution. Then, the solution was heated to 80 °C and maintained at this temperature for 4 h to obtain a first coating layer suspension.

The obtained material of the inner core was added to the first coating layer suspension (the content of the coating substance was 1%, based on the weight of the material of the inner core). The mixture was stirred and mixed thoroughly for 6 h, and after being mixed well, the mixture was dried in an oven at 120 °C for 6 h and then sintered at 650 °C for 6 h to obtain a pyrophosphate-coated material.

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and the mixture was stirred and reacted for 6 h to obtain a solution. Then, the solution was heated to 120 °C and maintained at this temperature for 6 h to obtain a second coating layer suspension.

The obtained pyrophosphate-coated material was added to the second coating layer suspension (the content of the coating substance was 3%, based on the weight of the material of the inner core). The mixture was stirred and mixed thoroughly for 6 h, and after being mixed well, the mixture was dried in an oven at 120 °C for 6 h and then sintered at 700 °C for 8 h to obtain a two-layer coated material.

37.3 g of sucrose was dissolved in 500 g of deionized water. The mixture was then stirred for thorough dissolution to obtain a sucrose aqueous solution.

The obtained two-layer coated material was added to the sucrose solution (the content of the coating carbon was 1%, based on the weight of the material of the inner core), and the mixture was stirred and mixed for 6 h. After being mixed well, the mixture was dried an oven at 150 °C for 6 h, and then sintered at 700 °C for 10 h to obtain a three-layer coated material.

### Example III-1-2 to Example III-1-14

The preparation methods for the coin cell and the complete cell were similar to those in Example III-1-1, except that the substance of the first coating layer or the second coating layer was changed. See Table 8 for details.

**Table 8**

| No. | Elemental composition of inner core | First region | Mass concentration W₂ of V in the core | Mass concentration W₁ of V in the first region | W₁/W₂ | First coating layer substance | Second coating layer substance | Third coating layer substance |
|---|---|---|---|---|---|---|---|---|
| Example III-1-1 | Li_{0.997}Mn_{0.60}Fe_{0.387}V_{0.01}Co_{0.003}P_{0.997}S_{0.003}O₄ | V oxide | 0.183% | 3.07% | 16.8 | 1%Li₂FeP₂O₇ | 3%LiFePO₄ | 1% carbon |
| Example III-1-2 | Li_{0.997}Mn_{0.60}Fe_{0.387}V_{0.01}Co_{0.003}P_{0.997}S_{0.003}O₄ | V oxide | 0.184% | 3.04% | 16.5 | 1%Li₂MgP₂O₇ | 3%LiFePO₄ | 1% carbon |
| Example III-1-3 | Li_{0.997}Mn_{0.60}Fe_{0.387}V_{0.01}Co_{0.003}P_{0.997}S_{0.003}O₄ | V oxide | 0.190% | 2.98% | 15.7 | 1%Li₂CoP₂O₇ | 3%LiFePO₄ | 1% carbon |
| Example III-1-4 | Li_{0.997}Mn_{0.60}Fe_{0.387}V_{0.01}Co_{0.003}P_{0.997}S_{0.003}O₄ | V oxide | 0.189% | 2.99% | 15.8 | 1%Li₂CuP₂O₇ | 3%LiFePO₄ | 1% carbon |
| Example III-1-5 | Li_{0.997}Mn_{0.60}Fe_{0.387}V_{0.01}Co_{0.003}P_{0.997}S_{0.003}O₄ | V oxide | 0.178% | 3.16% | 17.8 | 1%Li₂ZnP₂O₇ | 3%LiFePO₄ | 1% carbon |
| Example III-1-6 | Li_{0.997}Mn_{0.60}Fe_{0.387}V_{0.01}Co_{0.003}P_{0.997}S_{0.003}O₄ | V oxide | 0.189% | 2.96% | 15.7 | 1%TiP₂O₇ | 3%LiFePO₄ | 1% carbon |
| Example III-1-7 | Li_{0.997}Mn_{0.60}Fe_{0.387}V_{0.01}Co_{0.003}P_{0.997}S_{0.003}O₄ | V oxide | 0.184% | 3.05% | 16.6 | 1%Ag₄P₂O₇ | 3%LiFePO₄ | 1% carbon |
| Example III-1-8 | Li_{0.997}Mn_{0.60}Fe_{0.387}V_{0.01}Co_{0.003}P_{0.997}S_{0.003}O₄ | V oxide | 0.188% | 2.98% | 15.9 | 1%ZrP₂O₇ | 3%LiFePO₄ | 1% carbon |
| Example III-1-9 | Li_{0.997}Mn_{0.60}Fe_{0.387}V_{0.01}Co_{0.003}P_{0.997}S_{0.003}O₄ | V oxide | 0.182% | 3.11% | 17.1 | 1%Li₂FeP₂O₇ | 3%Cu₃(PO₄)₂ | 1% carbon |
| Example III-1-10 | Li_{0.997}Mn_{0.60}Fe_{0.387}V_{0.01}Co_{0.003}P_{0.997}S_{0.003}O₄ | V oxide | 0.187% | 2.96% | 15.8 | 1%Li₂FeP₂O₇ | 3%Zn₃(PO₄)₂ | 1% carbon |
| Example III-1-11 | Li_{0.997}Mn_{0.60}Fe_{0.387}V_{0.01}Co_{0.003}P_{0.997}S_{0.003}O₄ | V oxide | 0.189% | 2.92% | 15.4 | 1%Li₂FeP₂O₇ | 3%Ti₃(PO₄)₄ | 1% carbon |
| Example III-1-12 | Li_{0.997}Mn_{0.60}Fe_{0.387}V_{0.01}Co_{0.003}P_{0.997}S_{0.003}O₄ | V oxide | 0.186% | 2.88% | 15.5 | 1%Li₂FeP₂O₇ | 3%Ag₃PO₄ | 1% carbon |
| Example III-1-13 | Li_{0.997}Mn_{0.60}Fe_{0.387}V_{0.01}Co_{0.003}P_{0.997}S_{0.003}O₄ | V oxide | 0.185% | 3.07% | 16.6 | 1%Li₂FeP₂O₇ | 3%Zr₃(PO₄)₄ | 1% carbon |
| Example III-1-14 | Li_{0.997}Mn_{0.60}Fe_{0.387}V_{0.01}Co_{0.003}P_{0.997}S_{0.003}O₄ | V oxide | 0.188% | 2.97% | 15.8 | 1%Li₂FeP₂O₇ | 3%AlPO₄ | 1% carbon |
| Note: The crystallinity of the first coating layer substance and that of the second coating layer substance are both 100%. | | | | | | | | |

**Table 9**

| No. | Performance of positive electrode active material | | | | | | Battery performance | | |
|---|---|---|---|---|---|---|---|---|---|
| | Lattice change rate (%) | Li/Mn anti-site defect concentration (%) | Compaction density (g/cm³) | Surface oxygen valence state | 3C charge constant current ratio (%) | Dissolution amount of Mn&Fe after cycling (ppm) | 0.1C coin cell capacity (mAh/g) | Volume expansion rate after 30 days of storage at 60 °C (%) | Cycle number at 80% capacity retention rate under 45 °C |
| Example III-1-1 | 2.52 | 1.80 | 2.36 | -1.92 | 70.0 | 7 | 156.6 | 4.2 | 1112 |
| Example III-1-2 | 2.45 | 1.89 | 2.38 | -1.97 | 68.5 | 13 | 155.6 | 4.7 | 1110 |
| Example III-1-3 | 2.51 | 1.78 | 2.36 | -1.96 | 69.9 | 12 | 155.0 | 4.6 | 1070 |
| Example III-1-4 | 2.54 | 1.72 | 2.39 | -1.97 | 68.7 | 14 | 155.4 | 4.3 | 1045 |
| Example III-1-5 | 2.56 | 1.81 | 2.38 | -1.97 | 69.2 | 20 | 155.7 | 5.2 | 991 |
| Example III-1-6 | 2.61 | 1.87 | 2.34 | -1.95 | 70.8 | 15 | 155.7 | 4.6 | 997 |
| Example III-1-7 | 2.42 | 1.77 | 2.38 | -1.94 | 70.5 | 11 | 156.8 | 5.1 | 1008 |
| Example III-1-8 | 2.45 | 1.90 | 2.33 | -1.92 | 71.0 | 14 | *155.5* | 5.4 | 1017 |
| Example III-1-9 | 2.52 | 1.76 | 2.34 | -1.92 | 68.4 | 16 | 155.7 | 4.9 | 1044 |
| Example III-1-10 | 2.47 | 1.91 | 2.35 | -1.94 | 67.1 | 24 | 154.6 | 5.8 | 948 |
| Example III-1-11 | 2.22 | 1.83 | 2.36 | -1.94 | 68.9 | 22 | 155.8 | 5.6 | 1009 |
| Example III-1-12 | 2.43 | 1.88 | 2.38 | -1.91 | 71.1 | 27 | 155.3 | 5.3 | 981 |
| Example III-1-13 | 2.56 | 1.84 | 2.38 | -1.93 | 70.2 | 24 | 154.4 | 5.1 | 968 |
| Example III-1-14 | 2.42 | 1.85 | 2.36 | -1.92 | 71.0 | 14 | 156.4 | 4.2 | 1139 |

**Table 10**

| No. | Interplanar spacing of first coating layer substance (nm) | Included angle in crystal orientation (111) of first coating layer substance (°) | Interplanar spacing of second coating layer substance (nm) | Included angle in crystal orientation (111) of second coating layer substance (°) |
|---|---|---|---|---|
| Example III-1-1 | 0.303 | 29.496 | 0.348 | 25.562 |
| Example III-1-2 | 0.451 | 19.668 | 0.348 | 25.562 |
| Example III-1-3 | 0.297 | 30.846 | 0.348 | 25.562 |
| Example III-1-4 | 0.457 | 19.456 | 0.348 | 25.562 |
| Example III-1-5 | 0.437 | 20.257 | 0.348 | 25.562 |
| Example III-1-6 | 0.462 | 19.211 | 0.348 | 25.562 |
| Example III-1-7 | 0.450 | 19.735 | 0.348 | 25.562 |
| Example III-1-8 | 0.372 | 23.893 | 0.348 | 25.562 |
| Example III-1-9 | 0.303 | 29.496 | 0.374 | 23.789 |
| Example III-1-10 | 0.303 | 29.496 | 0.360 | 24.710 |
| Example III-1-11 | 0.303 | 29.496 | 0.350 | 25.428 |
| Example III-1-12 | 0.303 | 29.496 | 0.425 | 20.885 |
| Example III-1-13 | 0.303 | 29.496 | 0.356 | 24.993 |
| Example III-1-14 | 0.303 | 29.496 | 0.244 | 36.808 |

It can be seen from Table 8 to Table 10 that different compositions of the first coating layer and/or the second coating layer have different battery performance improvement effects. In addition, a positive electrode active material and a battery with good performance can be obtained by using the shell material included in the scope of the present application.

### Examples III-2-1 to III-2-3

The preparation methods for the coin cell and the complete cell were similar to those in Example III-1-1, except that the substance of the coating layer was different; the coating amounts of the coating layers were all based on the weight of the inner core. See Table 11 for details.

The molar ratio of SP2 carbon to SP3 carbon in the third coating layer of Example III-2-1 was 2.2, the molar ratio of SP2 carbon to SP3 carbon in the third coating layer of Example III-2-2 was 2.3, and the number-average molecular weight of the hydroxy-terminated polydimethylsiloxane in the fourth coating layer of Example III-2-3 was 1000, with a polar functional group content of 3.4%.

**Table 11**

| No. | First coating layer substance | Second coating layer substance | Third coating layer substance | Fourth coating layer substance |
|---|---|---|---|---|
| Example III-2-1 | 1% crystalline Li₂FeP₂O₇ | 3% crystalline Al₂O₃ | 1% carbon | / |
| Example III-2-2 | 1% crystalline Li₂FeP₂O₇ | 3% crystalline Al₂O₃ | 3% carbon | / |
| Example III-2-3 | 1% crystalline Li₂FeP₂O₇ | 3% crystalline LiFePO₄ | 1% carbon | 1% hydroxy-terminated polydimethylsiloxane |
| Note: The crystallinity of the first coating layer substance and that of the second coating layer substance are both 100%. | | | | |

**Table 12**

| No. | 0.1C coin cell capacity (mAh/g) | Volume expansion rate after 30 days of storage at 60 °C (%) | Cycle number at 80% capacity retention rate under 45 °C | Dissolution amount of Mn&Fe after cycling (ppm) |
|---|---|---|---|---|
| Example III-2-1 | 155.6 | 5.1 | 1069 | 9 |
| Example III-2-2 | 155.0 | 4.6 | 1155 | 8 |
| Example III-2-3 | 156.7 | 4.0 | 1521 | 3 |

It can be seen from Table 11 and Table 12 that different compositions of the coating layer have different improvement effects on battery performance. In addition, a positive electrode active material and a battery with good performance can be obtained by using the shell material included in the scope of the present application.

### Example IV-1

### (1) Preparation of positive electrode active material

0.85 mol of FeSO₄· H₂O, 0.140 mol of MnSO₄· H₂O, 0.01 mol of VCl₂, 0.4965 mol of lithium carbonate, 0.0005 mol of Nb₂(SO₄)₅, 1 mol of H₂SO₄, and 0.5 mol of NH₄HF₂ were ground in a ball mill for 6 h at a rotation speed of 400 r/min, and the obtained material was dried at 120 °C. Then, the powder described above was sintered at 350 °C for 10 h in a nitrogen (90% by volume) + hydrogen (10% by volume) protective atmosphere to obtain an inner core.

The inner core included a core and a first region formed on at least a part of the surface of the core. The first region was discontinuous (e.g., in the form of dots or islands) and included an oxide of V (mainly including V₂O₅).

The composition of the inner core was Li_{0.993}Nb_{0.001}Fe_{0.85}Mn_{0.140}V_{0.01}SO₄F.

### Example V-1

### (1) Preparation of positive electrode active material

0.85 mol of FeSO₄· H₂O, 0.140 mol of MnSO₄· H₂O, 0.01 mol of VCl₂, 0.993 mol of lithium carbonate, 0.0005 mol of Nb₂(SO₄)₅, 0.999 mol of silicic acid, 0.001 mol of H₂SO₄, and 0.0005 mol of NH₄HF₂ were ground in a ball mill for 6 h at a rotation speed of 400 r/min, and the obtained material was dried at 120 °C. Then, the powder described above was sintered at 700 °C for 10 h in a nitrogen (90% by volume) + hydrogen (10% by volume) protective atmosphere to obtain an inner core.

The inner core included a core and a first region formed on at least a part of the surface of the core. The first region was discontinuous (e.g., in the form of dots or islands) and included an oxide of V (mainly including V₂O₅).

The composition of the inner core was

Li_{1.986}Nb_{0.001}Mn_{0.85}Fe_{0.140}V_{0.01}Si_{0.999}S_{0.001}O_{3.999}F_{0.001}.

**Table 13**

| No. | First region | Mass concentration W₂ of V in the core | Mass concentration W₁ of V in the first region | W₁/W₂ |
|---|---|---|---|---|
| Example IV-1 | V oxide | 0.24% | 3.60% | 15.0 |
| Example V-1 | V oxide | 0.22% | 3.50% | 15.9 |

**Table 14**

| No. | 0.1C coin cell capacity (mAh/g) | 3C charge constant current ratio (%) | Volume expansion rate after 30 days of storage at 60 °C (%) | Cycle number at 80% capacity retention rate under 45 °C | Dissolution amount of Mn&Fe after cycling (ppm) |
|---|---|---|---|---|---|
| Example IV-1 | 124.6 | 60.3 | 5.6 | 232 | 285 |
| Example V-1 | 124.2 | 40.8 | 6.8 | 202 | 369 |

As can be seen from Table 13 and Table 14, different types of positive electrode active materials have different battery performance improvement effects.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. In addition, without departing from the spirit of the present application, various modifications that can be conceived by those skilled in the art to the embodiments, as well as other embodiments formed by combining some of the constituent elements of the embodiments, are also included within the scope of the present application.

## Claims

1. A positive electrode active material, wherein the positive electrode active material comprises a core and a first region formed on at least a part of a surface of the core, wherein the first region comprises element V and a mass concentration of the element V in the first region is denoted as W₁, the core comprises the element V, and a mass concentration of the element V in the core is denoted as W₂, and W₁ > W₂.

2. The positive electrode active material according to claim 1, wherein
W₁/W₂ is 2-2000, and optionally 12-833; and/or
W₁ is 0.3 wt% to 100 wt%, and optionally 2.6 wt% to 83.3 wt%; and/or
W₂ is 0.01 wt% to 1 wt%, and optionally 0.10 wt% to 0.41 wt%.

3. The positive electrode active material according to claim 1 or 2, wherein the element V in the first region is present in at least one form selected from:
(1) a V elementary substance;
(2) an oxide of the element V, optionally comprising one or more selected from VO, V₂O₃, VO₂, and V₂O₅;
(3) a compound containing the element V and element Li, optionally comprising one or more selected from LiVO₃ and LiVO₂;
(4) a compound containing the element V and element X, optionally comprising one or more selected from VOPO₄ and VOSO₄, X comprising one selected from S, P, and Si;
(5) a compound containing the element V, element Li, and element X, optionally comprising one or more selected from Li₃V₂(PO₄)₃, LiVOPO₄, and Li₂VOSiO₄, X comprising one selected from S, P, and Si.

4. The positive electrode active material according to any one of claims 1-3, wherein the positive electrode active material has a composition represented by formula 1:
A_{y}(X_{1-z1}C_{z1}O_{4-z2}D_{z2})ₘYₙ, formula 1,
wherein
A comprises the element V and one or more elements selected from Group IA, Group IIA, Group IIIA, Group IVA, Group VA, Group IIB, Group IVB, Group VB, Group VIB, Group VIIB, and Group VIII,
X comprises one selected from S, P, and Si,
C comprises one or more elements selected from Group IIIA, Group IVA, Group VA, and Group VIA,
D comprises one or more elements selected from Group VIA and Group VIIA,
Y comprises one or more elements selected from Group VIIA,
y is selected from a range of 1.5-3,
z1 is selected from a range of 0-0.5,
z2 is selected from a range of 0-0.5,
m is selected from a range of 1-1.5, and
n is selected from a range of 0-1.

5. The positive electrode active material according to claim 4, wherein
C comprises one or more elements selected from B, S, N, P, and Si; and/or
D comprises one or more elements selected from S, F, Cl, and Br, optionally comprises any one element selected from S, F, Cl, and Br, and more optionally comprises F; and/or
Y comprises one or more elements selected from S, F, Cl, and Br; optionally, Y comprises any one element selected from S, F, Cl, and Br; more optionally, Y is F; and/or
z1 is selected from a range of 0-0.1, optionally from a range of 0.001-0.1, and more optionally from a range of 0.001-0.005; and/or
z2 is selected from a range of 0-0.1, optionally from a range of 0.001-0.1, and more optionally from a range of 0.001-0.005.

6. The positive electrode active material according to claim 4 or 5, wherein
A comprises a first element M, a second element Li, optionally a first doping element M', and optionally a second doping element M", wherein
the first element M comprises one or more elements selected from Fe, Mn, and Co,
the first doping element M' comprises one or more metal elements selected from Group IA, Group IIA, Group IIIA, Group IVA, Group VA, Group IIB, Group IVB, Group VB, Group VIB, and Group VIII,
the second doping element M" comprises one or more metal elements selected from Group IA, Group IIA, Group IIIA, Group IIB, Group VB, and Group VIB,
the first doping element M' and/or the second doping element M" comprise V, and optionally, the first doping element M' comprises V.

7. The positive electrode active material according to claim 6, wherein the positive electrode active material has a composition represented by formula 1-1:
LiₓM"_{y-x-1}M₁₋ₐM₁₋ₐ(X_{1-z1}C_{z1}O_{4-z2}D_{z2})ₘYₙ, formula 1-1,
wherein
x is selected from a range of 0.5-2.1,
y-x-1 is selected from a range of 0-0.1,
a is selected from a range of 0-0.999, and
y-x-1 + a is greater than 0.

8. The positive electrode active material according to claim 6 or 7, wherein
M comprises and is selected from Fe and/or Mn; and/or
M' comprises V and one or more elements selected from Rb, Cs, Be, Ca, Sr, Ba, In, Pb, Bi, Cd, Hf, Ta, Cr, Ru, Rh, Pd, Os, Ir, Pt, Zn, Al, Na, K, Mg, Mo, W, Ti, Zr, Ni, Co, Ga, Sn, Sb, Nb, and Ge, optionally comprises V and one or more elements selected from Zn, Al, Na, K, Mg, W, Ti, Zr, Ni, Ga, Sn, Sb, Nb, Cr, Co, and Ge, and more optionally comprises V and one or more elements selected from Ti, Ni, Co, and Mg; and/or
M" comprises one or more elements selected from Rb, Cs, Be, Ca, Sr, Ba, Ga, In, Cd, V, Ta, Cr, Zn, Al, Na, K, Mg, Nb, Mo, and W, and optionally comprises one or more elements selected from Zn, Al, Na, K, Mg, Nb, Mo, and W.

9. The positive electrode active material according to any one of claims 6-8, wherein
M" comprises any one element selected from Zn, Al, Na, K, Mg, Nb, Mo, and W, and optionally comprises any one element selected from Mg and Nb; and/or
M comprises and is selected from Fe and Mn; and/or
M' comprises V and at least two elements selected from Zn, Al, Na, K, Mg, W, Ti, Zr, Ni, Ga, Sn, Sb, Nb, Cr, Co, and Ge, and optionally comprises V and at least two elements selected from Ti, Ni, Co, and Mg; and/or
x is selected from a range of 0.85-2.1, and optionally from a range of 0.97-2.01; and/or
y-x-1 is selected from a range of 0.001-0.1, and optionally from a range of 0.001-0.005; and/or
a is selected from a range of 0.001-0.35, and optionally from a range of 0.01-0.15.

10. The positive electrode active material according to any one of claims 6-9, wherein
a is selected from a range of 0.001-0.35, y-x-1 is 0, z1 is 0, and z2 is 0; or
a is selected from a range of 0.001-0.35, y-x-1 is 0, z1 is selected from a range of 0.001-0.1, and z2 is 0; or
a is selected from a range of 0.001-0.35, y-x-1 is 0, z1 is 0, and z2 is selected from a range of 0.001-0.1; or
a is selected from a range of 0.001-0.35, y-x-1 is 0, z1 is selected from a range of 0.001-0.1, and z2 is selected from a range of 0.001-0.1; or
a is selected from a range of 0.001-0.35, y-x-1 is selected from a range of 0.001-0.1, z1 is 0, and z2 is 0; or
a is selected from a range of 0.001-0.35, y-x-1 is selected from a range of 0.001-0.1, z1 is selected from a range of 0.001-0.1, and z2 is 0; or
a is selected from a range of 0.001-0.35, y-x-1 is selected from a range of 0.001-0.1, z1 is 0, and z2 is selected from a range of 0.001-0.1; or
a is selected from a range of 0.001-0.35, y-x-1 is selected from a range of 0.001-0.1, z1 is selected from a range of 0.001-0.1, and z2 is selected from a range of 0.001-0.1.

11. The positive electrode active material according to any one of claims 6-10, wherein
X is P, and M" comprises one or more elements selected from Zn, Al, Na, K, Mg, Nb, Mo, and W; M comprises and is selected from Fe and/or Mn; M' comprises V and at least two elements selected from Zn, Al, Na, K, Mg, W, Ti, Zr, Ni, Ga, Sn, Sb, Nb, Cr, Co, and Ge; C comprises one or more elements selected from B, S, N, and Si; D comprises one or more elements selected from S, F, Cl, and Br; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 0; optionally, y-x-1 is selected from a range of 0.001-0.1, z1 is selected from a range of 0.001-0.1, and z2 is selected from a range of 0.001-0.1; or
X is Si, and M" comprises one or more elements selected from Zn, Al, Na, K, Mg, Nb, Mo, and W; M comprises and is selected from Fe and/or Mn; M' comprises V and at least two elements selected from Zn, Al, Na, K, Mg, W, Ti, Zr, Ni, Ga, Sn, Sb, Nb, Cr, Co, and Ge; C comprises one or more elements selected from B, S, N, and P; D comprises one or more elements selected from S, F, Cl, and Br; x is selected from a range of 1.85-2.1, y-x-1 is selected from a range of 0-0.1, a is selected from a range of 0.001-0.15, z1 is selected from a range of 0-0.1, z2 is selected from a range of 0-0.1, m is 1, and n is 0; optionally, y-x-1 is selected from a range of 0.001-0.1, z1 is selected from a range of 0.001-0.1, and z2 is selected from a range of 0.001-0.1; or
X is S, and M" comprises one or more elements selected from Zn, Al, Na, K, Mg, Nb, Mo, and W; M comprises and is selected from Fe and/or Mn; M' comprises V and at least two elements selected from Zn, Al, Na, K, Mg, W, Ti, Zr, Ni, Ga, Sn, Sb, Nb, Cr, Co, and Ge; C comprises one or more elements selected from B, N, P, and Si; D comprises one or more elements selected from S, F, Cl, and Br; Y comprises F; x is selected from a range of 0.85-1.1, y-x-1 is selected from a range of 0-0.1, a is selected from a range of 0.001-0.15, z1 is selected from a range of 0-0.1, z2 is selected from a range of 0-0.1, m is 1, and n is 1; optionally, y-x-1 is selected from a range of 0.001-0.1, z1 is selected from a range of 0.001-0.1, and z2 is selected from a range of 0.001-0.1.

12. The positive electrode active material according to any one of claims 1-11, wherein
the first region is formed on an entire surface of the core; or
the first region is present in the form of dots or islands on at least a part of the surface of the core;
optionally, the first region is located on 10%-100% of the surface of the core.

13. The positive electrode active material according to any one of claims 1-12, wherein the positive electrode active material comprises an inner core and a shell coating the inner core, wherein
the inner core comprises the positive electrode active material according to any one of claims 1-12;
the shell comprises one or more coating layers; each coating layer has ionic conductivity and/or electronic conductivity.

14. The positive electrode active material according to claim 13, wherein
the one or more coating layers each independently comprise one or more selected from a pyrophosphate, a phosphate, carbon, doped carbon, an oxide, a boride, and a polymer.

15. The positive electrode active material according to claim 13 or 14, wherein the shell comprises one coating layer; optionally, the coating layer comprises one or more selected from a pyrophosphate, a phosphate, carbon, doped carbon, an oxide, a boride, and a polymer.

16. The positive electrode active material according to claim 13 or 14, wherein
the shell comprises a first coating layer coating the inner core and a second coating layer coating the first coating layer; optionally, the first coating layer and the second coating layer each independently comprise one or more selected from a pyrophosphate, a phosphate, carbon, doped carbon, an oxide, a boride, and a polymer.

17. The positive electrode active material according to claim 16, wherein the first coating layer comprises one or more selected from a pyrophosphate, a phosphate, an oxide, and a boride, and the second coating layer comprises one or more selected from carbon and doped carbon.

18. The positive electrode active material according to claim 13 or 14, wherein
the shell comprises a first coating layer coating the inner core, a second coating layer coating the first coating layer, and a third coating layer coating the second coating layer;
optionally, the first coating layer, the second coating layer, and the third coating layer each independently comprise one or more selected from a pyrophosphate, a phosphate, carbon, doped carbon, an oxide, a boride, and a polymer.

19. The positive electrode active material according to claim 18, wherein the first coating layer comprises a pyrophosphate, the second coating layer comprises one or more selected from a phosphate, an oxide, and a boride, and the third coating layer comprises one or more selected from carbon and doped carbon.

20. The positive electrode active material according to any one of claims 14-19, wherein
the pyrophosphate is M¹_{b}(P₂O₇)_{c}; and/or
the phosphate is M²ₚ(PO₄)_{q}; and/or
a doping element in the doped carbon comprises one or more selected from Group IIIA, Group VA, Group VIA, and Group VIIA; and/or
the oxide is M³_{d}Oₑ; and/or
the boride is ZᵥBₜ; and/or
the polymer comprises one or more selected from a polysaccharide and a derivative thereof, and a polysiloxane;
M¹, M², and Z each independently comprise one or more elements selected from Group IA, Group IIA, Group IIIA, Group IB, Group IIB, Group IVB, Group VB, Group VIIB, and Group VIII; b is selected from a range of 1-4; c is selected from a range of 1-6; p is selected from a range of 1-2; q is selected from a range of 1-4; M³ comprises one or more elements selected from an alkali metal, an alkaline earth metal, a transition metal, a Group IIIA element, a Group IVA element, a lanthanide element, and Sb; d is greater than 0 and less than or equal to 2; e is greater than 0 and less than or equal to 5; v is selected from a range of 1-7; t is selected from a range of 1-2.

21. The positive electrode active material according to claim 20, wherein
M¹, M², and Z each independently comprise one or more elements selected from Li, Fe, Ni, Mg, Co, Cu, Zn, Ti, Ag, Zr, Nb, Mn, and Al; and/or
the doping element in the doped carbon comprises one or more selected from nitrogen, phosphorus, sulfur, boron, and fluorine; and/or
M³ comprises one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, and optionally comprises one or more elements selected from Mg, Al, Si, Zn, Zr, and Sn; and/or
the polysiloxane comprises one or more selected from a polysiloxane of a linear structure and a polysiloxane of a cyclic structure; and/or
the polysaccharide comprises one or more selected from a plant polysaccharide and a marine polysaccharide.

22. The positive electrode active material according to claim 13, 14, 16, 17, 20, or 21, wherein the shell comprises the first coating layer coating the inner core and the second coating layer coating the first coating layer;
the first coating layer comprises pyrophosphate M⁴P₂O₇ and phosphate M⁵PO₄, wherein M⁴ and M⁵ each independently comprise one or more elements selected from Li, Fe, Ni, Mg, Co, Cu, Zn, Ti, Ag, Zr, Nb, and Al;
the second coating layer comprises carbon.

23. The positive electrode active material according to claim 13, 14, 18, 19, 20, or 21, wherein the shell comprises the first coating layer coating the inner core, the second coating layer coating the first coating layer, and the third coating layer coating the second coating layer;
the first coating layer comprises pyrophosphate Li_{f}QP₂O₇ and/or Q_{g}(P₂O₇)ₕ, wherein 0 ≤ f ≤ 2, 1 ≤ g ≤ 4, 1 ≤ h ≤ 6, and Q in the pyrophosphate Li_{f}QP₂O₇ and/or Q_{g}(P₂O₇)ₕ each independently comprises one or more elements selected from Fe, Ni, Mg, Co, Cu, Zn, Ti, Ag, Zr, Nb, and Al;
the second coating layer comprises crystalline phosphate M⁵PO₄, wherein M⁵ comprises one or more elements selected from Li, Fe, Ni, Mg, Co, Cu, Zn, Ti, Ag, Zr, Nb, and Al;
the third coating layer comprises carbon.

24. The positive electrode active material according to any one of claims 13-21, wherein one or more coating layers in the shell that are most distal to the inner core each independently comprise one or more selected from the polysiloxane, the polysaccharide, and the polysaccharide derivative.

25. The positive electrode active material according to any one of claims 20-24, wherein the polysiloxane comprises a structural unit represented by formula (i) below: 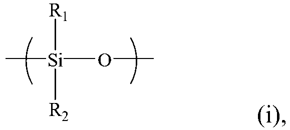 wherein
R₁ and R₂ are independently selected from H, -COOH, -OH, -SH, -CN, -SCN, amino, a phosphate group, a carboxylate group, acylamino, an aldehyde group, sulfonyl, a polyether chain segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group, and a C2-C20 halogenated heteroaromatic hydrocarbon group;
optionally, R₁ and R₂ are independently selected from H, amino, a phosphate group, a polyether chain segment, C1-C8 alkyl, C1-C8 halogenated alkyl, C1-C8 heteroalkyl, C1-C8 halogenated heteroalkyl, C2-C8 alkenyl, and C2-C8 halogenated alkenyl.

26. The positive electrode active material according to any one of claims 20-25, wherein the polysiloxane further comprises a capping group, and the capping group comprises at least one of the group consisting of the following functional groups: polyether, C1-C8 alkyl, C1-C8 halogenated alkyl, C1-C8 heteroalkyl, C1-C8 halogenated heteroalkyl, C2-C8 alkenyl, C2-C8 halogenated alkenyl, a C6-C20 aromatic hydrocarbon group, C1-C8 alkoxy, a C2-C8 epoxy group, hydroxy, C1-C8 hydroxyalkyl, amino, C1-C8 aminoalkyl, carboxy, and C1-C8 carboxyalkyl.

27. The positive electrode active material according to any one of claims 20-26, wherein the polysiloxane comprises one or more selected from polydimethylsiloxane, polydiethylsiloxane, polymethylethylsiloxane, polymethylvinylsiloxane, polyphenylmethylsiloxane, polymethylhydrosiloxane, carboxy-functionalized polysiloxane, epoxy-terminated polysiloxane, methoxy-terminated polydimethylsiloxane, hydroxypropyl-terminated polydimethylsiloxane, polymethylchloropropylsiloxane, hydroxy-terminated polydimethylsiloxane, polymethyltrifluoropropylsiloxane, perfluorooctylmethylpolysiloxane, aminoethylaminopropylpolydimethylsiloxane, polyether-terminated polydimethylsiloxane, pendant aminopropylpolysiloxane, aminopropyl-terminated polydimethylsiloxane, pendant phosphate-grafted polydimethylsiloxane, pendant polyether-grafted polydimethylsiloxane, 1,3,5,7-octamethylcyclotetrasiloxane, 1,3,5,7-tetrahydro-1,3,5,7-tetramethylcyclotetrasiloxane, decamethylcyclopentasiloxane, 2,4,6,8-tetramethylcyclotetrasiloxane, 2,4,6,8-tetramethyl-2,4,6,8-tetravinylcyclotetrasiloxane, cyclopolymethylvinylsiloxane, hexadecamethylcyclooctasiloxane, tetradecamethylcycloheptasiloxane, and cyclopolydimethylsiloxane.

28. The positive electrode active material according to any one of claims 20-27, wherein number-average molecular weights of the polysiloxane, the polysaccharide, and the polysaccharide derivative are each independently 300,000 or less, optionally 10,000-200,000, more optionally 20,000-120,000, and further optionally 400-80,000.

29. The positive electrode active material according to any one of claims 20-28, wherein a mass percentage of a polar functional group in the polysiloxane is α, wherein 0 ≤ α < 50%, and optionally 5% ≤ α ≤ 30%.

30. The positive electrode active material according to any one of claims 20-29, wherein substituents attached to saccharide units in the polysaccharide and the polysaccharide derivative each independently comprise at least one of the group consisting of the following functional groups: -OH, -COOH and a salt thereof, -R-OH, -SO₃H and a salt thereof, -R-OH, - R-SO₃H and a salt thereof, a sulfate group, and alkoxy, wherein R represents alkylene, and optionally C1-C5 alkylene;
optionally, substituents attached to saccharide units in the polysaccharide and the polysaccharide derivative each independently comprise at least one of the group consisting of the following functional groups: -OH, -COOH, -COOLi, -COONa, -COOK, -SO₃H, -SO₃Li, - SO₃Na, -SO₃K, -CH₂-SO₃H, -CH₂-SO₃Li, -CH₂-SO₃Na, -CH₂-SO₃K, methoxy, and ethoxy.

31. The positive electrode active material according to any one of claims 20-30, wherein the polysaccharide comprises one or more selected from pectin, carboxymethyl starch, hydroxypropyl starch, dextrin, cellulose ether, carboxymethyl chitosan, hydroxyethyl cellulose, carboxymethylcellulose, carboxypropyl methyl cellulose, guar gum, sesbania gum, arabic gum, lithium alginate, sodium alginate, potassium alginate, fucoidan, agar, carrageenan, carrageenin, xanthan gum, and fenugreek gum.

32. The positive electrode active material according to any one of claims 20-31, wherein mass percentages of the substituents attached to the saccharide units in the polysaccharide and the polysaccharide derivative are each independently 20%-85%, and optionally 30%-78%.

33. The positive electrode active material according to any one of claims 1-12, wherein a surface of the positive electrode active material is coated with one or more of carbon and doped carbon; optionally, a surface of the positive electrode active material is coated with carbon.

34. The positive electrode active material according to claim 33, wherein a doping element in the doped carbon comprises one or more selected from nitrogen, phosphorus, sulfur, boron, and fluorine.

35. The positive electrode active material according to any one of claims 13-15, 18-19, and 22-34, wherein a coating amount of the shell is 0.1 wt% to 6 wt%, based on a weight of the inner core.

36. The positive electrode active material according to any one of claims 13-14 and 16-32, wherein
a coating amount of the first coating layer is greater than 0 and less than or equal to 7 wt%, optionally greater than 0 and less than or equal to 6 wt%, more optionally greater than 0 and less than or equal to 5.5 wt%, and further optionally greater than 0 and less than or equal to 2 wt%, based on the weight of the inner core; and/or
a coating amount of the second coating layer is greater than 0 and less than or equal to 6 wt%, optionally greater than 0 and less than or equal to 5.5 wt%, and more optionally 2 wt% to 4 wt%, based on the weight of the inner core; and/or
a coating amount of the third coating layer is greater than 0 and less than or equal to 6 wt%, optionally greater than 0 and less than or equal to 5.5 wt%, and more optionally greater than 0 and less than or equal to 2 wt%, based on the weight of the inner core.

37. The positive electrode active material according to any one of claims 13-14, 17-19, 21-32, and 36, wherein the shell further comprises a fourth coating layer coating the third coating layer and a fifth coating layer coating the fourth coating layer;
coating amounts of the fourth coating layer and the fifth coating layer are each independently 0.01 wt% to 10 wt%, optionally 0.05 wt% to 10 wt%, more optionally 0.1 wt% to 5 wt%, and further 0.1 wt% to 2 wt%, based on the weight of the inner core.

38. The positive electrode active material according to any one of claims 13-37, wherein the shell is located on 40%-90%, and optionally 60%-80%, of the surface of the inner core.

39. The positive electrode active material according to any one of claims 13-15, 18-19, 22-35, and 38, wherein a thickness of the shell is 1-15 nm.

40. The positive electrode active material according to any one of claims 13-14, 16-32, and 36-39, wherein
a thickness of the first coating layer is 1-10 nm, and optionally 2-10 nm; and/or
a thickness of the second coating layer is 2-25 nm, optionally 2-15 nm, and more optionally 3-15 nm; and/or
a thickness of the third coating layer is 2-25 nm, and optionally 5-25 nm.

41. The positive electrode active material according to any one of claims 13-40, wherein
the one or more coating layers each independently comprise one or more selected from a pyrophosphate, a phosphate, and an oxide, and the one or more selected from the pyrophosphate, the phosphate, and the oxide are in a crystalline state;
optionally, crystallinities of the pyrophosphate, the phosphate, and the oxide are each independently 10%-100%, and more optionally 50%-100%.

42. The positive electrode active material according to any one of claims 13-41, wherein
a weight ratio of the pyrophosphate to the phosphate and a weight ratio of the pyrophosphate to the oxide in the shell are each independently 1:3 to 3:1, and optionally 1:3 to 1:1.

43. The positive electrode active material according to any one of claims 13-42, wherein the one or more coating layers each independently comprise carbon, and the carbon is a mixture of SP2-type carbon and SP3-type carbon;
optionally, a molar ratio of the SP2-type carbon to the SP3-type carbon in the carbon is any value within a range of 0.07-13, more optionally any value within a range of 0.1-10, and further optionally any value within a range of 2.0-3.0.

44. The positive electrode active material according to any one of claims 13-43, wherein
the one or more coating layers each independently comprise doped carbon, and a mass content of the doping element in the doped carbon is 30% or less; optionally, a mass content of the doping element in the doped carbon is 20% or less.

45. The positive electrode active material according to any one of claims 13-44, wherein
the one or more coating layers each independently comprise doped carbon, wherein in the doped carbon,
the doping element comprises element nitrogen and/or element sulfur, and a mass content of the doping element in the doped carbon is 1%-15%; or
the doping element comprises element phosphorus, element boron, and/or element fluorine, and a mass content of the doping element in the doped carbon is 0.5%-5%;
optionally, the doping element comprises element nitrogen, element phosphorus, element sulfur, element boron, or element fluorine.

46. The positive electrode active material according to any one of claims 13-45, wherein
the one or more coating layers each independently comprise a pyrophosphate, an interplanar spacing of the pyrophosphate is within a range of 0.293-0.470 nm, optionally 0.297-0.462 nm or 0.293-0.326 nm, and more optionally 0.300-0.310 nm, and an included angle in a crystal orientation (111) is within a range of 18.00° to 32.57°, optionally 18.00° to 32.00° or 26.41° to 32.57°, more optionally 19.211° to 30.846°, and further optionally 29.00° to 30.00°; and/or
the one or more coating layers each independently comprise a phosphate, an interplanar spacing of the phosphate is within a range of 0.244-0.425 nm, and optionally 0.345-0.358 nm, and an included angle in a crystal orientation (111) is within a range of 20.00° to 37.00°, and optionally 24.25° to 26.45°;
optionally, the first coating layer or the second coating layer comprises the phosphate.

47. The positive electrode active material according to any one of claims 13-46, wherein a lattice mismatch degree between a material of the inner core and a material of the shell is less than 10%.

48. The positive electrode active material according to any one of claims 1-47, wherein the positive electrode active material comprises element manganese and element phosphorus, and based on a weight of the positive electrode active material,
a content of the element manganese is within a range of 10 wt% to 35 wt%, optionally within a range of 13.3 wt% to 33.2 wt%, more optionally within a range of 15 wt% to 30 wt%, and further optionally within a range of 17 wt% to 20 wt%; and/or
a content of the element phosphorus is within a range of 12 wt% to 25 wt%, optionally within a range of 15 wt% to 20 wt%, and more optionally within a range of 16.8 wt% to 19.5 wt%; and/or
a weight ratio of the element manganese to the element phosphorus is within a range of 0.71-1.85, optionally 0.90-1.25, and more optionally 0.95-1.20.

49. The positive electrode active material according to any one of claims 4-48, wherein X is P, and a lattice change rate of the positive electrode active material before and after complete lithium deintercalation is 50% or less, optionally 9.8% or less, more optionally 8.1% or less, further optionally 7.5% or less, further more optionally 6% or less, still further more optionally 4% or less, and yet still further more optionally 3.8% or less.

50. The positive electrode active material according to any one of claims 4-49, wherein X is P, and a Li/Mn anti-site defect concentration in the positive electrode active material is 5.3% or less, optionally 5.1% or less, more optionally 4% or less, further optionally 2.2% or less, and further more optionally 2% or less.

51. The positive electrode active material according to any one of claims 4-50, wherein X is P, and a surface oxygen valence state of the positive electrode active material is -1.55 or less, optionally -1.82 or less, more optionally -1.88 or less, and further optionally -1.90 or less.

52. The positive electrode active material according to any one of claims 1-51, wherein a compaction density of the positive electrode active material at 3 T is 1.89 g/cm³ or more, optionally 1.95 g/cm³ or more, more optionally 1.98 g/cm³ or more, further optionally 2.0 g/cm³ or more, further more optionally 2.2 g/cm³ or more, and still further more optionally 2.2 g/cm³ or more and 2.8 g/cm³ or less.

53. A preparation method for a positive electrode active material, comprising the following steps: grinding and mixing a source of element A, a source of element X, optionally a source of element C, optionally a source of element D, and optionally a source of element Y to obtain a precursor, wherein the element A comprises element V; and sintering the precursor to obtain an inner core, wherein the inner core comprises a core and a first region formed on at least a part of a surface of the core, the first region comprises the element V and a mass concentration of the element V in the first region is denoted as W₁, the core comprises the element V and a mass concentration of the element V in the core is denoted as w₂, and W₁ > W₂.

54. The preparation method according to claim 53, wherein
the inner core comprises a substance represented by formula 1:
A_{y}(X_{1-z1}C_{z1}O_{4-z2}D_{z2})ₘYₙ, formula 1,
wherein
A, X, C, D, Y, y, z1, z2, m, and n are as defined in any one of claims 1-52;
the element V in the first region is present in at least one form selected from:
(1) a V elementary substance;
(2) an oxide of the element V, optionally comprising one or more selected from VO, V₂O₃, VO₂, and V₂O₅;
(3) a compound containing the element V and element Li, optionally comprising one or more selected from LiVO₃ and LiVO₂;
(4) a compound containing the element V and element X, optionally comprising one or more selected from VOPO₄ and VOSO₄, X comprising one selected from S, P, and Si;
(5) a compound containing the element V, element Li, and element X, optionally comprising one or more selected from Li₃V₂(PO₄)₃, LiVOPO₄, and Li₂VOSiO₄, X comprising one selected from S, P, and Si.

55. The preparation method according to claim 53 or 54, wherein
the grinding in the step of obtaining the precursor is performed at 10-800 r/min for 0.5-15 h, optionally 2-14 h; and/or
sintering the precursor is performed at 300-900 °C for 4-15 h in an inert gas atmosphere or a mixed atmosphere of an inert gas and hydrogen.

56. The preparation method according to any one of claims 53-55, further comprising the following step:
coating a surface of the inner core with a mixture of one or more selected from a pyrophosphate, a phosphate, carbon, doped carbon, an oxide, a boride, and a polymer by a dry coating method or a wet coating method to obtain a positive electrode active material, wherein the positive electrode active material comprises the inner core and a shell coating the inner core, the shell comprises one or more coating layers, and each coating layer independently comprises one or more selected from the pyrophosphate, the phosphate, the carbon, the doped carbon, the oxide, the boride, and the polymer.

57. The preparation method according to claim 56, further comprising the following steps:
providing a pyrophosphate M¹_{b}(P₂O₇)_{c} powder and a suspension containing phosphate M²ₚ(PO₄)_{q} and/or oxide M³_{d}Oₑ, wherein the suspension further comprises a source of carbon and/or a source of doped carbon; and
adding the inner core and the pyrophosphate M¹_{b}(P₂O₇)_{c} powder to the suspension, mixing, and sintering to obtain a positive electrode active material, wherein
the positive electrode active material comprises the inner core and a shell coating the inner core, the shell comprises a first coating layer coating the inner core and a second coating layer coating the first coating layer, the first coating layer comprises the pyrophosphate M¹_{b}(P₂O₇)_{c} and one or more selected from the phosphate M²ₚ(PO₄)_{q} and the oxide M³_{d}Oₑ, and the second coating layer comprises one or more selected from the carbon and the doped carbon; optionally, a doping element in the doped carbon comprises one or more selected from nitrogen, phosphorus, sulfur, boron, and fluorine, and M¹, M², M³, b, c, d, e, p, and q are as defined in any one of claims 20-21.

58. The preparation method according to claim 56, further comprising the following steps:
providing a pyrophosphate M⁴P₂O₇powder and a phosphate M⁵PO₄ suspension containing a source of carbon; and
adding the inner core and the pyrophosphate M⁴P₂O₇ powder to the M⁵PO₄ suspension containing the source of carbon, mixing, and sintering to obtain a positive electrode active material, wherein
the positive electrode active material comprises the inner core and a shell coating the inner core, the shell comprises a first coating layer coating the inner core and a second coating layer coating the first coating layer, the first coating layer comprises the pyrophosphate M⁴P₂O₇ and the phosphate M⁵PO₄, the second coating layer comprises the carbon, and M⁴ and M⁵ are as defined in claim 22.

59. The preparation method according to claim 56, further comprising the following steps:
separately providing a pyrophosphate M¹_{b}(P₂O₇)_{c} suspension, a suspension containing one or more selected from phosphate M²ₚ(PO₄)_{q}, oxide M³_{d}Oₑ, and boride ZᵥBₜ, and a suspension containing a source of carbon and/or a source of doped carbon; and
mixing the inner core with all the suspensions described above, and sintering to obtain a positive electrode active material, wherein
the positive electrode active material comprises the inner core and a shell coating the inner core, the shell comprises a first coating layer coating the inner core, a second coating layer coating the first coating layer, and a third coating layer coating the second coating layer, the first coating layer comprises the pyrophosphate M¹_{b}(P₂O₇)_{c}, the second coating layer comprises one or more selected from the phosphate M²ₚ(PO₄)_{q}, the oxide M³_{d}Oₑ, and the boride ZᵥBₜ, the third coating layer is selected from one or more of the carbon and the doped carbon, and M¹, M², M³, Z, b, c, d, e, p, q, v, and t are as defined in claims 20-21.

60. The preparation method according to claim 56, further comprising the following steps:
separately providing Li_{f}QP₂O₇ and/or Q_{g}(P₂O₇)ₕ and M⁵PO₄ suspensions, adding the inner core to the suspensions described above, mixing, and sintering to obtain a positive electrode active material, wherein
the positive electrode active material comprises the inner core and a shell coating the inner core, the shell comprises a first coating layer coating the inner core, a second coating layer coating the first coating layer, and a third coating layer coating the second coating layer, the first coating layer comprises the pyrophosphate Li_{f}QP₂O₇ and/or Q_{g}(P₂O₇)ₕ, the second coating layer comprises the phosphate M⁵PO₄, the third coating layer comprises carbon, and Q, M³, f, g, and h are as defined in claim 23.

61. The preparation method according to claim 56, further comprising the following steps:
separately providing a pyrophosphate M¹₃(P₂O₇)_{c} powder, one or more powders selected from phosphate M²ₚ(PO₄)_{q}, oxide M³_{d}Oₑ, and boride ZᵥBₜ, and a powder of a source of carbon and/or a powder of a source of doped carbon; and
mixing and grinding the inner core and all the powders described above, and drying to obtain a positive electrode active material, wherein
the positive electrode active material comprises the inner core and a shell coating the inner core,
the shell comprises a first coating layer coating the inner core, a second coating layer coating the first coating layer, and a third coating layer coating the second coating layer, the first coating layer comprises the pyrophosphate M¹_{b}(P₂O₇)_{c}, the second coating layer comprises one or more selected from the phosphate M²ₚ(PO₄)_{q}, the oxide M³_{d}Oₑ, and the boride ZᵥBₜ, the third coating layer is selected from one or more of the carbon and the doped carbon, and M¹, M², M³, Z, b, c, d, e, p, q, v, and t are as defined in claims 20-21;
optionally, the drying is performed by a spray granulation dryer.

62. The preparation method according to any one of claims 56-61, further comprising the following steps:
providing a polymer, wherein the polymer comprises one or more selected from a polysiloxane, a polysaccharide, and a polysaccharide derivative; and
coating the positive electrode active material prepared according to any one of claims 56-61 with the polymer by a dry coating method or a wet coating method to obtain a material comprising the inner core and a shell coating the inner core, wherein
one or more coating layers in the shell that are most distal to the inner core each independently comprise one or more selected from the polysiloxane, the polysaccharide, and the polysaccharide derivative.

63. A battery, comprising a positive electrode plate, wherein the positive electrode plate comprises a positive electrode current collector and a positive electrode film layer disposed on at least one surface of the positive electrode current collector; the positive electrode film layer comprises a first positive electrode active material, and the first positive electrode active material comprises the positive electrode active material according to any one of claims 1-52 or a positive electrode active material prepared by the preparation method according to any one of claims 53-62;
optionally, a content of the first positive electrode active material in the positive electrode film layer is 10 wt% or more, and optionally 90 wt% to 99.5 wt%, based on a total weight of the positive electrode film layer.

64. The battery according to claim 63, wherein the positive electrode film layer further comprises a second positive electrode active material, and the second positive electrode active material is different from the first positive electrode active material.

65. The battery according to claim 64, wherein the second positive electrode active material comprises one or more selected from LiEᵣCoₛF₍₁₋ᵣ₋ₛ₎O₂, spinel-type lithium manganate, and spinel-type lithium titanate, wherein E comprises one or more elements selected from Group VIII, F comprises one or more elements selected from Group IIIA and Group VIIB, r is selected from a range of 0-0.9, and a sum of r and s is selected from a range of 0.3-1.

66. The battery according to claim 65, wherein E comprises one or more elements selected from Ni, Fe, Ru, and Rh, and F comprises one or more elements selected from Mn, Al, Ga, and In.

67. The battery according to any one of claims 64-66, wherein
the second positive electrode active material comprises one or more selected from LiNiᵣCoₛMn₍₁₋ᵣ₋ₛ₎O₂, LiNiᵣCoₛAl₍₁₋ᵣ₋ₛ₎O₂, LiCoO₂, spinel-type lithium manganate, and spinel-type lithium titanate, wherein r is independently selected from 0.3-0.9, and optionally 0.33-0.8, and a sum of r and s is independently selected from 0.3-0.9, and optionally 0.66-0.9.

68. The battery according to any one of claims 64-67, wherein a mass ratio of the first active material to the second active material is 1:7 to 7:1, and optionally 1:4 to 4:1.

69. The battery according to claim 67 or 68, wherein in the second positive electrode active material,
a ratio of r to (1-r-s) to s in the LiNiᵣCoₛMn₍₁₋ᵣ₋ₛ₎O₂ is 5:2:3, or 3:1:1, or 8:1:1; and/or
a ratio of r to s to (1-r-s) in the LiNi_{f}CoₛAl₍₁₋ᵣ₋ₛ)O₂ is 5:2:3, or 3:1:1, or 8:1:1.

70. The battery according to any one of claims 64-69, wherein a sum of a mass of the first positive electrode active material and a mass of the second positive electrode active material accounts for 88%-98.7% of a mass of the positive electrode plate.

71. An electric device, comprising the battery according to any one of claims 63-70.
